(19)

Europäisches
Patentamt

European
Patent Office

Office européen
des brevets

(11) **EP 3 841 514 B1**

## (12) EUROPEAN PATENT SPECIFICATION

(45) Date of publication and mention
of the grant of the patent:
**26.07.2023   Bulletin 2023/30**

(21) Application number: **18758608.6**

(22) Date of filing: **21.08.2018**

(51) International Patent Classification (IPC):
***G06K 7/10*** *(2006.01)*

(52) Cooperative Patent Classification (CPC):
**G06K 7/10128**

(86) International application number:
**PCT/EP2018/072581**

(87) International publication number:
**WO 2020/038568 (27.02.2020 Gazette 2020/09)**

(54) **RFID READER AND METHOD FOR READING OUT RFID TAGS**

RFID-LESEGERÄT UND VERFAHREN ZUM LESEN VON RFID-ETIKETTEN

LECTEUR RFID ET PROCÉDÉ DE LECTURE D'ÉTIQUETTES RFID

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.06.2021   Bulletin 2021/26**

(73) Proprietor: **Fraunhofer-Gesellschaft zur
Förderung
der angewandten Forschung e.V.
80686 München (DE)**

(72) Inventors:
• **KORN, Clemens
97237 Altertheim (DE)**

• **ROBERT, Jörg
91080 Uttenreuth (DE)**

(74) Representative: **Pfitzner, Hannes et al
Schoppe, Zimmermann, Stöckeler
Zinkler, Schenk & Partner mbB
Patentanwälte
Radlkoferstraße 2
81373 München (DE)**

(56) References cited:
**EP-A1- 3 035 072        EP-A2- 0 853 245
WO-A2-2008/030357    US-A1- 2009 303 004
US-A1- 2009 303 005**

**EP 3 841 514 B1**

**Description**

Embodiments of the present application refer to an RFID reader and to a method for reading out RFID tags. A further embodiment refers to a system comprising the RFID reader and an RFID tag and to a system comprising the RFID reader and a vehicle or convoy carrying an object, e.g., an object comprising an RFID tag. Further (more general) embodiments refer a motion detector for determining a motion or velocity of an object using a Doppler shift and to a corresponding method.

RFID is a technology that enables identification, location and tracking of goods along warehouses, production lines and much more. Therefor, objects are equipped with an RFID tag which is then read out by an RFID reader in order to identify the tagged object. A typical example for the usage of an RFID reader to identify an object is a logistic center using a conveyer belt.

In logistic centers and production lines RFID is often used to register goods that are moving along a conveyor belt. In order to achieve this, an RFID reader is placed next to the conveyor belt. It identifies the goods by reading out RFID tags that are attached to the goods. However, the reader does not know whether the good really is on the conveyor belt. The reader just reads out every tag in its reading range and considers it as located on the conveyor belt. Thus, it is possible that other items with attached RFID tags are inside the reader's read range. This can happen if some items are placed next to the conveyor belt. Another example is a person that walks past the reader while carrying an item with attached RFID tag. These cases will lead to booking errors in the database. It can even produce ping-pong effects where items are consistently booked in and out in the database as long as they are located in the reader's reading range.

Another example is a forklift truck at entrance gates. The same problem applies to entrance gates in logistic centers where forklift trucks with loaded goods pass an entrance gate. In this scenario, an RFID reader is installed at the gate in order to identify the goods that are carried through the gate by the forklift truck. Here, the same booking errors and ping-pong effects can occur if items are placed next to the gate or if a forklift truck passes by the gate without entering it.

One still unsolved problem is the reliable discrimination between different tag populations in order to avoid false tag reads. In traditional RFID systems, the reader reads and inventories every responding tag inside the reader's reading range. However, in many scenarios it is required to only inventory a certain part of the tags inside the reader's reading range or to inventory all the tags and discriminate between certain tag populations.

Below, conventional approaches for the above-discussed problem will be discussed.

Some patent applications and patents form prior art. For example, WO 2008/030357 describes a system for a radio frequency identification reader. The patent application US 2009/303004 A1 describes a system and a method for determining motion parameters of a RFID tag. The EP 0853245 A1 describes a modulated back scattered sensor system. Additionally, the document US 2009/303005 is mentioned.

The standard approach to get rid of false tag reads is to physically narrow the reader's reading range. For the examples mentioned below, this is often done using shielding plates or directional antennas.

This has the following disadvantages:

- Due to multipath propagation and reflections, it is impossible to guarantee that there is no position outside the intended reading range where tags are still read.
- The installation of such a system is always cumbersome.
- Even very small physical changes in the surrounding area of the reader can require an adaptation of the system. This requires a technician to recalibrate the system every time too much in the surrounding area has changed and produces downtime.

Another very straightforward approach for avoiding false tag reads is to simply install two distinct reading points. In the example of the conveyor belt, two RFID reading points could be installed along the conveyor belt. Then, the system could avoid false tag reads by only considering tags that have been read at both reading points while neglecting those tags that have been read at only one of the two reading points.

This has the following disadvantages:

- Two reading points mean additional expenses for both setting up and operating the system. Two readers are needed, as well as twice as many antennas and added power consumption.
- In most cases there is not enough space to install two distinct reading points (e.g. along conveyor belts in production lines or at entrance gates of logistic centers).
- Two RFID readers placed directly next to each other interfere with each other if they are not synchronized.
- In this case, sorting out false tag reads is done in a higher-level system above the reader. It would be more convenient for the operator if the sorting out of tag reads is implemented directly at the reader.

Another approach for realizing a throughput detection is estimating the angle of the currently responding tag. Then, the movement of the tag can be tracked by tracking the angles under which it responded. For example, if a tag is read out once left of the reader's antenna, then in front of the reader's antenna and one more time at the right side of the reader's antenna, it is clear that the tag passed the reader's antenna from left to right.

This has the following disadvantages:

- A reliable estimation of the tag's angle is very difficult due to multipath propagation and fading.
- Another disadvantage is that this approach always requires multiple tag reads in order to track the tag's angle. In order to detect the passage of a tag it is read at least two times at two distinct positions (e.g. once left of the reader's antenna and once right of the reader's antenna after the tag passed the antenna). Therefore, a system based on angle estimation will not be able to handle big tag populations.
- The angle estimation requires special multibeam antennas which are more expensive than conventional RFID antennas.

Further, realizing a throughput detection has also been approached using phase measurements where the phase of a tag response is measured each time the tag is read out. The change of the phase between the different readouts of the tag is then used in order to determine whether the tag moved or not.

Disadvantages:

- The big problem of such systems is that the phase is strongly affected by multipath propagation.
- The number of tag readouts that are necessary for a phase based movement detection is very large. This has two reasons:

  (a) Movement can only be detected from the difference of the measured phases of the tag from different readouts of the same tag.
  (b) Algorithms that counteract the effect of multipath propagation additionally require more readouts of the tag.

For example, Buffi et al. invented a system that is based on phase estimation [1]. Here, the movement of tags along a conveyor belt with 1 m/s can be detected with 99.9 % reliability for a interrogator repetition time of 50 ms when continually reading out the tag for 5s With this technique, it is possible to detect the movement of tags for small numbers of tags in the reader's reading range but not for big tag populations.

However, all state-of-the-art approaches do not enable to reliably discriminate between moving tags and stationary tags while reading out a plurality of tags. Therefore, there is a need for an improved approach.

It is an objective of the present invention to provide a concept for monitoring moving objects in order to reliably discriminate between moving and stationary objects, especially during the reading out of RFID tags.

This problem is solved by the subject-matter of the independent claims.

An embodiment according to a first aspect provides an RFID reader according to claim 1 and comprising a transmitter, a receiver and a processor. The transmitter is configured to provide a frequency signal for one or more RFID tags. The receiver is configured to receive a response signal resulting from a reflection of the frequency signal on at least one of the RFID tags or on an object carrying the at least one of the RFID tags. It should be noted, that for example, this response signal may be modulated by the one of the RFID tags so as to enable to read out same. The processor is configured to evaluate the response signal (e.g., for reading out) and comprises a motion determiner. The motion determiner is configured to detect a Doppler shift within the response signal and to determine a motion parameter, like a velocity (or a position at a certain point of time, a direction of the motion or the point of time of a passing) of the at least one tag or the object based on a characteristic of the detected Doppler shift (e.g. a characteristic curve of the Doppler shift plotted over the time).

Embodiments of the present invention are based on the finding that a frequency signal, which is typically used to read out one or more RFID tags is modified due to the motion, so that an analysis of Doppler shift within the response signal (resulting from a reflection of the frequency signal on the one or more RFID tags of an object carrying the one or more RFID tags) would enable to determine and characterize a motion of the tag or object (using motion parameter, e.g. a velocity). According to embodiments, the motion can be detected so as to estimate the speed of the tag by its tag reply, so as to estimate the speed of the object by the object's reflection of the reader's carrier signal or so as to estimate a distance with which objects pass the reader's antenna. Furthermore, it can be detected whether an object passed through a reading gate or not and to enable the reading out, such that only inventory tags of interests that are moving with a certain speed are read out, while neglecting stationary tags. It should be noted, that this gathering information about the movement of the tags can be performed while inventorying all the tags. An advantage of this concept is that the Doppler estimation can be performed with high precision since the reader itself provides the frequency signal. The teachings disclosed herein can be applied in many other scenarios, where more information about what happened inside the reader's reading range may be used in order to correctly interpret tag reads.

Since the usage of different operation modes for the RFID tags may have an influence on the response signal, the tags may, according to embodiments, be operated within different reading out modes in order to optimize the determination of the motion parameter / velocity. The different reading out modes are activated by the frequency signal. Therefore, an embodiment provides a transmitted which is configured to provide the frequency signal in a manner so as to use different reading out modes, wherein the processor is configured to control the transmit to adapt the reading out modes dependent on the determined motion parameter and/or velocity. For example, the frequency signal is adapted with regard to their back-scatter link frequency (i.e. the data-rate of the tag response), for example, by varying the frequency of the frequency signal. Here, the processor may reduce the back scattered link frequency in order to improve the reliability of the determination of the motion parameter / velocity and to increase the back scattered link frequency in order to increase the number of tags to be read out. According to another example, a modulation type (EPC-Global Standard 4 enables different modulation types FM0, Miller-2, Miller-4, Miller-8) which may an influence on the duration of the modulation. The selection of the modulation type is based on the tradeoff between reliability and a number of tags, since a "longer" modulation increases the reliability, while reducing the tag read rate. According to further embodiments, the transmitted and the receiver preform the reading out multiple times for the one RFID tag. Here, the transmitter performs the providing of the frequency signal multiple times for the RFID tag and the receiver receives the response signal multiple times from the one RFID tag in order to increase a time frame for reading out. According to another embodiment, the transmitted is configured to provide the frequency signal multiple times for multiple RFID tags in a first series, wherein the receiver is configured to receive the response signals from the multiple RFID tags in the first series so as to read out multiple RFID tags. This reading out of the multiple RFID tags is repeated in a second series with a pause of adaptable length in between so as to increase the entire time frame for reading out the RFID tags.

According to embodiments, the processor is configured to assign a plurality of RFID tags to a group of RFID tags having the same velocity or a predetermined velocity. For example, the predetermined velocity may be delivered by an external velocity sensor using an interface of the RFID reader. This external velocity sensor may be a sensor of the convoy. This assigning has the advantage that just the moving RFID tags, e.g., the RFID tags on the convoy may be read out. The assigning has the advantage that just the RFID tags which are moving, e.g., moving on the convoy can be read out, while stationary tags moving in a different direction are ignored.

According to embodiments, the processor is configured to determine a direction, a position, and/or point of time of the passing and/or a distance of the at least one RFID tag to be read out. The determination of position and/or direction enables to determine a passing of the RFID tags.

According to embodiments, the processor is configured to determine the distance in which the RFID tag/object passes. Here, the Doppler curve (Doppler shift over the time) is evaluated. Dependent on, for example, the change of the Doppler shift over the time enables a good estimation of the distance, typically, a high distance results in a flat slope of the Doppler shift change, while a short distance results in a steep slope.

According to an embodiment, one or two antennas can be used to determine a movement direction. Here, the RSSI is analyzed to determine the direction. For example, an increasing RSSI over the time indicates a movement to the one antenna, while a decreasing of the RSSI indicates a movement away from the antenna. By use of two or more antennas, the movement direction can be enhanced into the 2D or 3D space. According to an alternative variant, the point of time of the Doppler shift can be used to determine the movement direction. Preferably two or more antennas are used to determine whether the object passed the antennas in a parallel or a perpendicular manner.

Due to the determination of the direction and/or the position a passing of an object can be determined, e.g., together with its point of time.

All this information passing, exact point of time of the passing, position, distance, and/or direction are to be understood as motion parameters.

It is to note that the Doppler shift estimation is very precise due to the fact that the signal is generated and sampled using the same oscillator. The RFID reader generates and transmits a carrier signal that is reflected and modulated by the tags and then received by the same reader with the same oscillator. As a result, no phase noise occurs in the received signal, which usually occurs in radio systems because of not perfectly synchronous running oscillators at transmitter and receiver. It is also worth noting that discriminating between tag populations with very small speed differences between the tag populations require a very precise Doppler shift estimation while the required precision of the Doppler shift estimation can be lower if the speed difference between the tag populations is very big.

Furthermore, the motion determiner may be configured to differentiate a response signal of an RFID tag from a response signal of an object due to a modulation of the response signal. This enables to suppress interferences, e.g., from other objects. Furthermore, the processor may be configured to suppress interferences caused by response signals which are not resulting from a reflection of the frequency signal on the one or more RFID tags to a predetermined point of time of the measurement, i.e., to ignore signals resulting from other RFID tags or resulting from a reflection of the frequency signal of a prior measurement.

The above-described principle of adapting the frequency signal so as to use different reading out modes may be based on an estimation of the precision of the determination of the motion parameter / velocity. Therefore, the processor may, according to embodiments, be configured to calculate an estimation precision of determination of the motion parameter and/or velocity for distinguishing between static and moving RFID tags. This precision estimation may be based on an information about the determined Doppler shift, a tolerable error rate, a threshold for a velocity above which a RFID tag and/or object is classified as moving, an expected velocity of the RFID tags and a carrier frequency. For example, the calculation of the estimation precision is performed based on

$$\sigma^2 = \frac{(x-\mu)^2}{8(erfinv(2P_{err}-1))^2} = \frac{f_d^2}{2(erfinv(2P_{err}-1))^2} = \frac{2v^2 f_c^2}{c^2(erfinv(2P_{err}-1))^2}$$

with $P_{err} = 0.5\left(1 + erf\left(\frac{x-\mu}{\sqrt{2\sigma^2}}\right)\right)$, where erf(x) denotes the error function, x is the decision threshold, $f_D$ the Doppler shift and $\sigma^2$ the variance of the considered random variable, v an expected velocity of the RFID tags or of the object and $f_c$ the carrier frequency.

Since a plurality of processor features have been discussed, features of the transmitter or in general of the RFID reader will be discussed below:

The receiver of the RFID reader may comprise the plurality of antennas, wherein the processor is configured to determine a direction of the moving RFID tags or of the moving objects by use of the response signal received via the plurality of antennas. Due to this approach, the direction of the moving object/tag can be determined. According to embodiments, the RFID reader comprises active and passive antennas. The active antenna is typically coupled to the transmitter and the receiver, while a passive antenna is typically just coupled to the receiver. Here, the passive antenna may preferably be used for determining the Doppler shift.

The above-discussed determination of the Doppler effect may be used to activate the RFID reader from a standby/hibernation mode. Here, the receiver provides the frequency signal within a certain time interval (i.e., not continuously). The processor is configured to enable the readout mode when it detects a motion of the at least RFID tag or the object based on the Doppler shift using the hibernation mode.

According to another aspect, the motion parameter / velocity detection can be used independent from the RFID reading. Therefore, an embodiment provides a motion detector according to claim 17 and comprising a transmitter, a receiver and a processor. The motion detector is configured to provide a frequency signal to one or more objects. The receiver is configured to receive a response signal resulting from reflection of the frequency signal on the one or more objects. The processor is configured to evaluate the response signal, wherein the processor comprises a motion determiner configured to detect a Doppler shift within the response signal and to determine a motion parameter and/velocity of the one or more objects based on the Doppler shift.

Regarding the RFID reader (aspect 1) it should be noted that a further embodiment provides a method according to claim 15 for reading out RFID tags.

According to an embodiment, the methods may comprise the step of adapting the frequency signal based on the detected motion parameter and/or velocity. Here, the frequency of the frequency signal or the readout mode of the tags may be varied.

The methods may be performed using a computer. Thus, another embodiment provides the computer program having a program for performing, when running on a computer, the method or at least one method step of the above-described methods.

Coming back to the aspect of the RFID reader, it should be noted that another embodiment provides a system comprising the RFID reader and an RFID tag. Since according to one embodiment, the RFID reader uses an external velocity sensor, another embodiment refers to a system comprising the RFID reader and a vehicle or convoy carrying the object, wherein the vehicle or convoy comprises the external velocity sensor to provide the predetermined velocity.

Embodiments of the present invention will subsequently be discussed referring to the enclosed figures, wherein

Fig. 1a    shows a schematic block diagram of a system comprising a RFID reader, and a RFID tag according to an embodiment;

Fig. 1b    shows a schematic block diagram of an RFID reader according to a further embodiment;

Fig. 1c    different blocks of the movement detection according to embodiments;

Fig. 2      Probability density functions of the estimated Doppler shifts for two tags: One stationary tag (Doppler shift [0]Hz, shown by the left curve) and one that is moving with a Doppler shift of [6]Hz (corresponds to a tag velocity of [1]ms at a carrier frequency of [900]MHz, shown by the right curve) for illustrating embodiments;

Fig. 3      Timing of the tag replies (continious lines) and reader commands (dashed line) for the Multiple EPC strategy for L=3 for illustrating embodiments;

Fig. 4      Cramer-Rao lower bound for multiple EPC readouts as a function of the number of EPC readouts L for

$$\frac{P_S}{N_0} = [40.65]dB - \text{Hz}$$

for illustrating embodiments;

Fig. 5      Link timing of the reading strategy Multiple Readout Select for illustrating embodiments: First, an inventory round is set up that identifies all the tags in the reader's reading range. Then, each tag is read out again in an own inventory round using the Select command. This is done twice for each tag with time difference $\Delta t$.

Fig. 6      Simulated receive signal during a tag reply for illustrating embodiments. The curves marked by 6r and 6t show the part of signal that is caused by reflections from all the reflecting objects without the tag. The curves marked by 6b and 6g show the total received signal with tag reply;

Fig. 7      the total received signal from Fig. 6 again. Here, the dashed lines marked by 7o show how the received signal can be separated in parts that always consist of a "one" and a "zero";

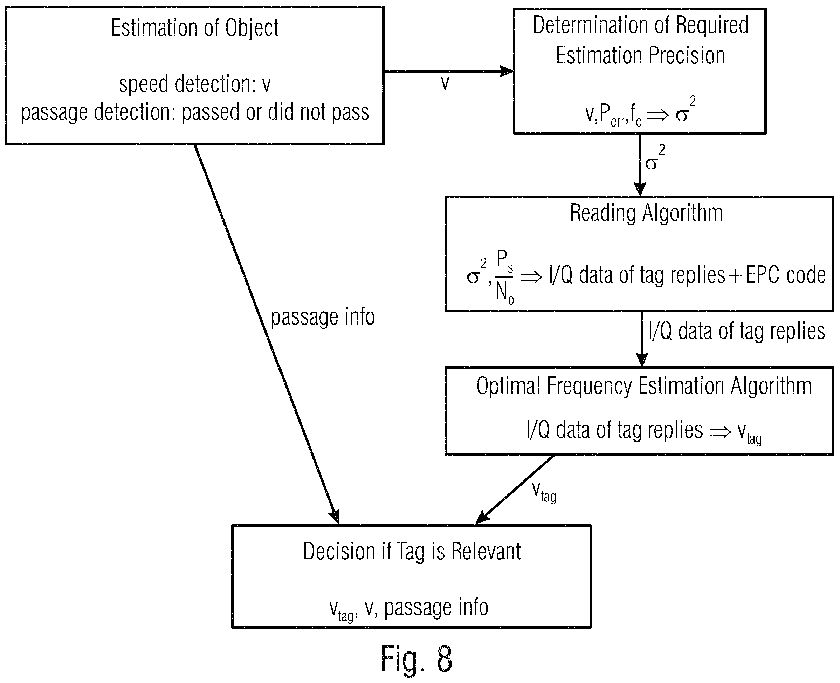

Fig. 8      Flow diagram of the movement detection with passage detection according to an embodiment;

Fig. 9      the geometric assumptions that have been met for deriving the ML estimator for the estimation of the distance with which an object passed the reader antenna according for illustrating an embodiment. It is assumed that the object moves parallel to the x axis. At time t = 0, it is located at position ($x = -x_0, y = y_0$). The distance between reader antenna and object is given by d.

Fig. 10      Doppler shift curves that are experienced if a punctiform object moves as specified in Fig. 9 with different starting points. It is assumed that is moves with v = [3]ms.

Fig. 11      Possible setup for an RSSI-based direction estimation according to an embodiment;

Fig. 12      Possible curve of the expected RSSI from the setup of Fig. 11 for both antennas;

Fig. 13      Possible setup for a Doppler-based movement estimation with two antennas according to an embodiment; This figure also shows four possible movement directions of the tag or object;

Fig. 14      Expected Doppler shift curves for Direction 1;

Fig. 15      Expected Doppler shift curves for Direction 2;

Fig. 16      Expected Doppler shift curves for Directions 3 and 4;

Fig. 17a-d      Geometry and Doppler shift curves for four antennas and an object moving into Direction 1. Plot 1) shows the geometric positions of antennas and object plus the movement direction. Plot 2) shows the Doppler shift curves from all four antennas. Plot3) shows the sum of the Doppler shifts from all antennas. Plot 4) shows $f_x = f_{D2} + f_{D4} - f_{D1} - f_{D3}$ (17b curve in Fig. 17d, "x-direction") and $f_y = f_{D1} + f_{D2} - f_{D3} - f_{D4}$ (17o curve in Fig. 17d, "y-direction"), where $f_{Di}$ is the Doppler shift at the $i$th antenna;

Fig. 18a-d      Geometry and Doppler shift curves for four antennas and an object moving into Direction 2;

Fig. 19 a-d      Geometry and Doppler shift curves for four antennas and an object moving into Direction 3;

Fig. 20 a-d      Geometry and Doppler shift curves for four antennas and an object moving into Direction 4;

Fig. 21　the movement of the tag in the conveyor belt scenario with Antenna Arrangement 1. The tag moves along the conveyor belt with the conveyor belt's speed. It virtually drives through the reader antenna which is placed in the middle of the conveyor belt;

Fig. 22　Antenna Arrangement 2 for the conveyor belt scenario. The tag again moves along the conveyor belt with the conveyor belt's speed. In Antenna Arrangement 2, the reader antenna is placed above the conveyor belt with height *h*;

Fig. 23　Distance between tag and reader antenna in both antenna arrangements as a function of the tag's position on the conveyor belt;

Fig. 24　Velocity of the tag relative to the reader antenna for a conveyor belt speed of [1]ms for both antenna arrangements as a function of the tag's position on the conveyor belt;

Fig. 25　Difference of the relative velocity between Antenna Arrangement 1 and Antenna Arrangement 2 as a function of the tag's position on the conveyor belt;

Fig. 26　the assumed locations of the tags during its readout. The tag's location is modeled as equally distributed between position [-10]m and [-0.5]m. The region in which it is distributed is therefor shown by the line 26b in this figure;

Fig. 27　Simulated PDF of the $\frac{P_S}{N_0}$ of received tag replies in the conveyor belt scenario;

Fig. 28　Optimal BLF as a function of the conveyor belt's velocity for $\frac{P_S}{N_0} = [40.65]dB - \text{Hz}$ and DR = 8. The lower boarder at [40]*kHz* is the smallest BLF that is allowed according to the EPCglobal standard [8]. The optimal BLF increases with increasing v for each encoding;

Fig. 29　the achievable reading rate as a function of the BLF. It increases with increasing BLF for every encoding;

Fig. 30　the achievable reading rate of Optimized BLF for different encodings for $\frac{P_S}{N_0} = [40.65]dB - \text{Hz}$ . The reading rate increases with increasing v for every encoding and DR as the optimal BLF increases with increasing v. The reading rates, therefore, increase until they reach the point where the highest allowed *BLF* according tho the standard is reached. Then, the optimal BLF cannot be increased anymore which means that also the achievable reading rate cannot be increased any more;

Fig. 31　the same curves as Fig. 30, this time for a smaller range of *v*. It shows that the achievable reading rate is zero if v is too small. In these areas, the optimal BLF is smaller than the minimal allowed BLF according to the standard. In this case, reading the tags slowly enough for a reliable movement detection is not possible. The specification that allows the smallest v is Miller-8 encoding with *DR* = 8;

Fig. 32　Achievable reading rate with Optimized BLF for different $\frac{P_S}{N_0}$ . The achievable reading rate increases for higher chosen $\frac{P_S}{N_0}$ . In this figure, sometimes short intersections occur where the reading rate does not increase with v. They appear when the maximum allowed BLF for the actually chosen specification is reached (c.f. Fig. 30). The curve then starts to increase again as soon as another specification allows a higher reading rate;

Fig. 33　Optimal number of EPC readouts L over conveyor belt speed v for $\frac{P_S}{N_0} = [40.65]dB - \text{Hz}$ ;

Fig. 34　Tag reads per second with $\frac{P_S}{N_0} = [40.65]dB - \text{Hz}$ for optimized BLF and multiple EPC;

Fig. 35　Tag reads per second with $\frac{P_S}{N_0} = [40.65]dB - \text{Hz}$ for optimized BLF and multiple EPC;

Fig. 36　a histogram of the number of EPC readouts that has been generated in a simulation for v = [1]ms;

Fig. 37    the achievable reading rates for all proposed reading strategies. It shows that, in terms of achievable reading rate, Multiple EPC with individual treatment of each tag, Multiple Readout Select and the combination of both perform much better than Optimized BLF and Multiple EPC with equal treatment of each tag. It further shows that the achievable reading rate of Multiple Readout Select is the only one that does not increase with increased v. The highest reading rate is achieved with the combination of Multiple EPC and Multiple Readout Select;

Fig. 38    Illustration of the possible paths a forklift truck will take at the entrance gate. The dark grey area depicts the wall while the lighter grey area depicts the closer space next to the wall that the forklift truck is assumed to avoid in order to keep a certain distance to it. The arrows show possible paths the forklift truck will take when entering or leaving the gate (arrow 38b) or passing by the gate (arrow 38g);

Fig. 39    Doppler shifts for the forklift truck passing by the reader antenna with different distances with $v$ = [3]ms and $f_c$ = [900]MHz; and

Fig. 40, 41    Tag reply time definitions.

Below, embodiments of the present invention will subsequently be discussed referring to the figures. Here, identical reference numerals are provided to objects having identical or similar function.

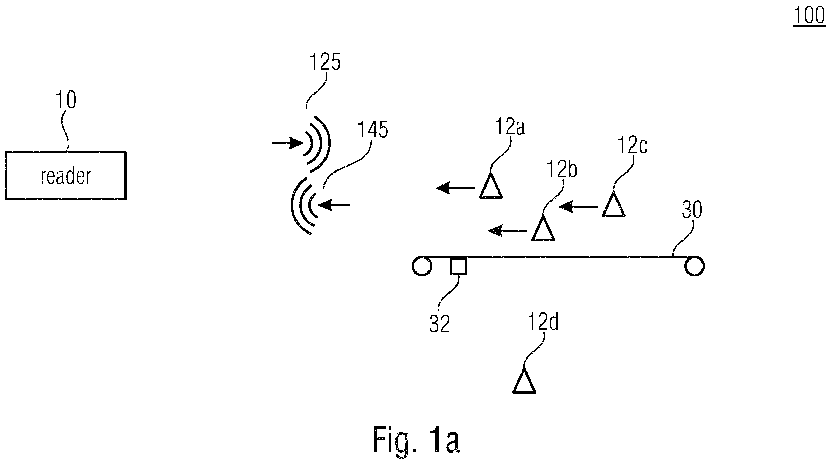

Fig. 1a shows a system 100 comprising a RFID reader 10 and one or more RFID tags 12a to 12d. The RFID tags 12a to 12c may be arranged on a convoy 30 which is configured to move the tags 12a to 12c, while the tag 12d is a stationary tag. For the sake of completeness, it should be noted that the tags 12a - 12d may be arranged or attached to an object (not shown) which is moved by the convoy 30. As a consequence of the movement all tags 12a to 12c have a motion in the same direction and the same velocity.

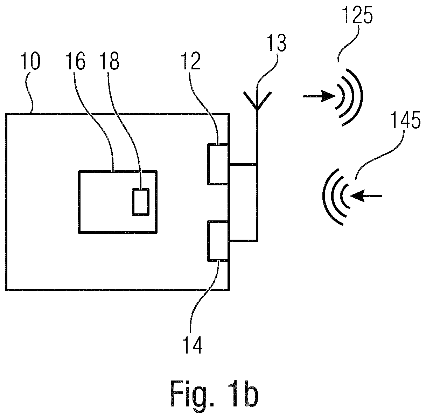

The reader 10 comprises as illustrated by Fig. 1b at least a transmitter 12, a receiver 14 and a processor 16. The transmitter 12 is configured to provide a frequency signal 12s, e.g., by means of the antenna 13. This signal 12s is reflected by the objects, e.g., the tags 12a to 12d as response signal 14s. For example, each tag 12a to 12d performs a modulation of the signal 12s so as to provide the response signal 14s. This modulation carries an information from the respective tag 12a to 12d to the reader 10. This signal 14s is received by the receiver 14, e.g., by means of the antenna 13. The response signal 14s is evaluated by the processor 16, e.g., in order to extract the information from the respective tag 12a to 12d.

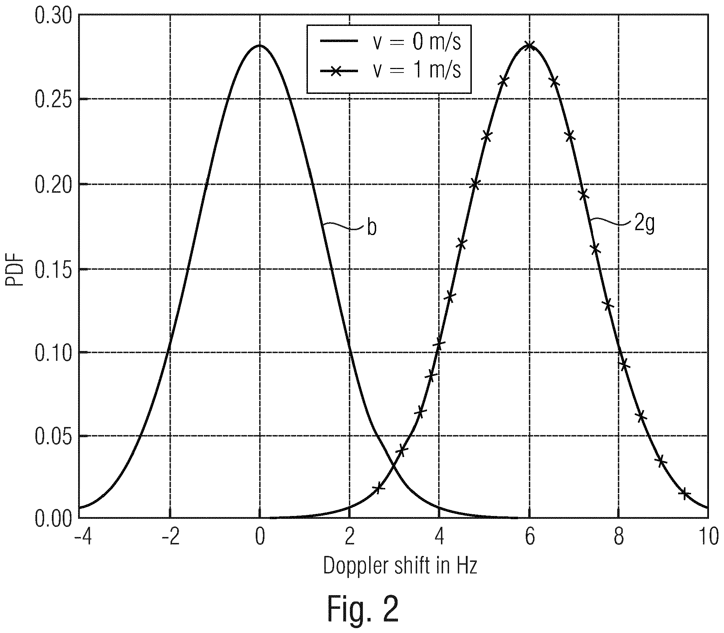

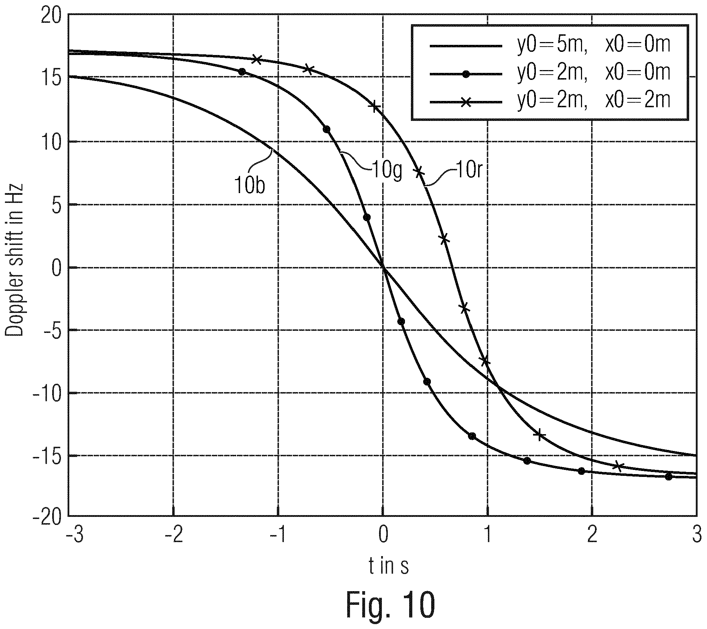

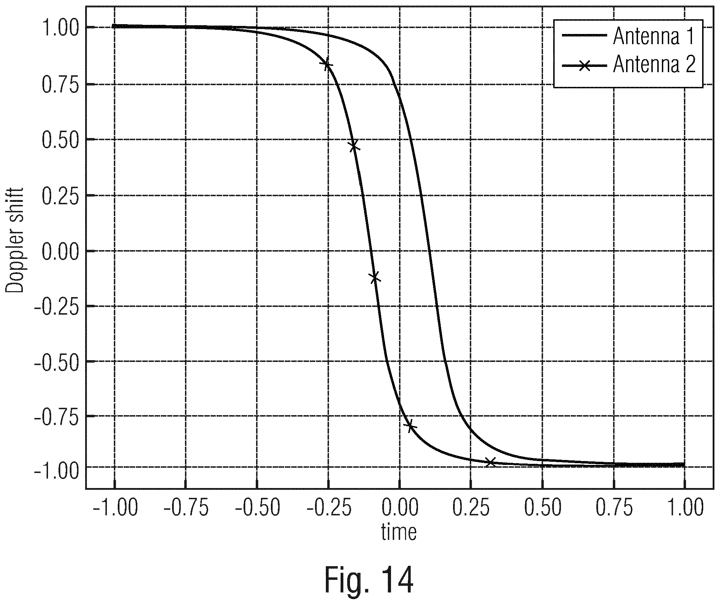

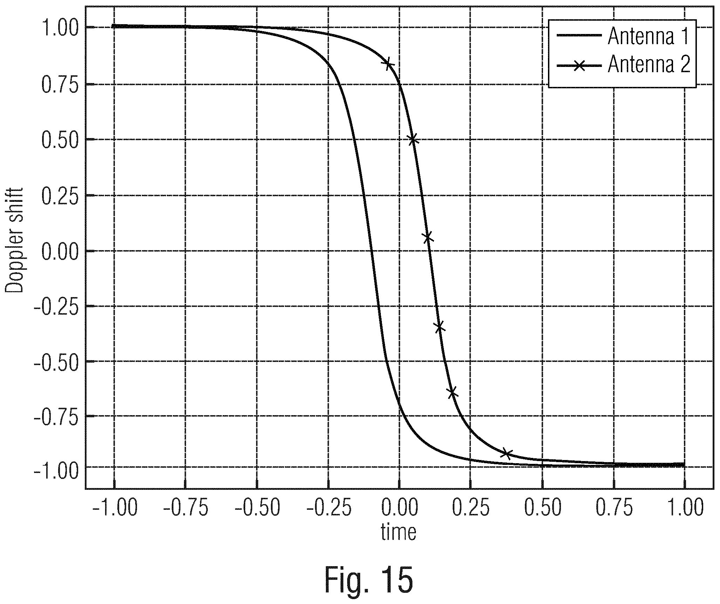

Due to the movement of the elements 12a to 12c, the response signal 14s is amended at additionally. This effect is known as Doppler effect resulting in a Doppler shift having a certain frequency as illustrated by Fig. 2. The frequency varies dependent on the motion of the 12a-12d /object. As illustrated by Fig. 2 and Fig. 10 the characteristic of the Doppler shift carries an information describing the motion, namely e.g. regarding the velocity (Fig. 2) or a distance within which the 12a-12d /object passes. Furthermore, the curve (characteristic) of the Doppler shift detected by using one or more antennas may be used to determine a direction of the motion (cf. Fig. 14 and 15). The information describing the motion is to be understood as motion parameter.

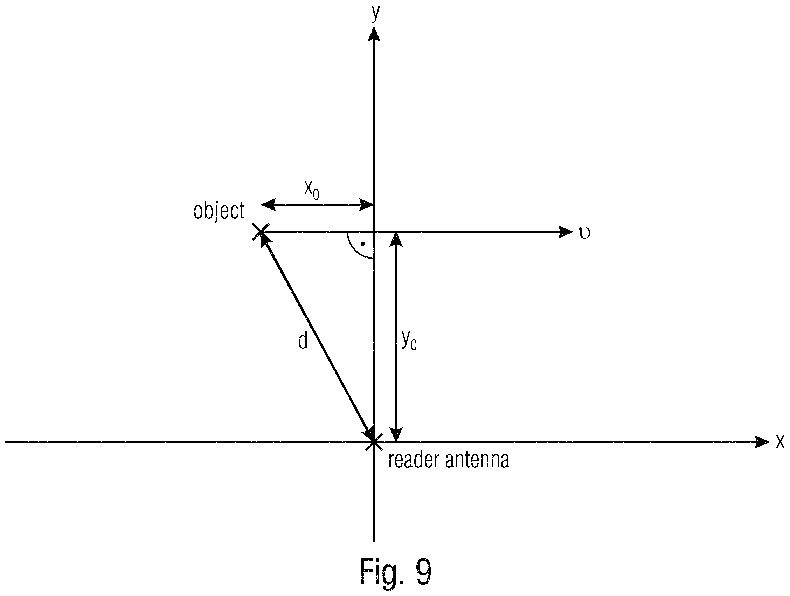

The characteristic of the Doppler shift within the response signal 14s can be determined by the processor 16 evaluating the response signal 14s. In detail, the evaluation regarding the motion is performed by a certain entity of the processor 16, namely the motion determiner 18 configured to gather an information regarding the movement of the tags 12a to 12d and output signal describing a motion parameter. For example, the determined motion parameter may be the velocity (value having unit like m/s) or the direction (value describing a direction relatively to the reader 10) of the moving tags 12a to 12c. According to general embodiments, the motion parameter should be understood as a parameter describing the motion in more detail (e.g., a direction or a point of time, when the respective element passes a (virtual) gate or a position in combination with a point of time). Different types of motion determinations will be discussed with respect to Fig. 9 and following.

Below, the detailed functionality of the motion determiner 18 will be discussed: The reader 10 continually transmits a strong carrier signal 12s that powers the tags 12a-12d. The tags 12a-12d then respond by reflecting the reader's carrier signal 14s back to the reader. If a tag 12a-12d is moving relative to the reader 10, then the received signal 14s experiences a Doppler shift depending on the tag's speed. The Doppler shift is given by

$$f_d = \frac{2v}{c} f_c. \qquad (1)$$

Here, v denotes the speed of the tag (relative to the reader antenna), c denotes the speed of light, and $f_c$ denotes the carrier frequency of the reader's carrier.

Using the Doppler shift means measuring the carrier frequency of the received tag signal. The frequency is the change of the phase and measuring the Doppler shift is therefore based on measuring the phase. Utilizing the Doppler shift for the movement detection instead of realizing a movement detection directly based on phase measurements results in loosing information about the received signal. However, it has one big advantage due to the multipath propagation of the tag's signal. The highest Doppler shift is always experienced by the direct path. This allows the realization of a movement detection that is robust against multipath propagation without requiring any additional tag reads or additional antennas for tackling the effect of multipath propagation.

According to an embodiment, the motion parameter and/or the velocity is used to adapt the reading out performed by the RFID reader 10. Here, the processor 16 performs the evaluation of the response signal, especially with respect to the determination of the motion parameter/velocity and controls the transmitter 12, such that same outputs the frequency signal 12s in an adapted manner or outputs using the frequency signal 12s a control signal so as to modify the reading out mode (e.g., using a different modulation type). This has the purpose to find a good tradeoff between precision of the motion detection and the respective rate with which the plurality of tags 12a to 12d can be read out.

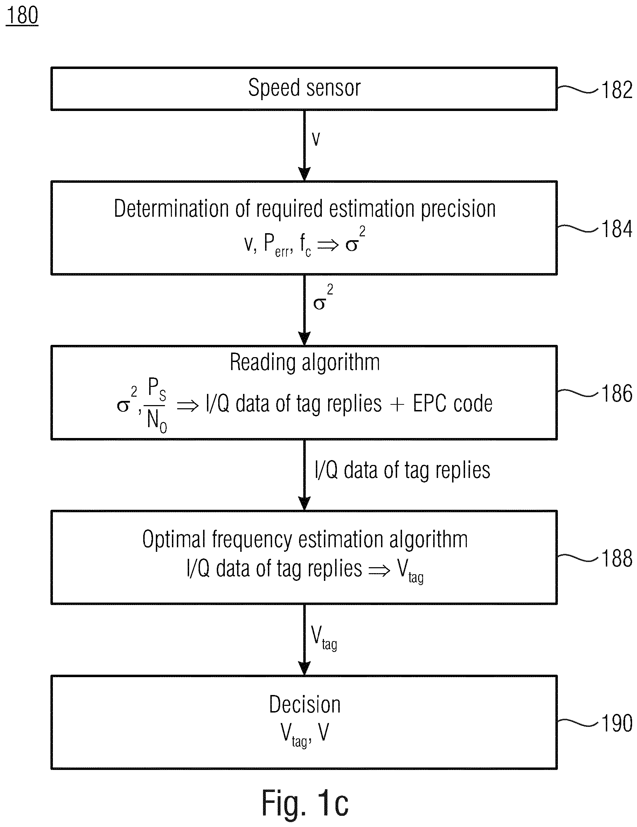

With respect to Fig. 1c, a detailed description of partially optional steps for the movement detection and especially of the optimization of the movement detection will be described. Fig. 1c shows a process for the movement detection 180 having five steps 182, 184, 186, 188 and 190. The process is based on the assumption, that an information regarding the speed of the moving tags 12a to 12c is known, or can be gathered by use of an external speed sensor. Coming back to the embodiment of Fig. 1a, it should be noted that the speed sensor may be part of the convoy 30 measuring the velocity of same. Here, the speed sensor is marked by the reference numeral 32.

1. Speed Sensor 182:

The first step 182 is to gather information about the speed of the moving tag populations 12a to 12c. This can, for example, be done by applying a speed sensor or by directly connecting the reader to the control of the system that moves the tags (e.g. a conveyor belt 30 or a forklift truck). Another alternative is to use the Doppler effect in order to measure the speed of an object that carries the moving tags (e.g. a forklift truck) or moves with the same speed for any reason. In order to power the tags, the reader continually transmits a carrier signal 125. This carrier signal is reflected by all the objects around the reader. Therefore, the speed of every object that moves relative to the reader antenna can be estimated by measuring Doppler shift of the part of the reader's carrier signal 145 that has been reflected by the object. This block is irrelevant for stationary tag populations.

2. Determination of Estimation Precision 184:

In this step 184, the minimal tolerable estimation variance of the Doppler frequency estimation, $\sigma^2$ is calculated. It depends on the speed of the moving tag population 12a to 12c, $v_m$, the maximum tolerable error rate of the movement detection, $P_{err}$, and the carrier frequency, $f_c$. This step is explained in more detail below.

3. Reading Algorithm 186:

The reading algorithm 186 organizes the communication between reader 10 and tags 12a to 12d. It ensures that the tag responses are suitable for a Doppler shift estimation with the variance that has been specified in the previous block. It will be described in more detail below which provides various reading strategies.

4. Optimal Frequency Estimation Algorithm 188:

This algorithm 188 estimates the Doppler frequency of a responding tag using the received I/Q data. It is described below.

5. Decision 190 if Tag is Relevant:

In this block, the final decision whether the tag is moving or not is done, as described in below.

Below, the steps 182 to 190 will be discussed in much detail, wherein it should be noted, that the description represents a preferred embodiment, but not a required variant.

Determination of the Estimation Precision

The error of the frequency estimation is expected to be normally distributed. Fig. 2 shows the corresponding Gaussian bell curves in a system with two distinct tag populations, one consisting of tags that are moving with velocity 1$m/s$ (cf. reference numeral 2g) and one consisting of tags that are not moving (cf. reference numeral 2b).

If a speed of 1$m/s$ is considered (and a carrier frequency of 900MHz), the estimated Doppler shifts of the tags are distributed as shown in the figure. The Doppler shift of a perfectly estimated moving tag is 6Hz while the Doppler shift of a perfectly estimated stationary tag is 0 Hz. In this case, a decision threshold of 3Hz would be chosen for the movement detection. If the tag's estimated Doppler shift is lower than 3Hz it is considered as stationary and tags with Doppler shift higher than 3Hz are considered as moving. Now, errors occur at the overlap of the both curves. All the values of the curve 2b that are higher than the decision threshold lead to false decision. For corresponding tags the decision says that the tag is moving although it is not. Accordingly, the values of the curve 2g that are lower than the decision threshold lead to false decisions. Here, the false decision would be that the tag is stationary, although it is moving. The width of the curves corresponds to the variance of the frequency estimation. The tolerable variance of the frequency estimation is therefore limited by the overlap of both Gaussian Bell curves which will be calculated in the following.

Considering a normally distributed estimation error, the probability of a false detection is given by

$$P_{err} = 0.5 \left(1 + erf\left(\frac{x-\mu}{\sqrt{2\sigma^2}}\right)\right). \tag{2}$$

This is the same for both curves (if they have the same variance which is assumed here). Here, erf(x) denotes the error function, x is decision threshold, $\mu$ the mean value and $\sigma^2$ the variance of the considered random variable. Therefore, $P_{err}$ is the result of integrating the pdf of a normally distributed random variable with mean value $\mu$ and variance $\sigma^2$ from $-\infty$ to x. In our case, the mean of the random variable is given by

$$\mu = f_d, \tag{3}$$

where $f_d$ denotes the Doppler shift of objects that are moving with the speed of the moving tag population. The decision threshold is given by

$$x = \frac{f_d}{2}, \tag{4}$$

which is the half of the expected Doppler shift of moving tags. In our case, we are interested in the resulting variance for a fixed $P_{err}$. Solving Eq. (2) for $\sigma^2$ and using Eqs. (3), (4) and (20) yields

$$\sigma^2 = \frac{(x-\mu)^2}{8(erfinv(2P_{err}-1))^2} = \frac{f_d^2}{2(erfinv(2P_{err}-1))^2} = \frac{2v^2 f_c^2}{c^2(erfinv(2P_{err}-1))^2}. \tag{5}$$

In the following, this will be used several times in order to determine the minimum variance the frequency estimation ensures for achieving a movement detection with error rate $P_{err}$.

It is to note here, that all the concepts presented here and in the following can also be applied for the case of distinguishing tags of a moving tag population from tags of a stationary population. It is also possible to distinguish tags from tag populations with different speed. Further, it is also possible to distinguish between more than two tag populations if there are more than two tag populations with different speeds.

Reading Algorithms

In this chapter, different strategies to read the tags for a reliable estimation of the tag's movement are proposed. The goal of these strategies is to be able to read as many tags as possible per time while performing a movement detection with sufficient reliability.

The communication between reader and tags is organized by the reader. The reading strategies therefore provide ways how the reader can organize the communication with the tags based on the EPCglobal standard. These strategies are set up using the MCRBs and a given minimum tolerable estimation variance (cf. below). Each strategy is based on a different approach to ensure that the tag replies of each tag are long enough for a reliable movement detection or have a pause of sufficient length. The reading strategy ensures that the MCRB of the tag replies is smaller or equal to the necessary estimation variance for each tag. For the determination of the tolerable estimation variance (using Eq. (5)) it is assumed that the tag's speed is known.

In the following, three possible reading strategies are proposed. Each of them is based on one of the following basic ideas:

- Single readout of the tag (one RN16 and one EPC): Optimized BLF
- Multiple readouts of EPC within one inventory round: Multiple EPC

- Multiple readouts of the tag in separate inventory rounds using the Select command: Multiple Readout Select

These strategies can be applied in every scenario where tags from a moving tag population with known speed have to be distinguished from tags of a tag population with a different speed. The strategies are described in the following subsections. Here a subsection shows achievable reading rates for these reading strategies.

It is to note here, that these reading strategies can also be applied for optimizing the communication between reader and tag for other purposes like optimizing it for optimal estimation of tag phase, RSSI etc.

Optimized BLF

The most simple approach is just to estimate the tag's Doppler shift when the tag transmits its RN16 and EPC code during the inventory round. These replies might be to short to estimate the Doppler shift with sufficient precision. The approach of the reading strategy Optimized BLF is to solve this problem by adapting the BLF and the encoding of the tag data. They are chosen in a way that the tag replies are of sufficient length for a precise estimation of its Doppler shift. The BLF is chosen as high as possible in order to be able to handle as many tags per time as possible. On the other hand, the BLF is low enough so that a reliable estimation of its Doppler shift is possible. Therefore, the optimal BLF is the highest BLF that still enables a reliable estimation of its Doppler shift. The same is considered for the choice of the data encoding. The derivation of the optimal BLF depending on variables like the conveyor belt's velocity v, the $\frac{P_S}{N_0}$, the maximum tolerable probability of a false detection of the tag's movement, $P_{err}$ and some reader variables will be dicussed later.

The next step for optimizing the reading strategy Optimized BLF is to optimize the chosen encoding and the DR. They are optimized for achieving the following two goals:

1. To ensure that the chosen BLF lies in a valid region according to the EPCglobal standard.
2. To achieve the highest possible reading rate.

In order to achieve these two goals, the achievable reading rate as a function of the BLF is calculated separately for each different possible encoding (FM0, Miller-2, Miller-4 and Miller-8) and DR ($DR$ = 8 and $DR = \frac{64}{3}$ ). This yields 8 curves which are compared with each other in order to find the BLF, encoding and DR that lead to the highest reading rate.

Multiple EPC

The idea of the reading strategy Multiple EPC is to expand the tag's signal by requesting its EPC code multiple times during the inventory.

The EPCglobal standard allows the reader to send a new ACK command (which commands a tag to transmit its EPC code) directly after receiving the EPC code without canceling the inventory round. Utilizing this, the tag's signal can be extended while transmitting with the highest BLF and FM0-Encoding.

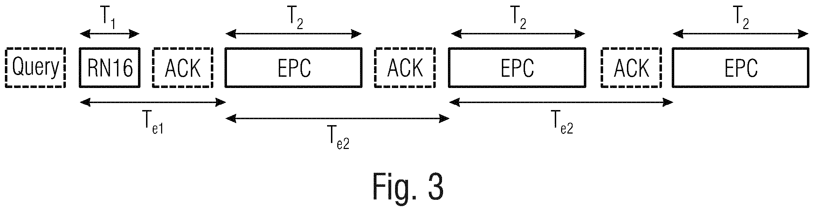

The link timing of this approach is illustrated in Fig. 3. In order to optimize this procedure, the number of necessary readouts of the EPC code is calculated. This is done using the MCRB. It is given by

$$MCRB_{MultEPC}(v) = \frac{N_0}{8\pi^2 P_S \int_{T_0} (t-t_0)^2 dt} \qquad (6)$$

with

$$\int_{T_0} (t-t_0)^2 dt = -\frac{\left(T_1^2 + LT_2^2 + 2T_2\left(LT_{e1} + \frac{1}{2}(L-1)LT_{e2}\right)\right)^2}{4(T_1 + LT_2)}$$
$$+ \frac{T_1^3 + LT_2^3}{3} + LT_2^2 T_{e1} + LT_2 T_{e1}^2 + T_2 T_{e2}(L-1)L\left(\frac{1}{2}T_2 + T_{e1} + \frac{1}{6}T_{e2}(2L-1)\right).$$

$$(7)$$

In accordance with Fig. 3, $T_1$ denotes the length of the first tag response (the RN16), $T_2$ denotes the length of the following responses (EPC), $T_{e1}$ denotes the time between start of the RN16 and the start of the first EPC, and $T_{e2}$ denotes the time between starts of two consecutive EPCs.

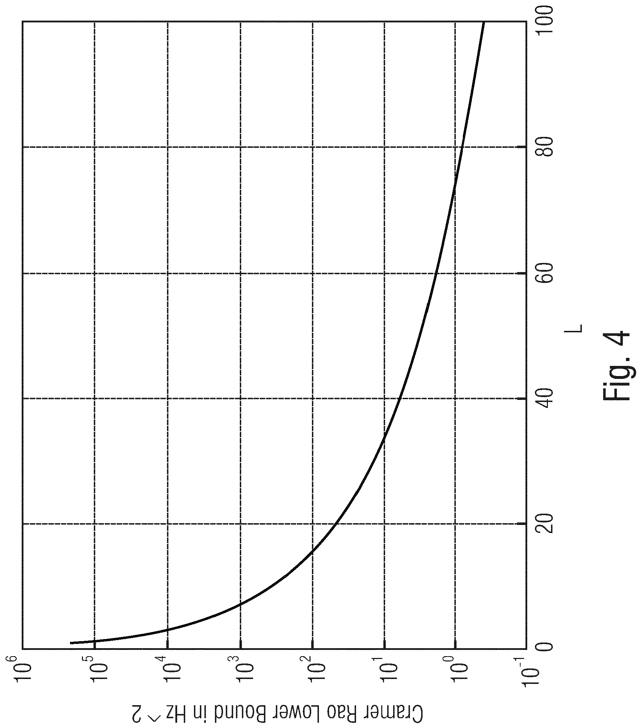

Fig. 4 shows the MCRB from Eq. (6) as a function of L. As expected, the MCRB decreases with increasing L. In order to fulfill the requirements for successful movement detection, L is chosen large enough that the MCRB is smaller or equal to the maximum tolerable estimation variance given by Eq. (5). Therefore, the optimal number of EPC readouts is determined by setting the MCRB equal to Eq. (5) (after multiplying it with the factor 4 in order to consider modulation loss and implementation loss) and solving

$$4MCRB_{MultEPC}(v) = \frac{2v^2 f_c^2}{c^2 \left(erfinv(2P_{err} - 1)\right)^2}. \tag{8}$$

with Eq. (6) and Eq. (7) for L.

The big advantage of Multiple EPC is that every tag reply can be treated individually with the number of EPC readouts optimized for its $\frac{P_S}{N_0}$. In most cases, most of the tag responses are very strong. Therefore, they use few EPC readouts which increases the achievable reading rate significantly.

Multiple Readout Select

The reading strategy Multiple Readout Select follows an idea that is completely different to Optimized BLF and Multiple EPC. The idea is not to expand the tag's signal but to read it twice with a pause of optimized length in between. The estimation variance decreases quadratically with increasing length of the pause between two received responses. Therefore, it is best to chose the pause as long as possible. However, ambiguities will occur if the pause is chosen too long. In accordance with Eq. (41), the length of the pause can, for example, therefore be chosen as

$$\Delta t = \frac{1}{2f_d} = \frac{c}{4vf_c}. \tag{9}$$

With a pause of this length no ambiguities will occur.

It is possible to read out a tag twice with a specific defined pause between the readouts according to the EPCgolbal standard utilizing the Select command. The Select command is sent by the reader as the first command even before the Query command when establishing an inventory round. It allows the reader to select a specific selection of tags for the following inventory round by their EPC codes. Then, only the selected tags will respond to the Query command in the following inventory round. For the reading strategy Multiple Readout Select, a new inventory round is established for each of the readouts in which only one tag of interest is selected by the Select command.

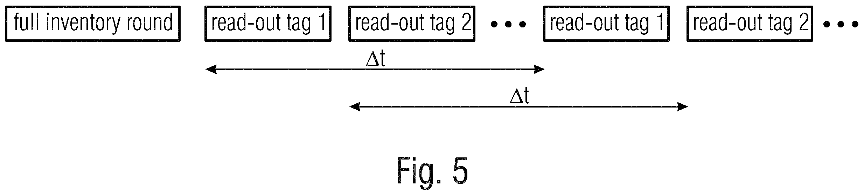

Fig. 5 illustrates the communication between reader and the tags for the reading strategy Multiple Readout Select. First, an inventory round is set up in which all the tags in the reading range are identified. This enables to get the EPC code of each tag for selecting it later with the Select command. The purpose of this first inventory round is to get the EPC codes. Then, after the inventory round, the tags are read out again individually. Here, the individual tags are addressed by their EPC code and read out in separate inventory rounds. Each tag is read out in a separate inventory round twice with time difference $\Delta t$. As $\Delta t$ is longer than an inventory round, the next tags can be read out during the pause of the previous tag which then results in a nested readout of the tags.

Again, there may be a number of additional options for optimizing the performance of this reading strategy by optimizing the way the tags are read. In the first inventory, it is often the best choice to choose the BLF as high as possible and the encoding as short as possible. The main purpose of the first inventory round is to get the EPC codes in the shortest possible time. For the following inventory rounds for individual tags, several options arise depending on the strength of the tag reply and the speed of the conveyor belt:

1. Reading only the RN16 or reading RN16 and the EPC code: Recall that during an inventory round a tag first transmits an RN16 and then its EPC code only after the Acknowledge command. Thus, as the EPC code is known from the first inventory round, it might suffice to end the individual inventory rounds after the RN16. In order to determine whether the EPC code is necessary for reliable movement detection, the MCRB is utilized again.
In the following, a threshold is calculated which is able to determine whether only reading the RN16 is sufficient. Therefore, the MCRB for two tag is utilized. The MCRB for two tag replies of the same length (now given by $T_{RN16}$)

from Eq. (38) is set equal to the expected estimation variance from Eq. (5) (after multiplying it with the factor of 4 in order to consider modulation loss and implementation loss). This yields

$$4MCRB_2(v) = \sigma^2$$

$$\Leftrightarrow \frac{4}{4\pi^2(\frac{1}{3}T_{RN16}^3 + T_{RN16}\Delta t^2)} \frac{N_0}{P_S} = \frac{f_d^2}{2(erfinv(2P_{err}-1))^2}$$

$$\Leftrightarrow 8\left(erfinv(2P_{err}-1)\right)^2 \frac{N_0}{P_S} = f_d^2 4\pi^2 \left(\frac{1}{3}T_{RN16}^3 + T_{RN16}\frac{1}{4f_d^2}\right)$$

$$\Leftrightarrow 2\left(erfinv(2P_{err}-1)\right)^2 \frac{N_0}{P_S} = f_d^2 \frac{\pi^2}{3}T_{RN16}^3 + \frac{\pi^2}{4}T_{RN16} \qquad (10)$$

which, solved for $\frac{P_S}{N_0}$, yields

$$\frac{P_S}{N_{0\,thresholdRN16}} = \frac{2\left(erfinv(2P_{err}-1)\right)^2}{\frac{4v^2 f_c^2}{c^2}\frac{\pi^2}{3}T_{RN16}^3 + \frac{\pi^2}{4}T_{RN16}}. \qquad (11)$$

If the $\frac{P_S}{N_0}$ of a received tag reply is higher than or equal to $\frac{P_S}{N_{0\,thresholdRN16}}$, only reading out the RN16 is sufficient. Otherwise, also the EPC code is read. The threshold for reading both RN16 and EPC code can be calculated in a similar way. However, the therefore MCRB for four tag replies has not been derived in this work. Instead, the MCRB for only receiving two EPC codes was used. This serves as an upper bound for the MCRB for the not derived MCRB.

Then, the $\frac{P_S}{N_{0\,thresholdEPC}}$ can be calculated using Eq. (11). This threshold has always been lower than [40.65]dB - Hz in the scenarios considered in the simulations.

2. Optimizing BLF and the data encoding:
In this work, the BLF is chosen as high as possible and FM0 is chosen as data encoding. However, it is possible to further improve the performance a little bit by also adapting these two options.

3. Treating each tag equally or optimizing the readouts of each tag individually:
As different received tag replies have different $\frac{P_S}{N_0}$, it might suffice for some tag replies to read them out with smaller pause in between. However, this might be not very helpful as it complicates a nicely organized nested readout of the tags.

4. Also using the first inventory for the Doppler estimation:
It is possible (at least for a part of the tags) to organize the readouts in a way that it suffices that the tags are read out once during the first inventory (where the EPC codes are collected) and then only one more time later with optimized pause between the first readout and the second. Alternatively, the first readout can also be used in addition to two later following individual tag reads. Then, there would be three tag reads where the second pause is optimized in order to get rid of ambiguities.

Combining Multiple EPC and Multiple Readout Select

One possibility to further optimize the readouts is to combine two reading strategies. Multiple EPC with individually treated tag readouts is the most favorable reading strategy for strong tag replies. However, reading weak tags with weak strength takes very long with Multiple EPC. Here, the reading strategy Multiple Readout Select leads to the best result. Therefore both can be combined which means that strong tag replies are read during the inventory round according to the Multiple EPC strategy. Weak tags are only inventoried during the first inventory round. For movement detection, they are read out again later according to the strategy Multiple Readout Select.

Optimal Frequency Estimation Algorithm

This chapter provides an algorithm that estimates the Doppler shift of a tag with highest possible precision. The goal here was to find an algorithm that reaches the MCRB. This was achieved except for an implementation loss that is produced by the necessary suppression of interfering reflections from other objects. This mentioned algorithm and the algorithm for optimal frequency estimation is provided below. The latter will be employed for estimating the tag's Doppler shift after the suppression of the interfering reflections.

Suppression of Reflections from Other Objects

As mentioned before, the tag responds to the reader by backscattering the reader's CW signal. The strong carrier signal will not only be reflected by the tag but also by other objects in the surrounding area which comprise:

- the object on which the tag is attached
- other static objects in the room (walls, obstacles like stationary machines etc.)
- other moving objects inside the room (people walking around, forklift trucks moving around etc.)

All reflections from moving objects have a certain Doppler shift which will interfere with the measurement of the tag's Doppler shift. Reflections of other large objects will be stronger than the reflections from the small RFID tags by several orders of magnitude. Therefore, an algorithm is proposed in the following that completely cancels out the interfering reflections.

It is possible to suppress interfering reflections from other objects by exploiting the fact that the tag only reflects the carrier signal during FM0- or Miller-Symbol one. The other objects reflect all the time. Thus, the reflections of the other objects can be measured during the times of the tag's FM0- or Miller-encoded signal when the tag does not reply.

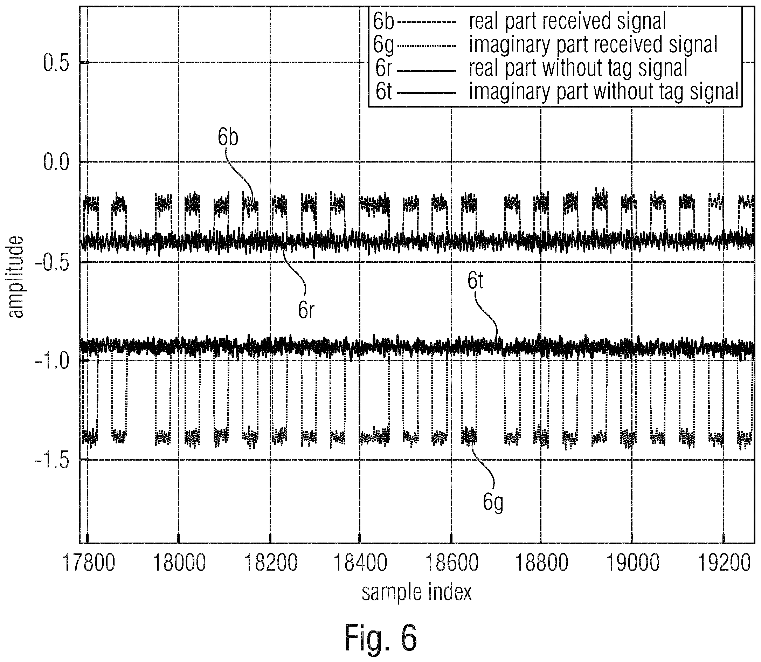

Fig. 6 shows some signals that have been generated in a simulation. It shows a small segment of the received signals of a reader antenna. The signals marked by 6r and 6t show real and imaginary part of the received signal if the carrier signal is reflected by some moving object with a velocity of 2 m/s. The signals marked by 6b and 6g show the same signals with an additional tag reply. The tag has a velocity of 1 m/s. It only reflects when its FM0- or Miller-Symbol is one. As you can see in Fig. 6, both signals coincide when the tag replies a zero. For the frequency estimation, in order to determine the tag's Doppler shift, only the parts of the signal in which the tag replies a one are used. The parts of a replied zero can be exploited in order to suppress the reflections of other objects.

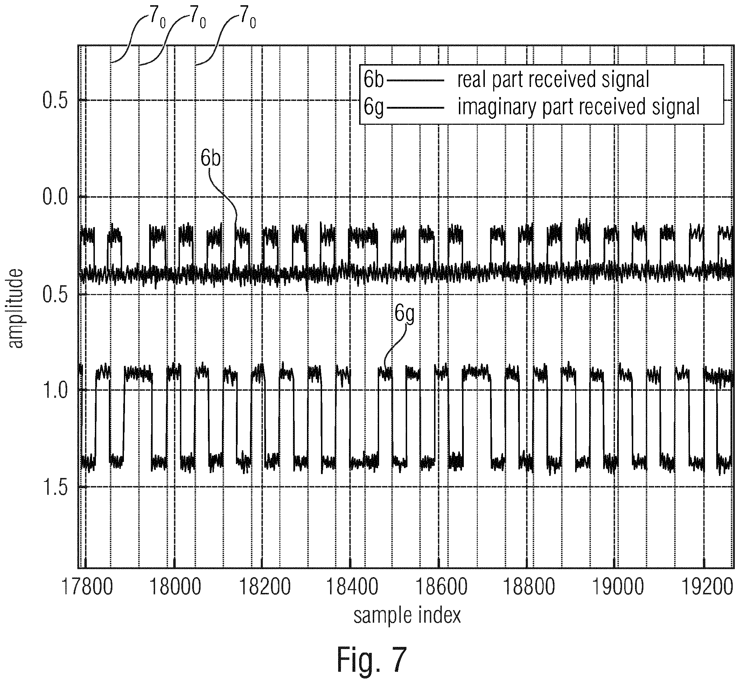

Fig. 7 shows the signal of the reflections including the tag reply again. Here, the dashed lines 7o separate in each case a neighboring pair of one and zero. The procedure to suppress the reflections is divided into the following steps:

1. Building Pairs of "ones" (when the tag reflects) and "zeros" (when the tag does not reflect).
2. Create the estimate of the received signal from reflection without tag signal:

   (a) Zeroing the received signal when the tag reflects ("ones").
   (b) Interpolating the received signal of the reflection at the zeroed part of this signal.

3. Subtract the interpolated reflection signal from the total received signal.
Doing this results in a signal where the reflections from all static and moving objects except the tag are perfectly suppressed. This, however, comes to the cost of increasing the received noise about [3]dB. Without the reflection suppression, the tag signal is only affected by the noise that was received during the tag's ones. The interfering reflections were estimated during the tag's zeros. The noise that was received during the zeros affects the estimation and therefore (after the suppression of the reflections) also the tag signals at the ones. As the lengths of the ones and zeros sum up to the same total lengths, the noise is exactly doubled. This cannot be avoided. It is necessary to suppress the reflections as they make an estimation of the tag's Doppler shift impossible if not suppressed. In the following, this loss is denoted as implementation loss.

Interpolation

After the interfering reflections have been suppressed, another interpolation is necessary in order to achieve the optimal frequency estimation result. The problem is the encoded data of the tag reply. The optimal frequency estimation result is achieved when the signal is constant without any pauses in between. Therefore, the zeros of the tag signal are interpolated.

14

### Frequency Estimation

The optimal way for estimating the frequency is to apply the FFT algorithm which is very computationally efficient. The computational efficiency can be further increased by applying a smaller FFT length and applying an interpolation.

### Final Estimation Decision

The decision if a tag is moving or not moving is done using a decision threshold. Fig. 2 exemplarily shows the PDF of the Doppler shift estimation of a tag that is static (2b curve, Doppler shift 0Hz) and a tag that is moving with 1 m/s (2g curve, Doppler shift 6 *Hz* for $f_c$ = 900 *MHz).* The decision threshold is chosen as the half of the expected Doppler shift of the moving tags. In the example of Fig. 2 this would be 3 *Hz.* Tags with an estimated Doppler shift below the decision threshold are considered as static and tags with an estimated Doppler shift higher than the decision threshold are considered as moving. Alternatively, the same can be done using the speed instead of the Doppler shift. In the example of Fig. 2 this would mean a decision threshold of 0.5 m/s.

The same can be applied for the case of two distinct moving tag populations with different speed. Here, the decision threshold can, for example, be the middle between the two speeds. Further, this can be applied for cases with more than two distinct tag populations.

Based on the above concept, it is possible to determine a velocity of one or more tags, e.g., of the tags 12a to 12c of Fig. 1 so as to distinguish the tags 12a to 12c from the stationary tag 12d. As discussed, this distinction is made based on determining a velocity of the respective tags 12a to 12d. Since not only the tags 12a to 12c reflect the signal 12s the above-discussed approach can be used for determining a motion parameter / velocity of the object. Analogously to the embodiment of Fig. 1, a frequency signal is provided, wherein the Doppler shift in the response signal reflected by an object/moving object is determined. The apparatus according to this embodiment is equivalent to the apparatus 10 of Fig. 2, wherein it must not necessarily be configured to readout RFID tags.

The blow discussion will describe embodiments according to which the characteristic Doppler shift is evaluated by the motion determiner 18 to determine the further information on the motion of RFID tags 12a to 12c of objects dependent on the application RFID reader or motion detector.

According to an embodiment, the above-described RFID reader/motion detector may be configured to perform passage detection of moving objects.

This Subsection provides a technique that allows to determine the distance in which an object passed the reader antenna. The whole system is then built up as illustrated in Fig. 7. Instead of the speed information of the speed of the conveyor belt, information about the speed of the conveyor belt is gathered by using the reader's continually transmitted carrier signal as a radar. This way, the speed of the object can be estimated and tracked. Additionally, the block "Speed Sensor" can detect with which distance the object passed the reader antenna. This can be used in many scenarios for an additional passage detection. For example, at an entrance gate of a warehouse, this can be used to estimate with which distance a forklift truck passed the reader antenna. This in turn can be used for a detection whether the forklift truck passed through the gate or whether it passed by the gate (which usually means that it passed the reading antenna with a larger distance than if it passed through the gate). Then, it is possible to both do a determination of which tag was on a forklift truck and additionally, which tag was on a forklift truck that really passed through the reading gate. The decision if a tag is relevant could then work the following way: All the tags that have been detected as not moving are considered as irrelevant and, additionally, all the moving tags that moved with the speed of a forklift truck that did not pass the reading gate are also considered as irrelevant while only those which passed the reading gate together with a forklift truck are considered.

The detection of the distance with which an object passed the reader antenna works as follows: The chosen technique uses the received Doppler shift of the object which therefore is tracked constantly. It is possible to track it as the reflections from big objects (like forklift trucks) usually are very strong. A ML estimator is derived that allows a determination of the distance based on the object's Doppler shift curve.

Fig. 9 shows a coordinate system that depicts the movement of the forklift truck. The forklift truck is assumed to move along a straight line with constant speed. It is assumed here that it moves parallel to the x axis and that it is located at position (x = -$x_0$, y = $y_0$) at t = 0.

Fig. 10 shows received Doppler curves for forklift trucks that are moving as specified in 9 with v = 3 m/s. As already mentioned, the Doppler shift curves experience a positive floor point for large negative times and a negative floor point for large positive times. The 10b and the 10g curve show Doppler shift curves for $x_0$ = 0. They are zero at time t = 0 s while the zero crossing is shifted for $x_0$ = 2 m (10r curve).

Now, the first step for estimating the forklift trucks movement is to estimate its speed. This is done by measuring the Doppler shift at large negative time when the Doppler shift curves is close to its floor point. Then, speed is calculated by simply solving Eq. (20) for v, which yields

$$v = \frac{cf_d}{2f_c} \qquad (12)$$

After the speed is known, $y_0$ can be estimated by the ML estimate. It is given by

$$\widehat{\Phi}_{LL}(\mathbf{x}, \phi) = argmax_\phi \left\{ -\sum_{i=1}^{N} \left( x_i - \frac{4f_cv(t_iv-x_0)}{cy_0\sqrt{\frac{(t_iv-x_0)^2}{y_0^2}+1}} \right)^2 \right\}. \qquad (13)$$

Here, x denotes the observation vector which consists of samples $x_i$ of the estimated Doppler curve. $v$ denotes the speed of the object that has been estimated before and $t_i$ the time at sample index $i$. The variables $x_0$ and $y_0$ denote the position of the object as illustrated in Fig. 9. Now, these two variables are estimated by calculating the log-likelihood function given in Eq. (13) for every possible value of $x_0$ and $y_0$. The estimated values are then given as the pair of $x_0$ and $y_0$ that maximizes the log-likelihood function.

It is to note here that $x_0$ could also be determined directly from the Doppler shift curves. Therefore, it would just measure the time when the Doppler shift curve is exactly zero. This is the moment when the object passes the $y$-Axis. If this time known, $x_0$ can be easily calculated by multiplying the time of the zero crossing with v. This distance/passage detection can also be done for a single tag basing on the tag replies if it is read out often enough.

According to a further embodiment, the processor of the RFID reader 10 or the motion detector may be configured for a so-called approach detection enabling to use the above-described concept during a hibernation mode and to switch into the readout mode/detection mode if a motion is detected.

In many scenarios, a reader is only used to read from time to time. One example is a reader that is installed at an entrance gate in order to identify goods on a passing forklift truck. Then, the reader does not read any tags most of the time. There will be tags of interest in the reader's reading range only during the time a forklift truck is passing the reading gate. At other times, the reader can be switched off in order to save energy. However, it has to recognize when a forklift truck approaches the gate in order to turn on again and read the tags on the forklift truck. Until now, this problem is often solved by applying external sensors like light barriers that detect events that use the reader to turn on (e.g. an approaching forklift truck). This can also be solved using the Doppler effect. Here, the reader turns on for a very short time and transmit its carrier signal. Then, it detects whether there is a Doppler shift from a moving object in the received signal. If this is the case, the reader can stay on and read tags. If there is no Doppler shift detected, the reader can turn off again for a certain time in order to save energy. After a certain time it will turn on again and listen if there is a moving object.

Additionally, a classification of the moving object can be applied in order to exclude or concentrate on certain moving objects. For example, the moving objects can be classified by the strength of their reflected Doppler-shifted signal. This allows to differentiate between objects of different sizes and material. Another example is to classify the objects by their Doppler frequency. This allows to differentiate between moving objects with different speeds. Using this classification, the event triggers the reader to start reading tags. For example, the classification can be used to distinguish between approaching people and approaching forklift trucks. This assumes that the strength and/or Doppler shift of both is different. Then, the reader can decide to start reading if a forklift truck approaches and continue going to sleep if a human approaches and vice versa.

According to a further embodiment, the detection of a movement direction is enabled, e.g., using RSSI. The below embodiment uses at least two antennas, e.g., two active antennas or two passive antennas in combination with an active antenna.

If two antennas are used, the movement estimation can be extended to a movement estimation with direction estimation. One possibility is to use two antennas placed close to each other with different steering direction. Then, the RSSI can be used to additionally detect into which direction a tag or object is moving.

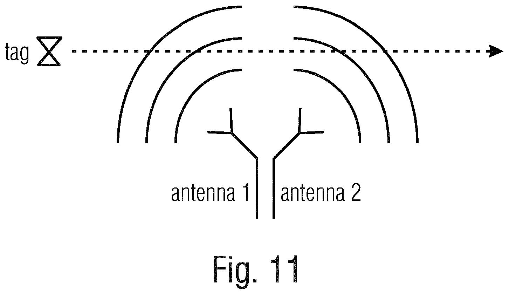

To achieve this, the antennas can, for example, be oriented as shown in Fig. 11. Here, both antennas are placed next to a position where a tag or object is expected to pass both antennas. They are no more oriented into the direction where the tag or object will pass (i.e. the direction where the object will be closest to the antennas while passing them, which would be upwards in Fig. 11). Now, one of both antennas is oriented into the direction where the object comes from and one into the direction the object moving. The angle can be varied, it is only important that the antennas have a different orientation. If the object approaches the antennas, the RSSI will be higher at the antenna that is oriented into the direction where the object comes from. When the object passed the antennas, the RSSI will be higher at the antenna that is oriented into the direction the object is moving.

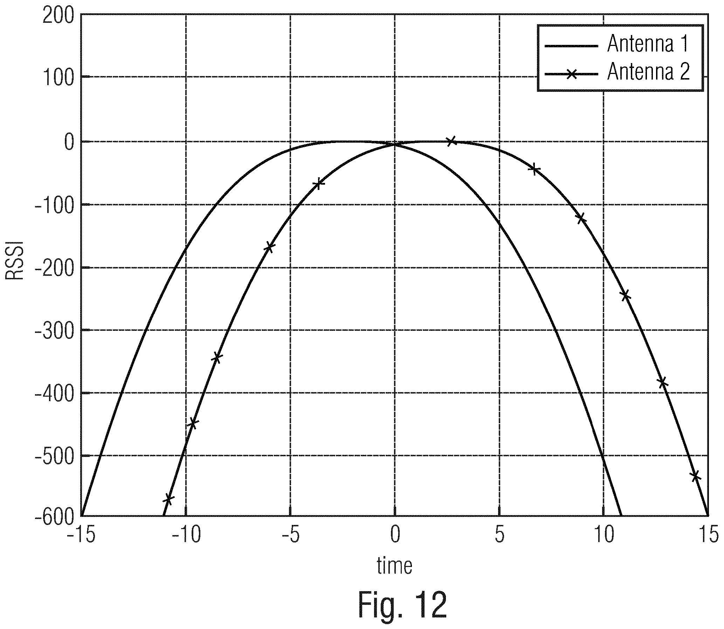

Fig. 12 shows how the RSSIs from both antennas might look like. First, the RSSI of Antenna 1 is higher than that of Antenna 2 (when the object is approaching). Then (at time 0) both RSSIs are equal, which means that the object is next to the antennas. Afterwards, the RSSI of Antenna 2 is higher than that of Antenna 1 when the tag is moving away from the antennas. With this knowledge, the direction of the moving object can be estimated by comparing the RSSIs of both antennas at different times.

The RSSI is strongly affected by fading and reflections which can make this estimation unreliable. However, this can be compensated by tracking the RSSIs over a long time or at many different times. Then, it can be assessed statistically whether it is more likely the object moved into the direction of Antenna 1 or Antenna 2.

This can, for example, be combined with the passage detection from 12 so that the passage detection detects whether an object passed the antennas based on its Doppler shift and the RSSI is used in order to detect into which direction the object moved. Here, the passage detection could also help to determine the point where the RSSIs are expected to be equal (time 0 in Fig. 12).

According to another approach, the movement direction can be determined using the Doppler shift.

Another possibility for determining the movement direction is to track the Doppler shift of an object at multiple antenna and then compare the different Doppler shifts from the different antennas. For example, the time when the object passed the antenna and the distance can be determined for each antenna individually. Then, the time difference between the two antennas can be used in order to draw conclusions about the direction of the movement of the object.

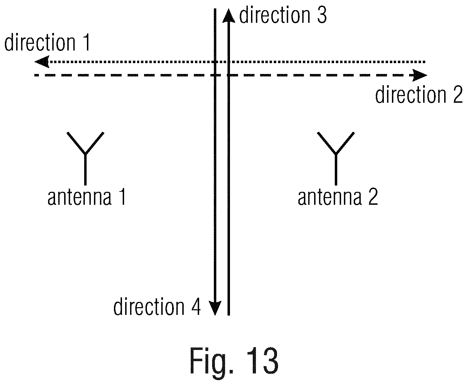

Fig. 13 shows two antennas and 4 movement directions. Using the Doppler shift curves of both antennas allows to distinguish whether the object passed by the two antennas (e.g. Direction 1 and Direction 2) or if it passed through the antennas (Direction 3 and Direction 4).

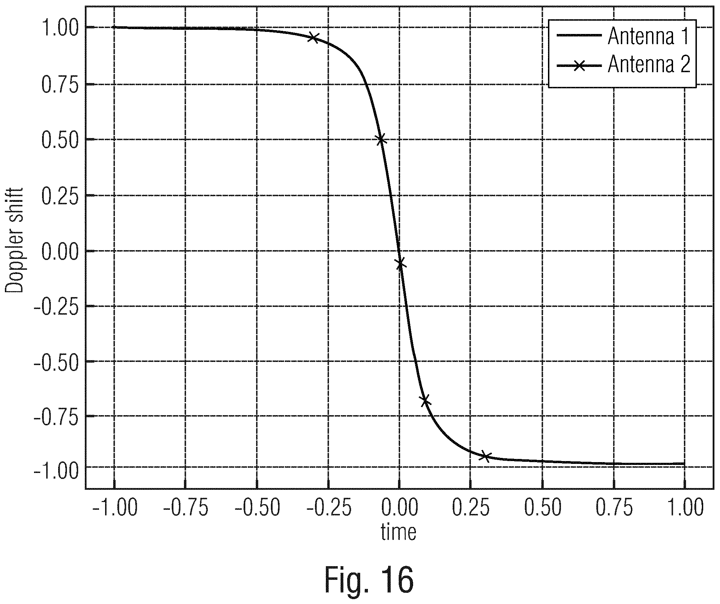

Figs. 14, 15 and 16 show the corresponding expected Doppler shift curves for the four movement directions from Fig. 13. There is a time-shift between the Doppler shift curves of the two antennas in Fig. 14 and Fig. 15 but no time shift in Fig. 16. This can be used in order to distinguish between movement parallel to the two antennas (Direction 1 and Direction 2) and movement prependicular to the two antennas (Direction 3 and Direction 4).

For movement parallel to the two antennas, this technique also allows to detect the direction of the movement. In the example of Fig. 13 we can say the following: If the zero transition of the Doppler shift curve of Antenna 1 is before the zero transition of the Doppler shift curve of Antenna 2 (c.f. Fig. 15), then the object moved from the direction of Antenna 1 into the direction of Antenna 2 (Direction 2). The other way around, if the zero transition of the Doppler shift curve of Antenna 1 is after the zero transition of the Doppler shift curve of Antenna 2 (c.f. Fig. 14), then the object moved from the direction of Antenna 2 into the direction of Antenna 1 (Direction 1).

With two antennas, it is not possible to determine the direction of movement perpendicular to the antennas. In the example of Fig. 13, Direction 3 and Direction 4 lead to exactly the same Doppler shift curves (both times the curve shown in Fig. 16). However, with more than two antennas it is possible to also detect the movement directions into two dimensions (if the antennas are not placed along a line). With three antennas it is possible to detect movement directions in two dimensions and with four antennas it is possible to detect directions in three dimensions.

For example, a possible setup for an RFID reading gate could be four antennas, two on the left hand side and two on the right hand side of the gate.

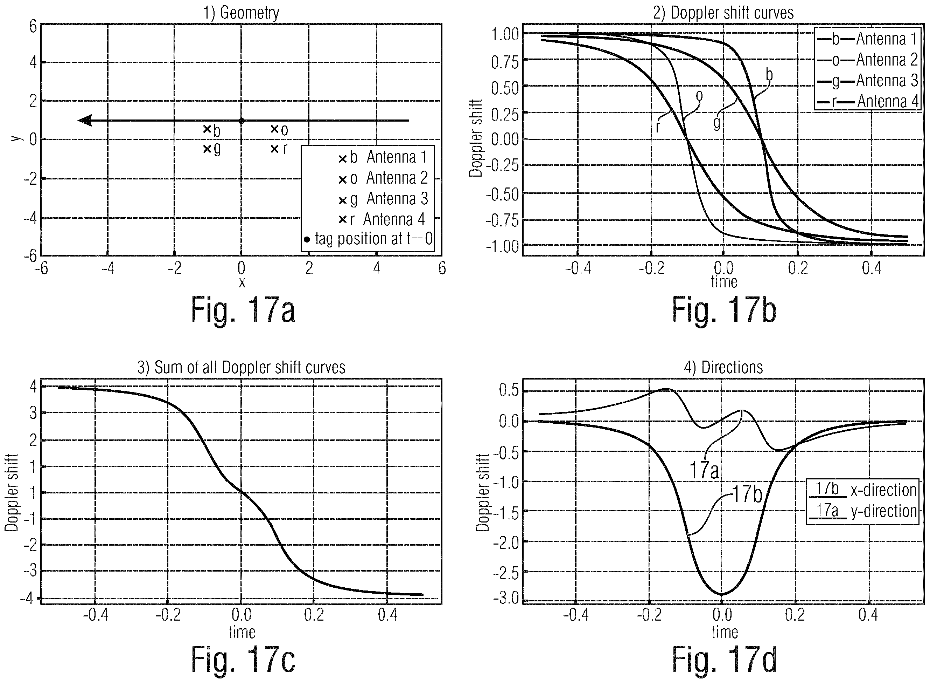

Fig. 17 shows some simulation results from this setup:

- Plot 1) shows the geometry of the setup with the positions of the antennas, the direction of the movement of the tag (or object) and its position at time t = 0.
- Plot 2) shows the corresponding Doppler shift curves for all four antennas.
- Plot 3) shows the sum of the four Doppler shift curves from all four antennas.
- Plot 4) shows the two other curves:

    (a) The sum of the Doppler shift curves of Antenna 2 and Antenna 4 minus the sum of the Doppler shift curves of Antenna 1 and Antenna 3 (the 17b curve of Fig. 17d called "x-direction")
    (b) The sum of the Doppler shift curves of Antenna 1 and Antenna 2 minus the sum of the Doppler shift curves of Antenna 3 and Antenna 4 (the 17o curve of Fig. 17d called "y-direction")

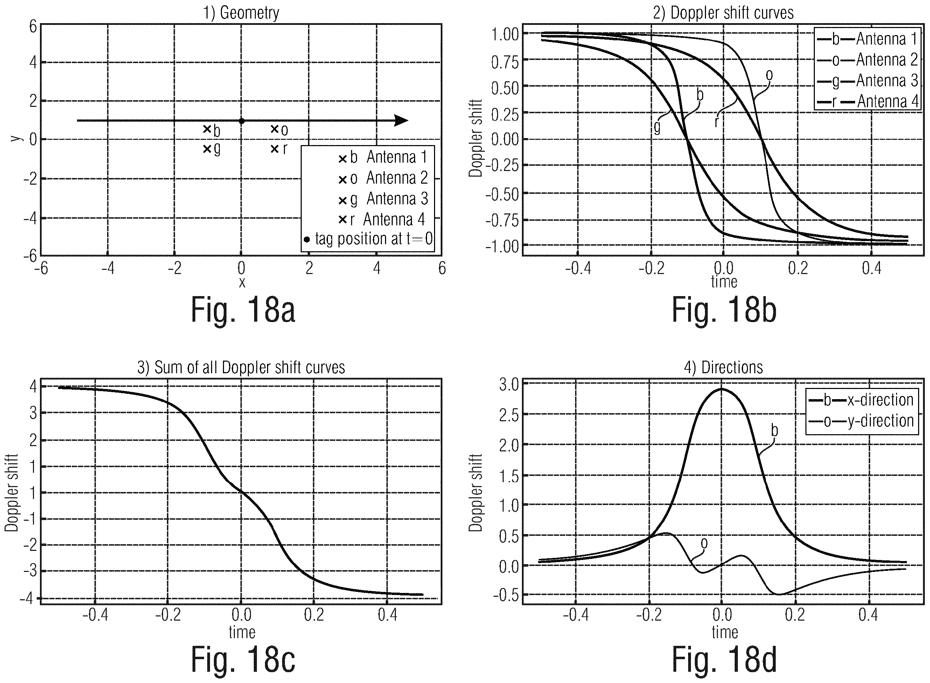

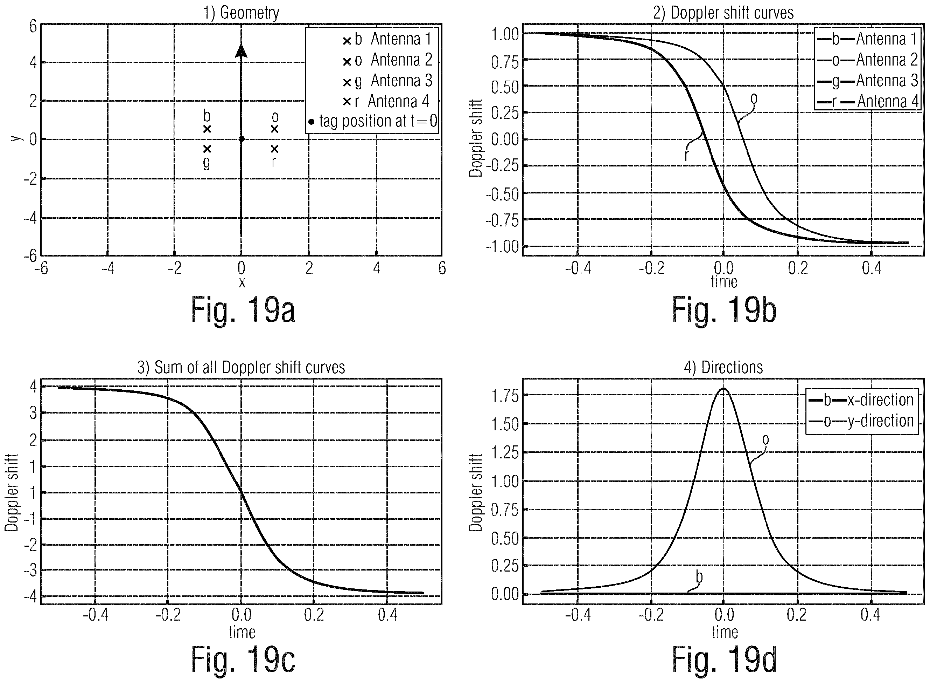

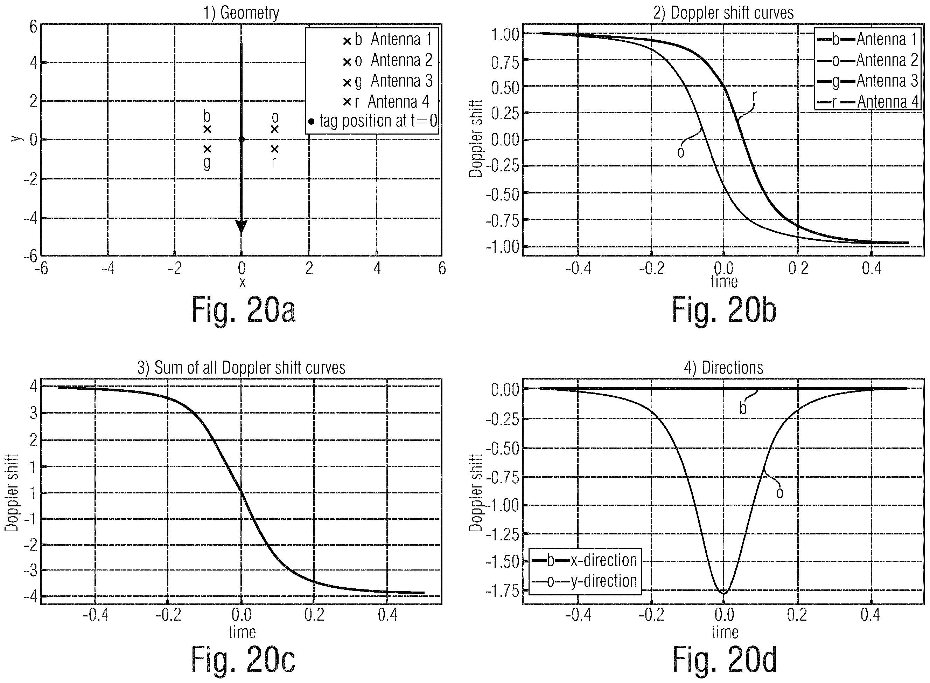

Figs. 18, 19 and 20 show the same plots for Direction 2, Direction 3 and Direction 4, respectively. Here we can see, especially in Plot 4), that this setup allows to differentiate between all movement directions in x- and y- direction. Plot 3) shows a Doppler shift curve relative to the point in the center of the four antennas. This allows to determine movement relative to this point, although there is no antenna placed at the center. Plot 4) shows two curves that allow a determination of the movement direction in two dimensions (e.g. by the peak at t=0).

For referring to Fig. 1b, it should be noted that it is sufficient for the basic configuration to use one antenna 30, preferably an active antenna, i.e., used for the transmission and the receipt. Here, the transmitter 12 and the receiver 14 are typically implemented as a common transceiver. According to further embodiments, each entity 12 and 14 may use its own antenna (not shown). In this case, the antenna of the receiver 14 is a so-called passive antenna. Different configurations of active and/or passive antennas will be discussed below.

There are two possibillities how the additional antennas can be used, actively and passively.

The antennas are used alternately so that only one antenna receives and transmits at a time. This is the standart case in todays RFID systems in which the Doppler shifts of the different antennas therefore cannot be measured at the same time. Tthe active antenna receives and transmits at the same time and experiences the Doppler shift that occurs due to movement of the object relative to the active antenna. The speed of the object relative to the antenna can easily be calculated from the measured Doppler shift. The measured Doppler shift is then given by

$$f_{Da} = \frac{2v_{Oa}}{c} f_c, \qquad (14)$$

where $v_{Oa}$ is the speed of the object relative to the active antenna, c is the speed of light and $f_c$ is the carrier frequency. The speed can then be calculated by

$$v_{Oa} = \frac{f_{Da}}{2f_c} c. \qquad (15)$$

Another possibility is to simultaneously receive at all antennas at all time. This means that one antenna is active (transmits and receives) while the others are passive and only receive. Here, the problem is that the passive antennas will experience the Doppler shift from movement of the object relative to the passive receiving antenna plus a Doppler shift from movement of the object relative to the active transmitting antenna. The experienced Doppler shift at the passive antenna is now given by

$$f_{Dp} = \frac{v_{Op}}{c} f_c + \underbrace{\frac{v_{Oa}}{c} f_c}_{=\frac{1}{2}f_{Da}}, \qquad (16)$$

where $v_{Op}$ is the speed of the object relative to the passive antenna while $v_{O,a}$ is the speed of the object relative to the active antenna. However, if the Doppler shift experienced by the active antenna is measured at the same time, it is possible to calculate the speed of the object relative to the passive antenna using

$$v_{Op} = \left( f_{Dp} - \frac{1}{2} f_{Da} \right) \frac{c}{f_c}. \qquad (17)$$

Below, further implementation details for the determination of the motion parameter and/or the velocity will be given.

Description of Two Possible Application Scenarios

This section specifies the two application scenarios that have already been mentioned in the introduction in more detail. Subsection "Scenario 1" describes the scenario of tags moving on a conveyor belt while subsection "Scenario 2" describes the scenario of a forklift truck passing an entrance gate.

It is to note here that the effects of fading and path loss are neglected in the equations of this section. The estimation of the Doppler shift only considers the phase of the received signal. The amplitude of the signals can therefore just be normalized to one. The amplitude (and therefore the consideration of path loss and fading) is used in order to determine the expected $\frac{P_S}{N_0}$ , which may later be used to investigate the expected estimation precision.

**Scenario 1: Conveyor Belt**

The first scenario is the scenario where goods with an RFID tag are moving on a conveyor belt. An RFID reader is placed next to the conveyor belt in order to identify the goods on the conveyor belt by the response of the tag attached to them.

Subsection "Geometric Assumptions" describes the geometric assumptions that are done for the investigations on the performance of the reading strategies. Here it is assumed, that the tags virtually move through the reader antenna for mathematical reasons. The validity of this assumption is then assessed in subsection "Assessment of the Validity of the Geometric Assumptions". Subsection "Power to Noise Ratio of the Received Tag Replies" then determines the expected power to noise ratio of received tag replies while subsection " Antenna Directivity" specifies the directivity of the reader antenna.

**Geometric Assumptions (Antenna Arrangement 1)**

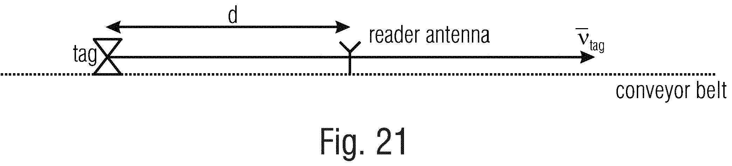

The easiest way to model the conveyor belt scenario is to assume that the tag virtually drives through the reader's antenna, as shown in Fig. 21.

In this figure, d denotes the distance between tag and the reader's antenna and $\vec{v}_{tag}$ the tag's speed. The tag's speed is equal to the speed of the conveyor belt and therefore assumed to be known and constant. In order to simplify the following calculations, we further assume that the tag is left of the reader's antenna at negative time (t < 0). It approaches the reader's antenna at negative time, reaches it at t = 0 ($\Rightarrow$ d = 0) and moves away from the reader to the right hand side at t > 0. Considering these assumptions, the distance is given by

$$d = v_{tag}|t|. \tag{18}$$

The velocity of the tag relative to the reader antenna is given by

$$v_{tr}(t) = -v_{tag} sgn(t) \tag{19}$$

where *sgn(x)* denotes the signum function. In this RFID scenario, the Doppler shift of the received signal corresponds to the Doppler shift in a radar scenario. According to [5, Eq. 5.57], the Doppler shift is in generally given by $\nu = \frac{v}{\lambda_c}$ , where v denotes the velocity of the moving object and $\lambda_c$ the wavelength of the CW. In the our radar scenario, the Doppler shift is multiplied by the factor 2, as the Doppler effect is experienced both at the forward and backward channel. Considering this and using $\lambda_c = \frac{c}{f_c}$ yields

$$f_d = \frac{2v}{c} f_c. \tag{20}$$

Here, *v* denotes the speed of the reflecting object, c the speed of light and $f_c$ the carrier frequency of the transmitted radar signal. In our scenario, the Doppler shift of the tag is given by

$$f_d(t) = \frac{2v_{tr}(t)}{c} f_c = -sgn(t) \frac{2v_{tag}}{c} f_c. \tag{21}$$

The time delay of the CW (transmitted by the reader's antenna, reflected by the tag and received by the reader's antenna) is given by

$$\tau = 2\frac{d}{c}. \tag{22}$$

Here, c is the speed of light. In our considered indoor RFID scenario, the time differences of the different multipaths are negligibly slow compared to the long symbol durations of the EPCglobal Standard. For the channel model we can therefore assume flat fading, where the channel impulse response is a dirac that is time-shifted by a certain time delay $\tau$, given by

$$h(t) = \delta(t - \tau). \tag{23}$$

Using Eq. (18), Eq. (22) and Eq. (23), we get the channel impulse response for Scenario 1 with Antenna Arrangement 1 which is given by

$$h(t) = \delta(t - \frac{2v_{tag}|t|}{c}). \qquad (24)$$

The CW is modeled as a sine-wave with the carrier frequency $f_c$. It is given by

$$x(t) = \cos(2\pi f_c t). \qquad (25)$$

The received signal is the convolution of the channel impulse response h(t) with the signal *x(t)*, which yields

$$y(t) = h(t) * x(t) = \delta(t - \frac{2v_{tag}|t|}{c}) * \cos(2\pi f_c t) = \cos(2\pi f_c(t - \frac{2v_{tag}|t|}{c})). \quad (26)$$

Note $*$ is the convolution operator.

**Assessment of the Validity of the Geometric Assumptions**

In this subsection, the validity of the geometric assumption that the tag virtually drives through the reader antenna is assessed. This is done using a second more realistic antenna arrangement where the reader antenna is placed over the conveyor belt in a certain height. Then, the validity of the previous assumption is assessed by comparing the two scenarios.

***Description of Antenna Arrangement 2***

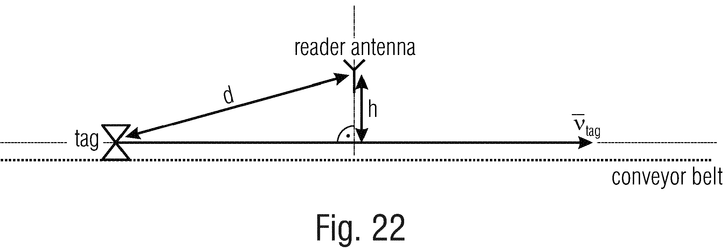

Here, the reader antenna is placed over the conveyor belt so that the tag passes it with distance *h*, as depicted in Fig. 22.

Again, d denotes the distance between tag and reader antenna. Performing some basic trigonometric considerations yields an expression of *d* as a function of $v_{t}ag$, *t,* and *h*. It is given by

$$d(t) = \frac{h}{\cos(\arctan(\frac{v_{tag}t}{h}))}. \qquad (27)$$

WolframAlpha [9] suggests an alternative expression that shows to be equivalent to Eq. (27). It is given by

$$d(t) = h\sqrt{\frac{t^2 v_{tag}^2}{h^2} + 1}. \qquad (28)$$

In the following, this expression is used as it allows a simpler calculation of its first-order derivative. The tag's speed relative to the reader's antenna is not constant any more, but given by

$$v_{tr}(t) = -\frac{\partial d(t)}{\partial t} = -\frac{v_{tag}^2 t}{h\sqrt{\frac{t^2 v_{tag}^2}{h^2} + 1}} \qquad (29)$$

The Doppler shift is then given by

$$f_d(t) = -\frac{2v_{tr}}{c}f_c = -\frac{2f_c}{c}\frac{v_{tag}^2 t}{h\sqrt{\frac{t^2 v_{tag}^2}{h^2}+1}}. \qquad (30)$$

Using Eq. (28) in Eq. (23), we get the channel impulse response which is now given by

$$h(t) = \delta\left(t - \frac{2d}{c}\right) = \delta\left(t - \frac{2h}{c\cos\left(\arctan\left(\frac{v_{tag}t}{h}\right)\right)}\right). \qquad (31)$$

Equivalently to the previous scenario, the convolution of Eq. (31) with x(t) results in the received signal given by

$$y(t) = h(t) * x(t) = \cos\left(2\pi f_0\left(t - \frac{2h}{c\cos\left(\arctan\left(\frac{v_{tag}t}{h}\right)\right)}\right)\right). \qquad (32)$$

### *Comparison of Arrangement 1 and Arrangement 2*

This subsection shows some figures that illustrate the characteristics of the two previously described arrangements. Therefore, a conveyor belt speed of $v = 1$ *m/s* is assumed and it is assumed that the tag is inside the reading range when -10m < $x$ < 10m. In Arrangement 2, the height of the reader's antenna over the conveyor belt is set to $h = 2$ *m*.

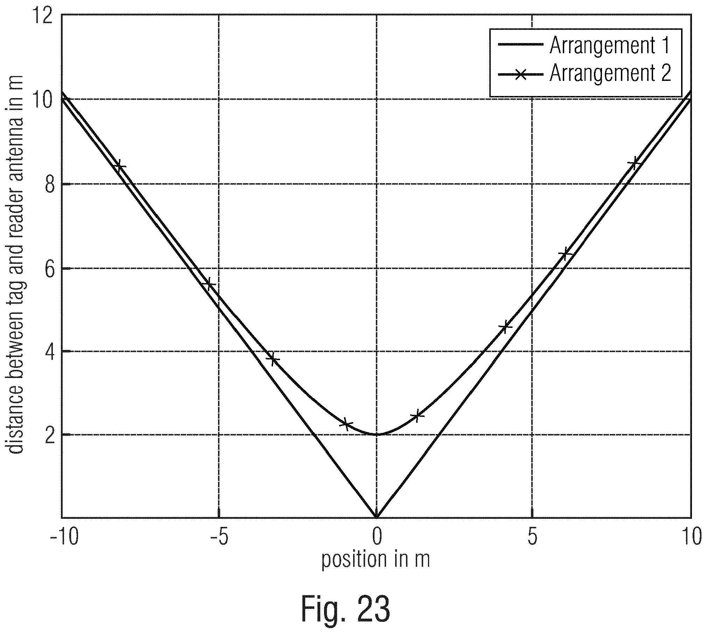

Fig. 23 shows the distance between reader and tag in both arrangements (derived by Eq. (18) and Eq. (28)) as a function of the position on the conveyor belt. In Arrangement 1, the distance is always equal to the absolute value of the position. In Arrangement 2, d approximates the curve from Arrangement 1 if the tag is far away from position 0 m but deviates from it when approaching position 0 m.

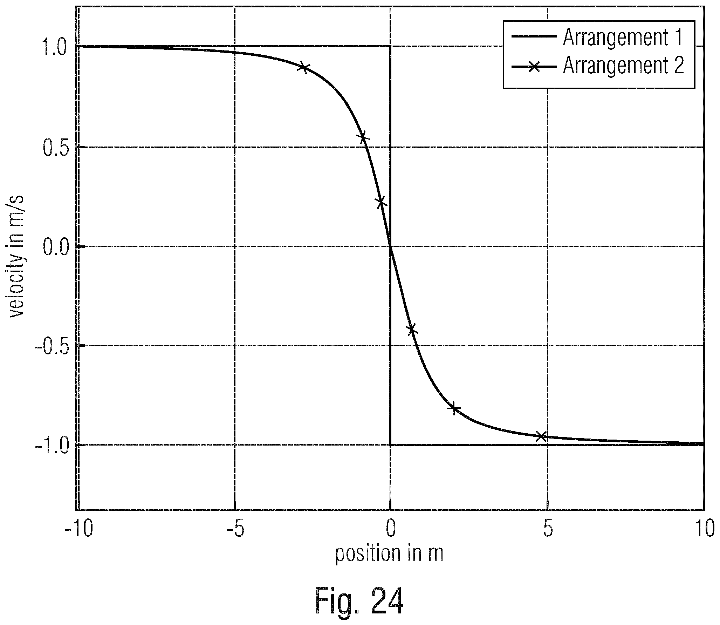

Fig. 24 shows $v_{tr}$ for both arrangements as a function of the position. In arrangement 1, $v_{tr}$ is 1 m/s when the tag is still in front of the antenna (position -10 m... 0 m). Therefore, it is equal to the conveyor belt speed. After it passed the antenna, it is -1 *m/s* (position 0 *m*...10 *m*). In arrangement 2, $v_{tr}$ (like the distance) approximates that of Arrangement 1 for positions far away from position 0 m and deviates from it when approaching position 0 m. The same applies for the Doppler shift which is shown in Fig. 24. It is a linear function of $v_{tr}$ and therefore looks the same with different scale.

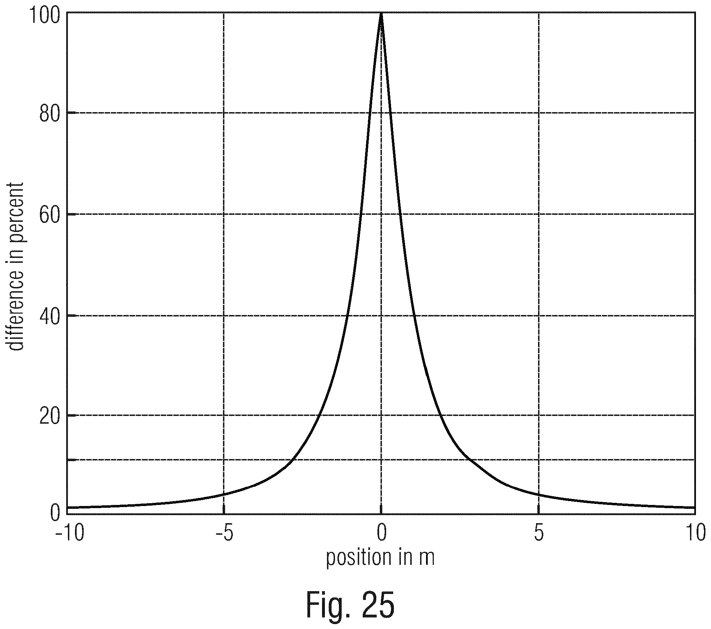

Fig. 25 shows the difference of the relative speed between Arrangement 1 and Arrangement 2. For the following investigations, the system is modeled according to Arrangement 1. While using this, it is very important to keep in mind that this difference exists. Realistic scenarios will always look like that of Arrangement 2. Measuring the tag's speed by its Doppler shift then always leads to a result that differs from the real speed. Fig. 25 shows this difference if reader antenna is placed 2 m away from the conveyor belt.

### Power to Noise Ratio of the Received Tag Replies

The signal strength of responding tags and therefor the $\frac{P_S}{N_0}$ of the received tag responses depend on the effects of path loss and fading. As mentioned before, the path loss is modeled by the Friis Transmission Equation. The Friis Transmission Equation depends on the distance between tag and reader antenna and is given by

$$\frac{P_r}{P_t} = G_t G_r \left(\frac{\lambda}{4\pi R}\right)^2. \qquad (33)$$

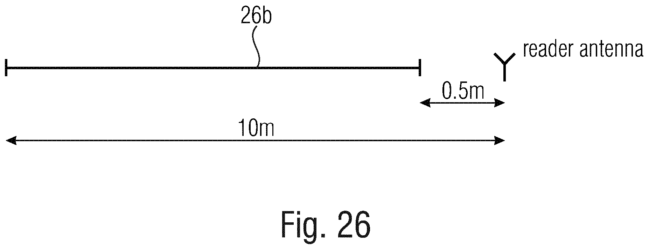

The fading is modeled as Double Rayleigh Fading. Therefore, the $\frac{P_S}{N_0}$ of the received tag responses can be modeled as a random variable. It depends on the fading coefficient, which is a random variable, and the distance between reader and tag. The distance between reader and tag is also random and in the following assumed as equally distributed between [10]m and [0.5]m, as illustrated in Fig. 26.

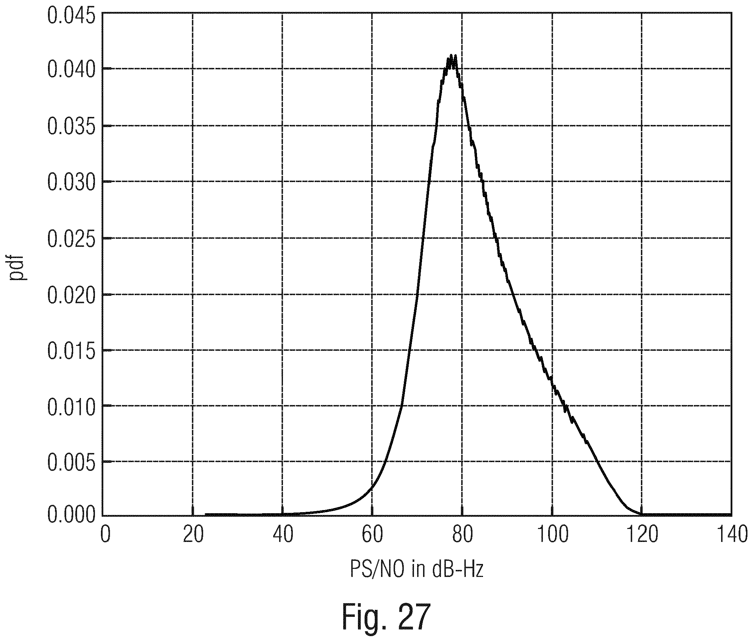

Fig. 27 shows a pdf of the $\frac{P_S}{N_0}$ that has been derived by simulation. In this simulation, $N_0$ was specified as $N_0$ = [-134]*dBm/Hz* and $P_S$ was calculated using

$$P_S = [33]dBm + 2a_p + 2a_f \qquad (34)$$

Here, the output power of the reader was assumed to be *[33]dBm.* The attenuation caused by fading is here denoted by $a_f$. This is modeled as a random variable that is Rayleigh distributed. The attenuation caused by path loss is denoted by $a_p$. This is calculated by Eq. (33). Here, the antenna gain was assumed to be *[6]dB. R* denotes the distance between reader antenna and tag. Therefor, it is modeled by a random variable that is equally distributed between -10 m and -0.5 m (cf. Fig. 26). Considering these random variables, the $\frac{P_S}{N_0}$ has been calculated very often in order to investigate its statistical distribution. Fig. 27 shows the PDF that has been generated during this simulation. In the following investigations it is always assumed that the $\frac{P_S}{N_0}$ is distributed according to Fig. 27.

As one can see, most of the tags have a $\frac{P_S}{N_0}$ between 50 *dB* - Hz and 120 *dB* - Hz while there still are tag replies with less than 20 *dB* - Hz. To design an RFID system that is capable of handling even the weakest tag reply in the deepest possible fade would be at the expense of the overall performance and mean unreasonable effort (especially if the tags are moving). Tags with very weak reply still can be read later during the inventory round when they are not in deep fade anymore. In order to optimize the system for the big majority of tag replies, it is assumed in the following, that the weakest [0.1]% of the tag replies can be neglected. In the mentioned simulation, the $\frac{P_S}{N_0}$ of the weakest considered tag has shown to be 40.65 *dB* - Hz. This will be used as a lower bound for the $\frac{P_S}{N_0}$ of tag replies in the following.

### Antenna Directivity

The reader antenna is assumed to be highly directive and oriented to the approaching tags (to the left side in Fig. 21). This suppresses the receiving of multipaths.

### Achievable Reading Rates for the Reading Algorithms

This section shows curves with theoretically reachable reading rates for the reading algorithms from above section for the presented forklift truck scenario.

### *Optimized BLF*

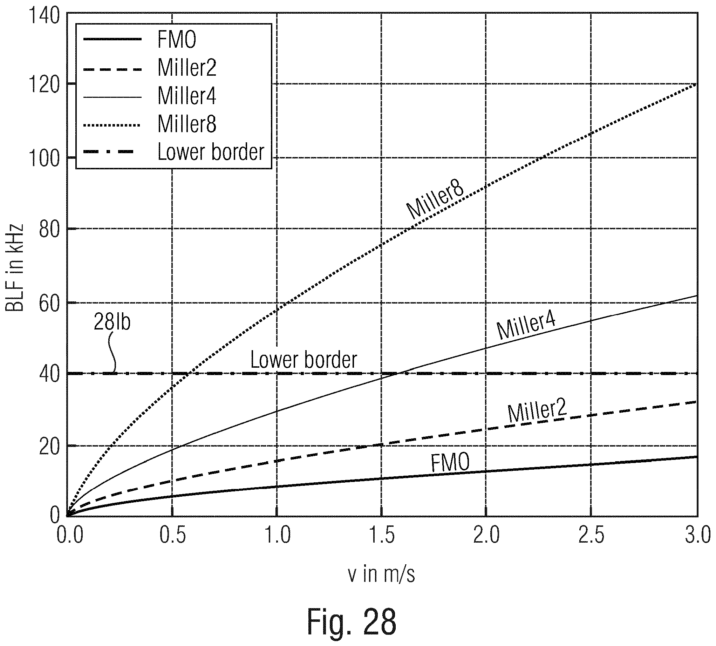

In Fig. 28, the optimal BLF resulting from the calculations is shown. It shows the optimal BLF as a function of the conveyor belt's speed for the four possible data encodings, DR = 8 and $\frac{P_S}{N_0} = 40.65\,dB - \mathrm{Hz}$ (the lower bound for tag replies, c.f. above). The optimal BLF increases with increasing velocity and decreases if a longer data encoding is chosen. Fig. 28 also shows the lowest possible BLF (40 *kHz)* that is allowed by the EPCglobal standard as the dashed line 28lb.

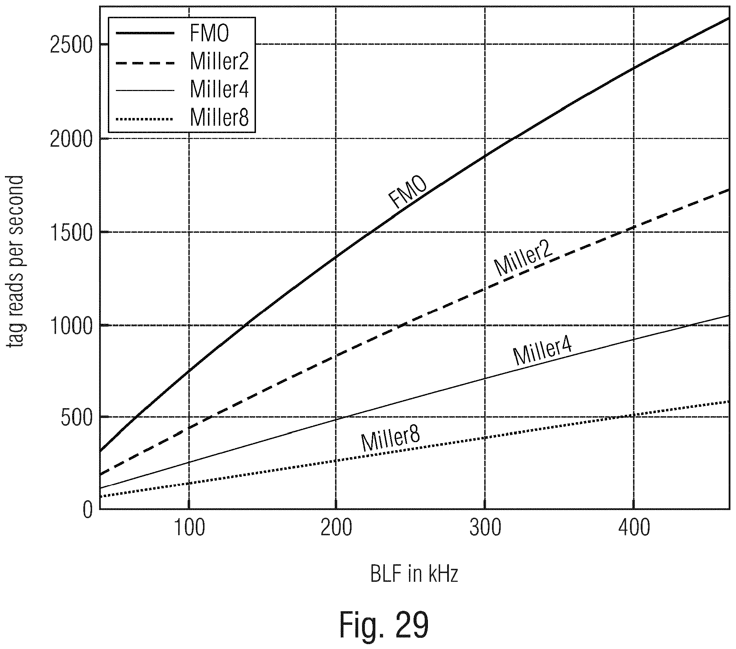

As the goal is to achieve the highest possible reading rate, Fig. 29 shows the achievable reading rate as a function of the chosen BLF, again for $\frac{P_S}{N_0} = 40.65\,dB - \mathrm{Hz}$ and DR = 8. This figure shows that the achievable reading rate increases with increasing BLF and decreases if a longer encoding is chosen. In this figure, the considered range of the BLF is between 40 *kHz* and 465 *kHz,* which is the allowed range of the BLF defined by the EPCglobal standard (c.f. [8, Table 6.9]) for DR=8.

The achievable reading rates are calculated as described in the following. First, the duration of the reader commands, the tag replies and the times between reader commands and tag replies are taken from [8]. The durations of the tag replies (RN16 and EPC code) are calculated for the previously calculated BLF. All the other adjustable specifications are chosen in the way that leads to the shortest tag replies. Based on this, the duration of a successful slot, in the following denoted by $T_{successful}$, and the duration of an unsuccessful time slot, denoted by $T_{unsuccessful}$, are calculated. Therefor, it is assumed that a successful time slot consists of a QueryRep command, an RN16, an ACK command, and an EPC code. An unsuccessful time slot is assumed to consist of a QueryRep command and the duration of one RN16, in which the reader waits for tag replies. The probability of a successful time slot is given by the maximal achievable throughput of frame-slotted ALOHA, $\frac{1}{e}$ [7]. Using this, the average duration of a time slot is given by

$$T_{average} = \frac{1}{e}T_{successful} + \left(1 - \frac{1}{e}\right)T_{unsuccessful} \qquad (35)$$

Finally, the reading rate is given by $\frac{1}{T_{average}}$. The Select and Query command at the beginning of the inventory round are neglected here.

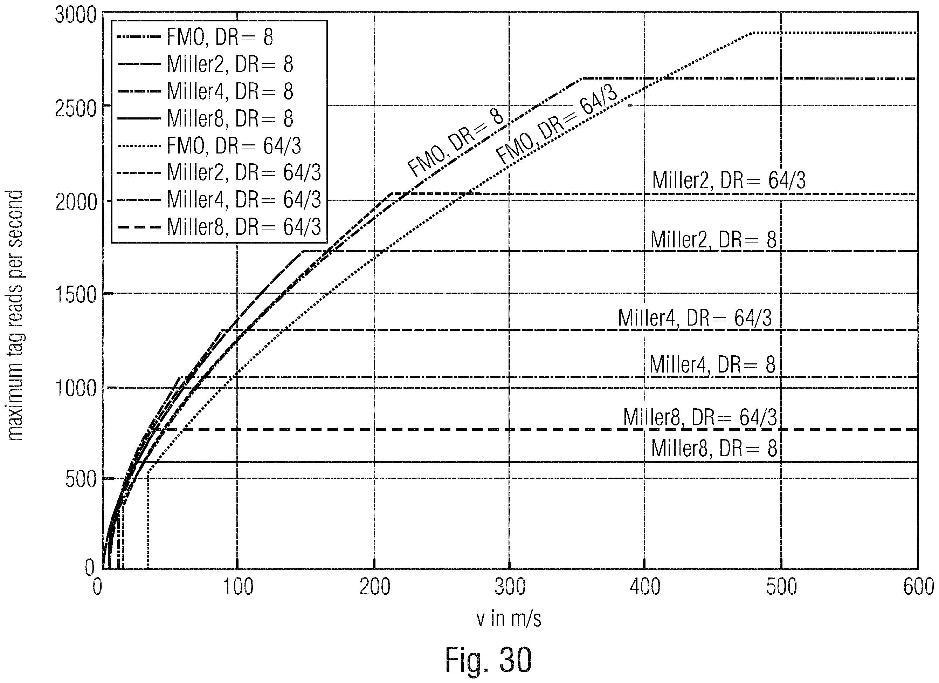

Figure 30: This figure shows the achievable reading rate of Optimized BLF for different encodings for $\frac{P_S}{N_0} = 40.65 \, dB - \text{Hz}$. The reading rate increases with increasing v for every encoding and *DR* as the optimal BLF increases with increasing v. The reading rates, therefore, increase until they reach the point where the highest allowed *BLF* according tho the standard is reached. Then, the optimal BLF cannot be increased anymore which means that also the achievable reading rate cannot be increased any more.

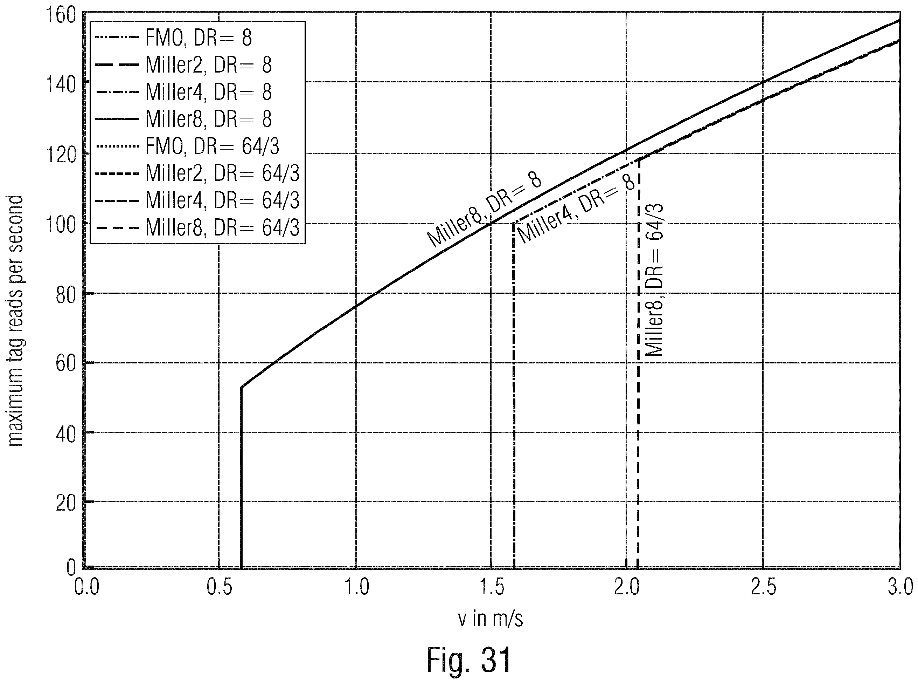

Fig. 30 shows the 8 curves for the lower bound of $\frac{P_S}{N_0} = 40.65 \, dB - \text{Hz}$. In this figure, the curves are shown for unrealistically high speeds in order to demonstrate that different encodings and DRs lead to the best reading rate for different speed ranges. However, if we assume $\frac{P_S}{N_0} = 40.65 \, dB - \text{Hz}$ and realistic conveyor belt speeds, the optimal choice is always FM0 coding and DR=8. As we can seen in Fig. 31, this choice leads to the best reading rate for small speeds. Further, Fig. 31 shows that Optimized BLF is limited to a minimum speed of about 0.58 m/s. For this speed, the minimum BLF of 40 *kHz* is reached (c.f. Fig. 28). The lowest BLF leads to the longest tag response and there is no possibility to further expand the tag signal. As lower conveyor belt speeds result in longer tag responses for reliable movement detection, Optimized BLF is limited to a minimum speed of 0.58 m/s for $\frac{P_S}{N_0} =$ 40.65 *dB* - Hz.

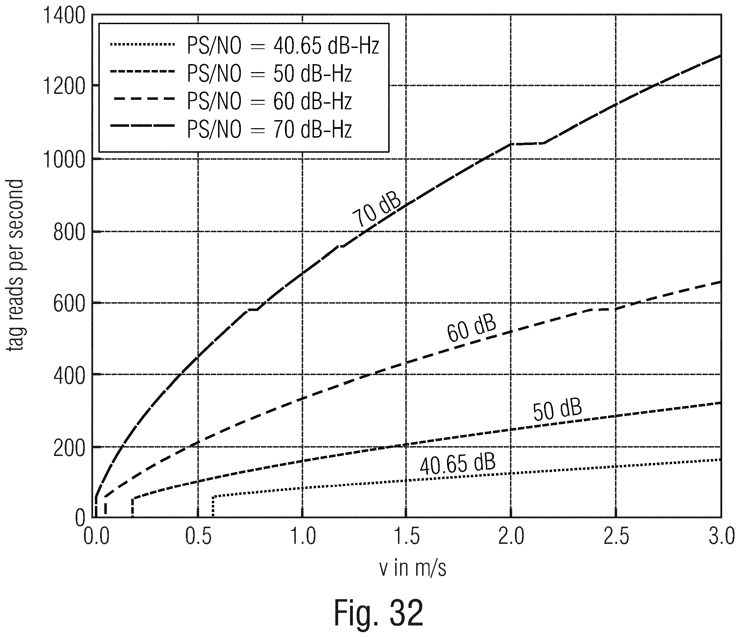

It is worth noting here, that the performance of the reading strategy would increase if the lower bound for the $\frac{P_S}{N_0}$ of weakest tag reply is chosen higher than 40.65 *dB* - Hz. Fig. 32 shows the achievable reading rates for higher $\frac{P_S}{N_0}$ thresholds. It shows that the tag reads per second increase with the $\frac{P_S}{N_0}$ thresholds and that the minimum conveyor belt velocity decreases with the $\frac{P_S}{N_0}$ thresholds. This is not very helpful as the weaker tags could not be estimated any more. But it shows that a lot of potential is wasted in this reading strategy because strong tag responses are extended in the same way as very weak tag responses although it would not be necessary. This problem is tackled with the reading strategy Multiple EPC in the following subsection.

On the other hand, it is to note that this strategy is easy to implement in practice. The optimal BLF is calculated once at the beginning. Then, after adjusting BLF and encoding the communication between reader and tags does not have to be influenced any more as long as the conveyor belt speed is not changed. This allows an implementation of this reading strategy on available commercial RFID readers.

### Multiple EPC

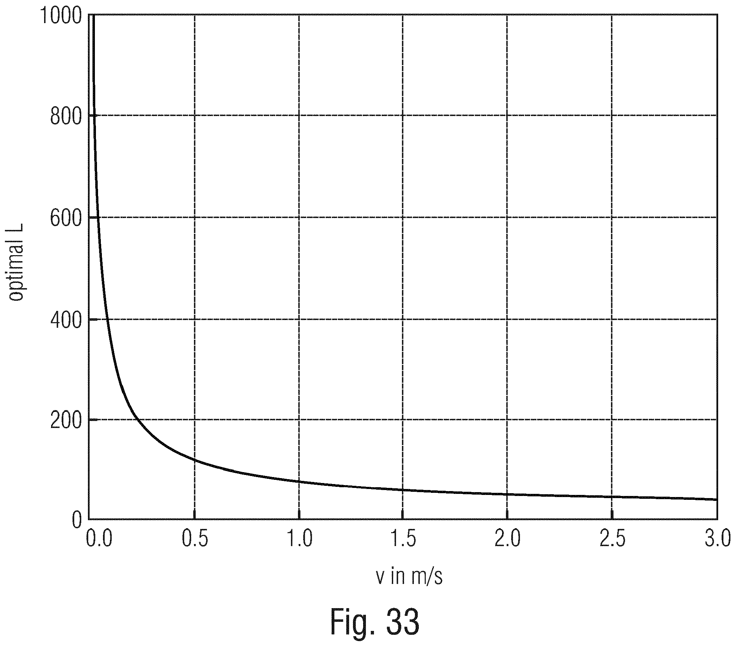

Fig. 33 optimal number of EPC readouts as a function of the conveyor belt velocity v. It shows, that the number of necessary EPC readouts strongly increases with decreasing conveyor belt velocities since lower velocities result in a more precise frequency estimation.

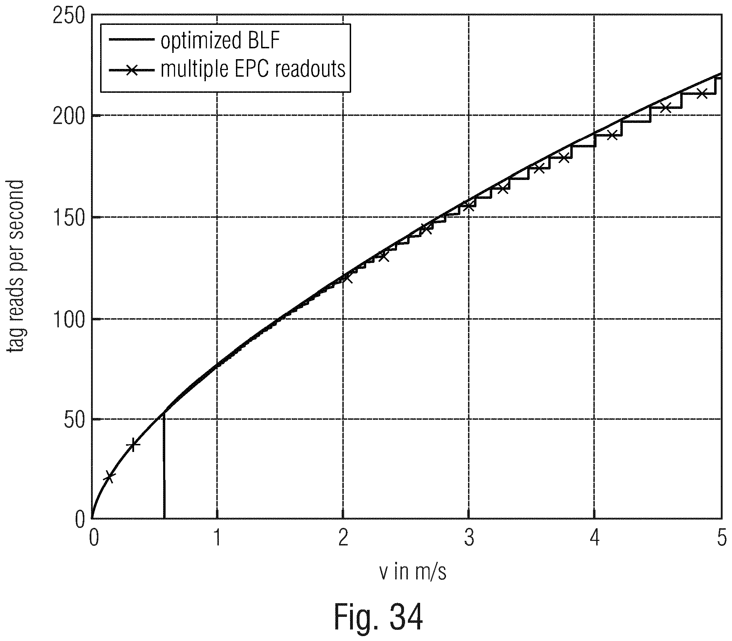

Fig. 34 shows a curve of the maximum achievable reading rate of Optimized BLF and Multiple EPC. Here, it is assumed that all the tags are read out with the number of EPC readouts optimized for tag responses with

$$\frac{P_S}{N_0} = 40.65 \, dB - Hz.$$

Then, the achievable reading rates of both strategies are similar. The two differences are that Multiple EPC also works for v < 0.58 m/s and that the reading rate of Multiple EPC increases in steps. The reading rate of Multiple EPC increases in steps as getting one step higher means that one EPC readout less is required at that point which increases the reading rate about one step.

However, the big advantage of Multiple EPC is that every tag reply can be treated individually with the number of EPC readouts optimized for its $\frac{P_S}{N_0}$ . This increases the achievable reading rate significantly.

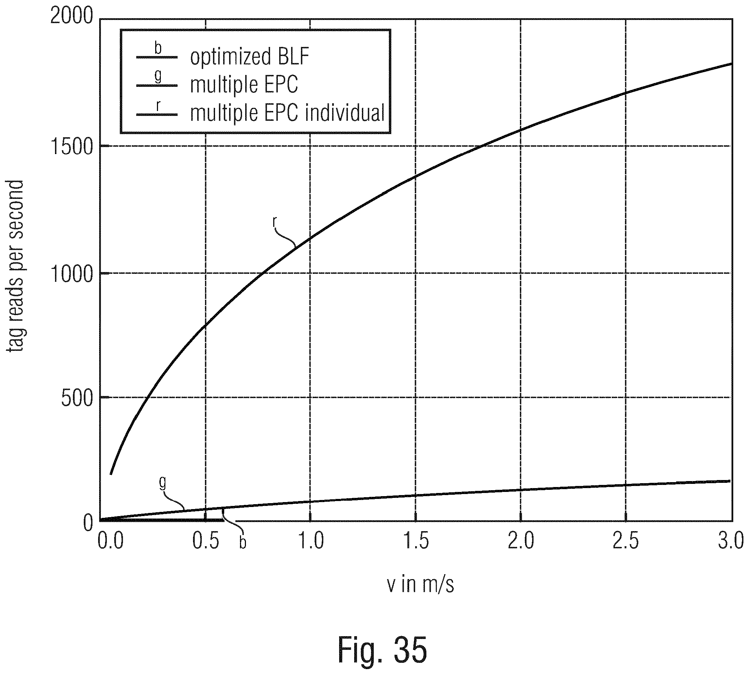

Fig. 35 shows the reading rate that can be achieved if each tag reply is treated individually. This reading rate has been determined by a simulation where the distribution of the $\frac{P_S}{N_0}$ of the received tag replies have been chosen as shown in Fig. 27. The big advantage of treating each tag individually is that most of the tag responses are very strong and therefore use few EPC readouts.

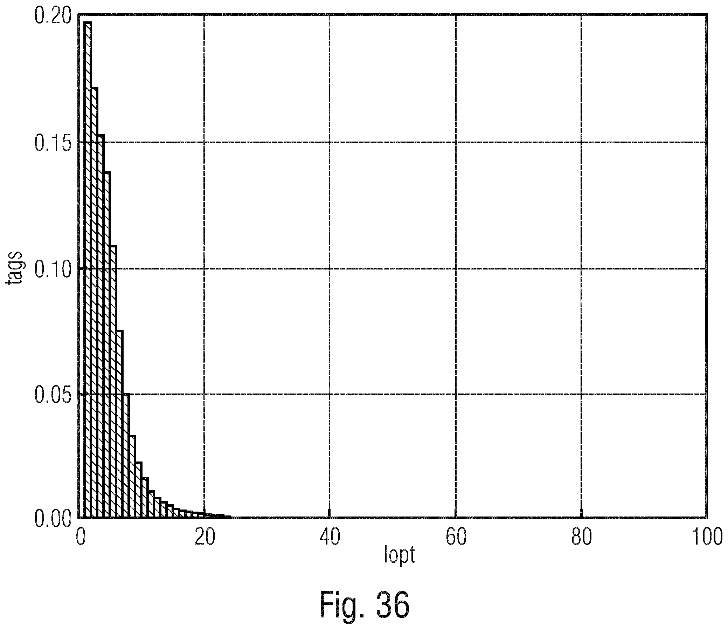

Fig. 36 shows a histogram of the number of necessary EPC readouts in the mentioned simulation. It shows that most tag responses use less than 10 EPC readouts and almost 20% need only one EPC readout.

### *Multiple Readout Select*

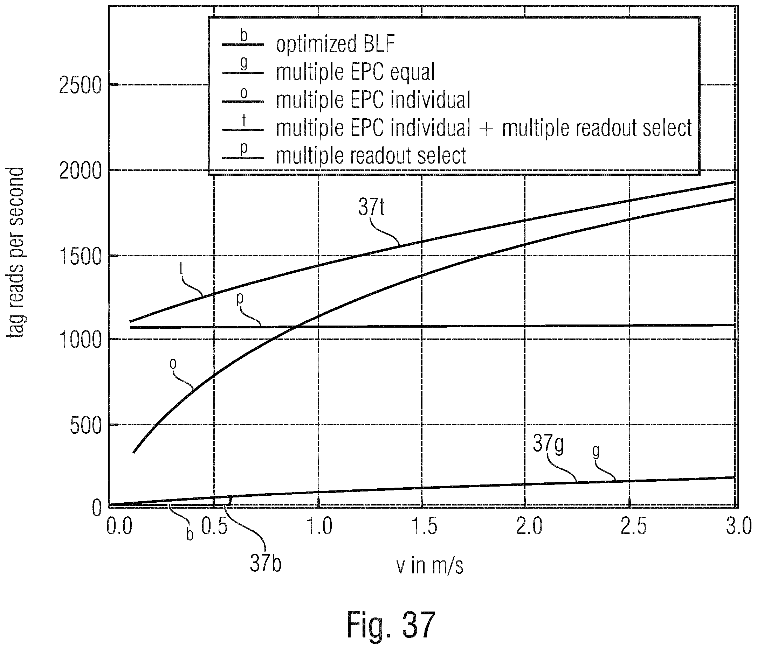

In contrast to those of the previous reading strategies, the achievable reading rate of Multiple Readout Select does not depend on the conveyor belt speed. A higher speed leads to longer pauses between the readouts. Thanks to the nested readouts this then allows to read with a high reading rate even for very slow speeds. The achievable reading rate is shown in Fig. 37 in the following subsection where it is compared to the other reading strategies.

### *Combining Multiple EPC and Multiple Readout Select*

One possibility to further optimize the readouts is to combine two reading strategies. Multiple EPC with individually treated tag readouts is the most favorable reading strategy for strong tag replies. However, reading weak tags with weak strength takes very long with Multiple EPC. Here, the reading strategy Multiple Readout Select leads to the best result. Therefore both can be combined which means that strong tag replies are read during the inventory round according to the Multiple EPC strategy. Weak tags are only inventoried during the first inventory round. For movement detection, they are read out again later according to the strategy Multiple Readout Select.

Fig. 37 finally shows the achievable reading rates of all reading strategies as a function of the conveyor belt speed, v. It shows that the achievable reading rate increases with v for all reading strategies except Multiple Readout Select. Multiple EPC with individual treatment of each tag (red curve) and Multiple Readout Select (violet curve) achieve much higher reading rates than Optimized BLF (dark blue curve 37b) and Multiple EPC with equal treatment of each tag (37g curve). The best reading rate (light blue curve 37t) can be achieved by combining Multiple EPC and Multiple Readout Select as described above. This curve approximates to that of Multiple Readout Select for slow v and to that of Multiple EPC for high v.

### Scenario 2: Forklift Truck at Entrance Gate

This scenario models a forklift truck that passes through an entrance gate. It has goods on its forklift that are equipped with RFID tags. The goal is to find a way to determine whether a tag response received by the reader antenna belongs to a tag attached to a good on the forklift truck or not. The second goal is to determine whether the forklift truck enters the gate or passes by the gate. For simplicity, two assumptions about the movement of the passing forklift truck are done in the following work:

- The forklift truck moves with constant speed and does not stop.
- The forklift truck moves along a straight line and never changes direction.

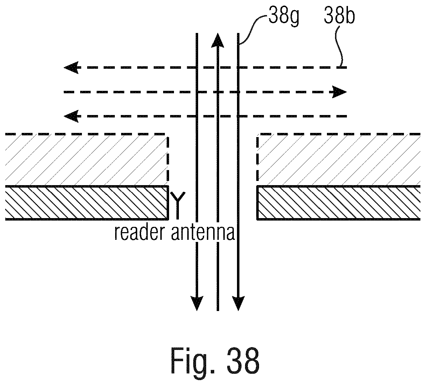

Further, it is assumed that the reader antenna is omni-directional and placed at the entrance gate as illustrated in Fig. 38. This figure also depicts the paths the forklift truck can take while entering or leaving the gate (arrows 38g) or while passing by the gate (arrows 38b). It is further assumed that the forklift truck always keeps a certain minimum distance to the wall when not entering or leaving the gate. In factory buildings or logistic centers, there are often shelves or other obstacles next to the walls that force the forklift truck drivers to keep a certain distance to the wall. The space next to the wall that is assumed to be avoided is depicted as the lighter grey area in Fig. 38. It can be assumed that the forklift trucks that pass by the gate always pass the reader antenna with a larger distance than the forklift trucks that enter or leave the gate.

This allows a determination of whether the forklift truck passed by the gate or passed through the gate by the distance with which it passed the reader antenna. This is possible if, for example, the gate is [3]m wide and the minimal distance for passing by the gate is a similar distance. The forklift has to pass the reader antenna with [3]m minus (half of) the width of the forklift truck minus some safety distance the driver keeps to the edge of the gate. If it is possible to measure that the forklift truck passed by the reader antenna with a bigger distance, it can be said for sure that it passed by the gate. If it passed by the reader with a distance equal or smaller, then it must have either entered or left the gate. Although it might be possible to make a rough estimation of the distance by the strength of the received reflections of the forklift, a different approach is persued in this work. It is explained in the following.

If all the reflections from obstacles are measured and tracked constantly, the distance can be measured by the curve of the Doppler shift.

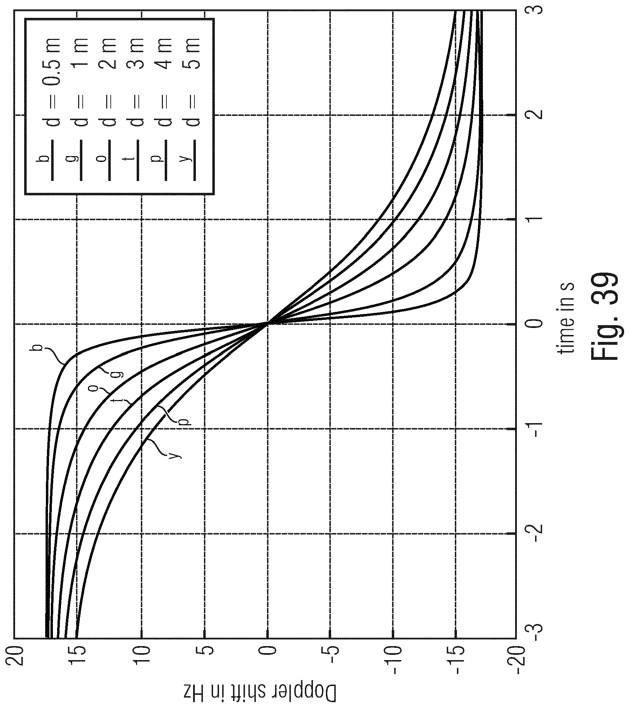

Fig. 39 shows the curves of the Doppler shifts of a punctiform obstacle that passes by the reader antenna with different distances. The curves are similar to Scenario 1 with Antenna Arrangement 2 and generated using Eq. (20). It shows that the curves are distinguishable (despite having the same velocity). In practice, the will look little bit different as a forklift truck is not punctiform. But the reflections will be very strong which will enable a very precise measurement of the curves of the Doppler shift. A suitable technique to determine whether the forklift truck passed by or through the gate that is based on the Doppler curve will be proposed in beollow subsection.

Fig. 39 further shows that the curves experience a floor point for $t \rightarrow -\infty$ and $t \rightarrow \infty$. In this case, the floor points are -18 *Hz* and 18 Hz, respectively. They correspond to the Doppler shift of obstacles that are moving with a velocity of 3 *m/s*. These floor points show that a reliable measurement of the velocity of the forklift truck by the Doppler shift curve is possible. With help of the below descibed methods, this will be exploited in order to estimate whether a tag is placed on the forklift truck or not.

### The Modified Cramer-Rao Bounds

This chapter provides some MCRBs. The MCRB is a tool that provides a lower bound for the theoretically achievable estimation variance for a given signal.

### Frequency Estimation with One Tag Response

The simplest approach is to measure the Doppler shift of a signal is to take one single tag response and measure its frequency. Using [3, Eq. 25], the MCRB for this approach yields

$$MCRB(v)_1 = \frac{3}{2\pi^2 (LT_S)^3} \frac{N_0}{P_S}. \qquad (36)$$

Here, $N_0$ denotes the one-sided noise power spectral density, $P_S$ the received signal power, $L$ the length of the tag response (in symbols) and $T_S$ the symbol duration.

Eq. (36) shows that the best achievable variance decreases with increasing length of the signal by the power of 3. Therefore, the main finding for the later following reading strategies is that the tag replies should be as long as possible in order to achieve a precise Doppler shift estimation.

### Frequency Estimation with Two Tag Responses

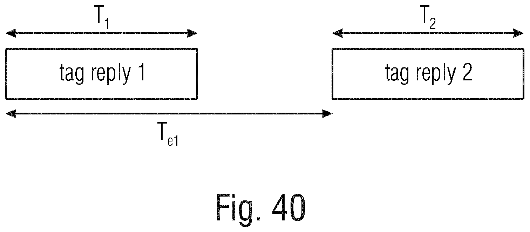

This subsection provides the MCRB for two received signals with a pause in between, as depicted in Fig. 40.

Here, the timing is defined by the following variables:

- $T_1$: Length of the first tag response
- $T_2$: Length of the second response
- $T_{e1}$: Time between start of two tag responses (from start of the first response to start of the second)

The MCRB for a frequency estimation using a signal as shown in Fig. 40 is given by

$$MCRB_2(v) = \frac{1}{2\pi^2\left(\frac{1}{3}(T_1+T_2)^3 - \frac{4T_1T_2(T_1-T_{e1})(T_2+T_{e1})}{T_1+T_2}\right)}\frac{N_0}{P_S}. \quad (37)$$

*Proof.* The proof of Eq. (37) is given below.

If the two tag replies have the same length (i.e. $T_1 = T_2 = T_N$), Eq. (56) simplifies to

$$MCRB_2(v)_{T_1=T_2=T_N} = \frac{1}{4\pi^2\left(\frac{1}{3}T_N^3 + T_N T_{est}^2\right)}\frac{N_0}{P_S} \quad (38)$$

The main finding of Eq. (37) and Eq. (38) is that the achievable estimation variance strongly increases with the length of the pause between the two signals. Therefore, if a reading strategy results in two tag replies, the pause between both tag replies should be chosen as long as possible in order to achieve a precise Doppler shift estimation.

**Frequency Estimation with Three Tag Responses**

This subsection provides the MCRB for three received signals. As illustrated in Fig. 40, the timing is defined by the following variables:

- $T_1$: Length of the first tag reply
- $T_2$: Length of the second tag reply
- $T_3$: Length of the third tag reply
- $T_{e1}$: Time between first and second tag reply (from start of the first reply to start of the second reply)
- $T_{e2}$: Time between second and third tag reply (also from start to start)

The MCRB for this case is given by

$$MCRB_3(v) = \frac{3(T_1+T_2+T_3)}{2\pi^2 C_{MRLB_3}}\frac{N_0}{P_S} \quad (39)$$

with

$$C_{MRLB_3} = T_1^4 + T_2^4 + 4T_2^3 T_3 + T_3^4 + 4T_1^3(T_2 + T_3) - 6T_2^2 T_3(T_3 + 2T_{e2})$$

$$+4T_2 T_3(T_3^2 + 3T_3 T_{e2} + 3T_{e2}^2) - 6T_1^2(T_2^2 + 2T_2 T_{e1} + T_3(T_3 + 2(T_{e1} + T_{e2})))$$

$$+4T_1(T_2^3 + 3T_2^2 T_{e1} + 3T_2 T_{e1}^2 + T_3(T_3^2 + 3T_3(T_{e1} + T_{e2}) + 3(T_{e1} + T_{e2})^2))$$

$$(40)$$

*Proof.* The proof of Eq. (39) and Eq. (40) is given below.

**Modified Cramer-Rao Bound for the Reading Strategy Multiple EPC**

Another MCRB has been derived for the reading strategy Multiple EPC. The derivation is given below.

**Notes**

The length of one symbol of a tag reply is given by $T = \frac{1}{BLF}$. The BLF is a variable that is specified by the reader in order to specify the tag's symbol duration. In addition, the length also depends on the encoding of the tag signal. In this work, the FM0 encoding is chosen by default. However, this is not the case for the reading strategy Optimized BLF. Here, it is considered, that the length of a tag symbol is multiplied with factor two for Miller-2 encoding, with factor 4 for Miller-4 encoding and with factor 8 for Miller-8 encoding.

Further it is to note that the MCRB does not consider the following effects which affect the performance of the frequency estimation in the application scenarios of this thesis:

- Modulation loss
- Ambiguities
- Reflections

The modulation loss and the algorithm for suppression of the reflections both lead to a loss of estimation performance of [3]dB. These two [3]dB performance losses always have to be considered when utilizing the MCRB.

## Modulation Loss

The MCRBs that have been derived in the previous section refer to constantly transmitted signals of the length a considered tag reply. However, the tag does not send a constant signal during a tag reply due to the modulation of its data. The transmitted data is encoded by either FM0 or Miller encoding. These encoding schemes have the property that the tag in average reflects the CW during one half of the time of a tag reply and is quiet during one half of the tag reply. This means that the precision of the frequency estimation is reduced. The estimation variance will be the same as if the tag would constantly reflect while reducing the reflected power by factor two. The derived MCRBs all linearly depend on the received power, $P_S$. Therefore, the modulation doubles the estimation variance. In the following work this is considered as a 3 *dB* modulation loss that occurs due to the tag's data modulation.

## Ambiguities

The MCRB does not consider the effect of ambiguities that will occur if several tag responses are utilized for frequency estimation with long pauses between consecutive tag replies.

To retrace this, consider two very short tag replies with a long pause in between. The replies are very short compared to the change of the phase caused by the Doppler shift that is estimated. Then, the phase of the received signal is approximately constant during one tag reply. The two tag replies therefore provide two measurements of the phase. The Doppler shift is then estimated by the change of the phase between the two tag replies. If, for example, the length of the pause is $\frac{1}{f_d}$ , a problem occurs. In this case, the change of the phase during the pause is $2\pi$ and both tag replies therefore have the same phase. Then, it is not possible to exactly determine the Doppler shift even if the MCRB predicts a good achievable precision of the frequency estimation. The phase of both tag replies is the same and there is no possibility to determine if the phase changed about $2\pi$ during the pause of about $4\pi$ or not at all. The result of the Doppler shift would be ambiguous as several solutions are possible. The MCRB only predicts the precision with which one of this solution can be determined but you still do not know which of them is the correct solution.

Reading strategies are proposed that organize the communication between reader and tag. One possibility is to organize it in a way that a tag responds twice with a certain pause in between. in order to avoid ambiguities in the Doppler shift estimation, the length of the pause should not be longer than

$$\Delta t = \frac{1}{2f_d}. \qquad (41)$$

In this equation, $f_d$ denotes the expected maximum possible Doppler shift. In the conveyor belt scenario this can, for example, be calculated using Eq. (20). If the length of the pause is chosen according to Eq. (41), the expected phase shift between the two tag replies is $\pi$ which allows a good estimation of the Doppler shift.

## Derivation of the Modified Cramer-Rao Bounds

This chapter provides the derivations of the MCRBs. First, the MCRB for the case of three tag replies (Eq. (39)) is derived. Then, the derivation of the MCRB for the case of two tag replies follows by simplifying Eq. (39). Finally, the MCRB for tag replies according to the reading strategy Multiple EPC is derived. The derivations are done basing on [3] and [6].

## Derivation of MCRB$_3$

In [3, Eqs. (16) and (17)], the MCRB is given by

$$MCRB_2(\nu) = \frac{\frac{N_0}{2}}{E_U\{4\pi^2 \int_{T_0}(t-t_0)^2|m(t)|dt\}}, \quad (42)$$

which, using [6, Eq. (13)], simplifies to

$$MCRB_2(\nu) = \frac{\frac{N_0}{2}}{4\pi^2 P_S \int_{T_0}(t-t_0)^2 dt}. \quad (43)$$

Here, $N_0$ denotes the one-sided noise power spectral density and $P_S$ the received power.

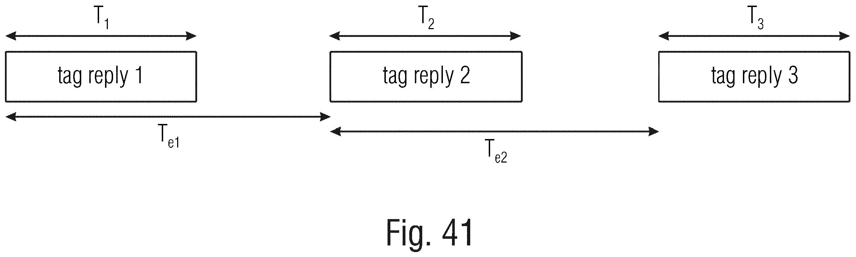

Now, let us assume three packets of lengths $T_1$, $T_2$ and $T_3$ as illustrated in Fig. 41. They are received with time differences $T_{e1}$ and $T_{e2}$ ($T_{ei}$ is the time from the start of packet $i$ to the start of the packet $i + 1$). Then, we can calculate:

$$\int_{T_0}(t-t_0)^2 dt = \underbrace{\int_0^{T_1}(t-t_0)^2 dt}_{A} + \underbrace{\int_{T_{e1}}^{T_{e1}+T_2}(t-t_0)^2 dt}_{B} +$$

$$\underbrace{\int_{T_{e1}+T_{e2}}^{T_{e1}+T_{e2}+T_3}(t-t_0)^2 dt}_{C}. \quad (44)$$

In order to avoid too long expressions, part $A$, $B$, and $C$ are calculated separately which yields

$$A = t_0^2 T_1 - t_0 T_1^2 + \frac{T_1^3}{3}, \quad (45)$$

$$B = t_0^2 T_2 - t_0 T_2^2 + \frac{T_2^3}{3} - 2t_0 T_2 T_{e1} + T_2^2 T_{e1} + T_2 T_{e1}^2, \quad (46)$$

and

$$C = t_0^2 T_3 - t_0 T_3^2 + \frac{T_3^3}{3} - 2t_0 T_3 T_{e1} + T_3^2 T_{e1} + T_3 T_{e1}^2 - 2t_0 T_3 T_{e2}$$

$$+ T_3^2 T_{e2} + 2T_3 T_{e1} T_{e2} + T_3 T_{e2}^2$$

$$= t_0^2 - t_0\left(T_3^2 + 2(T_{e1} + T_{e2})\right) + \frac{T_3^3}{3} + T_3^2(T_{e1} + T_{e2}) + T_3(T_{e1} + T_{e2})^2. \quad (47)$$

Adding these yields

$$\int_{T_0}(t-t_0)^2 dt = A + B + C$$

$$= t_0^2 T_1 - t_0 T_1^2 + \frac{T_1^3}{3} + t_0^2 T_2 - t_0 T_2^2 + \frac{T_2^3}{3} + t_0^2 T_3 - t_0 T_3^2 + \frac{T_3^3}{3} - 2t_0 T_2 T_{e1} + T_2^2 T_{e1}$$

$$- 2t_0 T_3 T_{e1} + T_3^2 T_{e1} + T_2 T_{e1}^2 + T_3 T_{e1}^2 - 2t_0 T_3 T_{e2} + T_3^2 T_{e2} + 2T_3 T_{e1} T_{e2} + T_3 T_{e2}^2$$

$$= t_0^2(T_1 + T_2 + T_3) + \frac{1}{3}(T_1^3 + T_2^3 + T_3^3) + (T_2^2 + T_3^2)T_{e1} + (T_2 + T_3)T_{e1}^2 +$$

$$T_3^2 T_{e2}$$

$$+ 2T_3 T_{e1} T_{e2} + T_3 T_{e2}^2 + t_0(-T_1^2 - T_2^2 - T_3^2 - 2(T_2 + T_3)T_{e1} - 2T_3 T_{e2}). \quad (48)$$

To find the minimum possible variance (MCRB), Eq. (48) is minimized with respect to $t_0$. Therefore, we search for the zero of the first-order derivative with respect to $t_0$. This yields

$$\frac{d\int_{T_0}(t-t_0)^2 dt}{dt_0} = t_0(T_1 + T_2 + T_3) - T_1^2 - T_2^2 - T_3^2 - 2(T_2 + T_3)T_{e1} - 2T_3 T_{e2},$$

$$(49)$$

which is zero for

$$t_0 = \frac{T_1^2 + T_2^2 + T_3^2 + 2(T_2+T_3)T_{e1} + 2T_3 T_{e2}}{2(T_1+T_2+T_3)}. \qquad (50)$$

Using Eq. (50) in Eq. (48) yields

$$\int_{T_0}(t-t_0)^2 dt = -\frac{\left(T_1^2+T_2^2+T_3^2+2(T_2+T_3)T_{e1}+2T_3 T_{e2}\right)^2}{4(T_1+T_2+T_3)} + \frac{1}{3}(T_1^3+T_2^3+T_3^3)$$

$$+ (T_2^2+T_3^2)T_{e1} + (T_2+T_3)T_{e1}^2 + T_3^2 T_{e2} + 2T_3 T_{e1}T_{e2} + T_3 T_{e2}^2$$

$$= \frac{1}{3}(T_1^3+T_2^3+T_3^3) + (T_2^2+T_3^2)T_{e1} + (T_2+T_3)T_{e1}^2 + T_3^2 T_{e2} + 2T_3 T_{e1}T_{e2} + T_3 T_{e2}^2$$

$$+ \frac{1}{2(T_1+T_2+T_3)}(-T_1^2-T_2^2-T_3^2-2(T_2+T_3)T_{e1}-2T_3 T_{e2})$$

$$(T_1^2+T_2^2+T_3^2+2(T_2+T_3)T_{e1}+2T_3 T_{e2}) + \frac{\left(T_1^2+T_2^2+T_3^2+2(T_2+T_3)T_{e1}+2T_3 T_{e2}\right)^2}{4(T_1+T_2+T_3)}$$

$$= \frac{T_1^3}{3} + \frac{T_2^3}{3} + \frac{T_3^3}{3} - \frac{T_1^4}{4(T_1+T_2+T_3)} - \frac{T_1^2 T_2^2}{2(T_1+T_2+T_3)} - \frac{T_2^4}{4(T_1+T_2+T_3)} - \frac{T_1^2 T_3^2}{2(T_1+T_2+T_3)}$$

$$- \frac{T_2^2 T_3^2}{2(T_1+T_2+T_3)} - \frac{T_3^4}{4(T_1+T_2+T_3)} + T_2^2 T_{e1} + T_3^2 T_{e1} - \frac{T_1^2 T_2 T_{e1}}{T_1+T_2+T_3} - \frac{T_2^3 T_{e1}}{T_1+T_2+T_3}$$

$$- \frac{T_1^2 T_3 T_{e1}}{T_1+T_2+T_3} - \frac{T_2^2 T_3 T_{e1}}{T_1+T_2+T_3} - \frac{T_2 T_3^2 T_{e1}}{T_1+T_2+T_3} - \frac{T_3^3 T_{e1}}{T_1+T_2+T_3} + T_2 T_{e1}^2 + T_3 T_{e1}^2$$

$$- \frac{T_2^2 T_{e1}^2}{T_1+T_2+T_3} - \frac{2T_2 T_3 T_{e1}^2}{T_1+T_2+T_3} - \frac{T_3^2 T_{e1}^2}{T_1+T_2+T_3} + T_3^2 T_{e2} - \frac{T_1^2 T_3 T_{e2}}{T_1+T_2+T_3} - \frac{T_2^2 T_3 T_{e2}}{T_1+T_2+T_3}$$

$$- \frac{T_3^3 T_{e2}}{T_1+T_2+T_3} + 2T_3 T_{e1}T_{e2} - \frac{2T_2 T_3 T_{e1}T_{e2}}{T_1+T_2+T_3} - \frac{2T_3^2 T_{e1}T_{e2}}{T_1+T_2+T_3} + T_3 T_{e2}^2 - \frac{T_3^2 T_{e2}^2}{T_1+T_2+T_3}$$

$$= \frac{1}{12(T_1+T_2+T_3)}(T_1^4 + T_2^4 + 4T_2^3 T_3 + T_3^4 + 4T_1^3(T_2+T_3) - 6T_2^2 T_3(T_3 + 2T_{e2})$$

$$+ 4T_2 T_3(T_3^2 + 3T_3 T_{e2} + 3T_{e2}^2) - 6T_1^2(T_2^2 + 2T_2 T_{e1} + T_3(T_3 + 2(T_{e1} + T_{e2})))$$

$$+ 4T_1(T_2^3 + 3T_2^2 T_{e1} + 3T_2 T_{e1}^2 + T_3(T_3^2 + 3T_3(T_{e1}+T_{e2}) + 3(T_{e1}+T_{e2})^2)))$$

$$= \frac{C_{MRLB_3}}{12(T_1+T_2+T_3)} \qquad (51)$$

with

$$C_{MRLB_3} = T_1^4 + T_2^4 + 4T_2^3 T_3 + T_3^4 + 4T_1^3(T_2 + T_3) - 6T_2^2 T_3(T_3 + 2T_{e2})$$

$$+4T_2 T_3(T_3^2 + 3T_3 T_{e2} + 3T_{e2}^2) - 6T_1^2(T_2^2 + 2T_2 T_{e1} + T_3(T_3 + 2(T_{e1} + T_{e2})))$$

$$+4T_1(T_2^3 + 3T_2^2 T_{e1} + 3T_2 T_{e1}^2 + T_3(T_3^2 + 3T_3(T_{e1} + T_{e2}) + 3(T_{e1} + T_{e2})^2))$$

$$= T_1^2 + T_2^2 + T_3^2 + 4(T_1^2 T_2 + T_1 T_2^2 + T_1^2 T_3 + T_1 T_3^2 + T_2^2 T_3 + T_2 T_3^2)$$

$$-6(T_1^2 T_2^2 + T_1^2 T_3^2 + T_2^2 T_3^2) + 12T_{e2} T_3(T_1(T_3 - T_1) + T_2(T_3 - T_2))$$

$$+12T_{e1} T_1(T_2(T_1 - T_2) + T_3(T_1 - T_3)) + 12T_{e2}^2 T_3(T_1 + T_2) + T_{e1}^2 T_1(T_2 + T_3)$$

$$+24T_{e1} T_{e2} T_1 T_3$$

$$= T_1^2 + T_2^2 + T_3^2 + 4(T_1^2 T_2 + T_1 T_2^2 + T_1^2 T_3 + T_1 T_3^2 + T_2^2 T_3 + T_2 T_3^2)$$

$$-6(T_1^2 T_2^2 + T_1^2 T_3^2 + T_2^2 T_3^2) + 12T_{e1}(-T_1^2 T_3 + T_1 T_2^2 + T_1 T_3^2 - T_1^2 T_2)$$

$$+12T_{e2} T_3(-T_2^2 T_3 + T_2 T_3^2 - T_1^2 T_3 + T_1 T_3^2) + 12T_{e1}^2(T_1 T_2 + T_1 T_3)$$

$$+12T_{e2}^2(T_2 T_3 + T_1 T_3) + 24T_{e1} T_{e2} T_1 T_3$$

$$= (T_1 + T_2 + T_3)^4$$

$$+12T_1 T_3((T_1 - T_3)(T_{e1} - T_{e2}) + (T_{e1} + T_{e2})^2 - T_1 T_3 - T_2(T_1 + T_2 + T_3))$$

$$+12T_2(T_{e2} T_3(T_{e2} + T_3 - T_2) + T_{e1} T_1(T_{e1} + T_1 - T_2) - T_2(T_1^2 + T_3^2)). \quad (52)$$

Using Eq. (51) in Eq. (43) leads to the Modified Cramer-Rao Lower Bound given by

$$MCRB_3(\nu) = \frac{\frac{N_0}{2}}{E_U\{4\pi^2 \int_{T_0}(t-t_0)^2 |m(t)| dt\}} = \frac{1}{8\pi^2 \int_{T_0}(t-t_0)^2 dt} \frac{N_0}{P_S}$$

$$= \frac{3(T_1+T_2+T_3)}{2\pi^2 C_{MRLB_3}} \frac{N_0}{P_S} = \frac{T_1+T_2+T_3}{\frac{2}{3}\pi^2 C_{MRLB_3}} \frac{N_0}{P_S}. \quad (53)$$

**Derivation of MCRB$_2$**

The MCRB for two tag replies according to Fig. 40 can be derived by simplifying the MCRB for three tag replies. Using $T3 = 0$, Eq. (52) simplifies to

$$C_{MRLB_2} = T_1^4 + 4T_1^3 T_2 + T_2^4 - 6T_1^2 T_2(T_2 + 2T_{e1}) + 4T_1 T_2(T_2^2 + 3T_2 T_{e1} + 3T_{e1}^2). \quad (54)$$

Using $T3 = 0$ and Eq. (54), Eq. (53) can be simplified to

$$MCRB_2 = \frac{3(T_1+T_2)}{2\pi^2 C_{MRLB_2}} \frac{N_0}{P_S} \tag{55}$$

$$= \frac{3(T_1+T_2)}{2\pi^2(T_1^4+4T_1^3T_2+T_2^4-6T_1^2T_2(T_2+2T_{e1})+4T_1T_2(T_2^2+3T_2T_{e1}+3T_{e1}^2))} \frac{N_0}{P_S}$$

$$= \frac{3(T_1+T_2)}{2\pi^2((T_1+T_2)^4-12T_1^2T_2^2+12T_1T_2T_{e1}(T_{e1}+T_2-T_1))} \frac{N_0}{P_S}$$

$$= \frac{3}{2\pi^2\left((T_1+T_2)^3+\frac{12T_1T_2T_{e1}(T_{e1}+T_2-T_1)-12T_1^2T_2^2}{T_1+T_2}\right)} \frac{N_0}{P_S}$$

$$= \frac{1}{2\pi^2\left(\frac{1}{3}(T_1+T_2)^3+\frac{4T_1T_2T_{e1}(T_{e1}+T_2-T_1)-4T_1^2T_2^2}{T_1+T_2}\right)} \frac{N_0}{P_S}$$

$$= \frac{1}{2\pi^2\left(\frac{1}{3}(T_1+T_2)^3-\frac{4T_1T_2(T_1-T_{e1})(T_2+T_{e1})}{T_1+T_2}\right)} \frac{N_0}{P_S}. \tag{56}$$

If the two tag replies have the same length, this can be further simplified. For $T_1 = T_2 = T_N$, Eq. (56) simplifies to

$$MCRB_1 = \frac{3}{12\pi^2 T_{e1}^2 T_N+4\pi^2 T_N^3} \frac{N_0}{P_S} = \frac{1}{4\pi^2(\frac{1}{3}T_N^3+T_N T_{est}^2)} \frac{N_0}{P_S}, \tag{57}$$

which is in accordance with [6, Eq. (15)].

## MCRB for the Reading Strategy Multiple EPC

Here, the MCRB is derived for a communication as described above. It is again given by Eq. (43). If L denotes the number of EPC readouts, we now calculate

$$\int_{T_0} (t-t_0)^2 dt = \int_0^{T_1} (t-t_0)^2 dt + \sum_{l=0}^{L-1} \int_{T_{e1}+lT_{e2}}^{T_{e1}+lT_{e2}+T_2} (t-t_0)^2 dt$$

$$= t_0^2 T_1 - t_0 T_1^2 + \frac{T_1^3}{3} + \sum_{l=0}^{L-1} (t_0^2 T_2 - t_0 T_2^2 + \frac{T_2^3}{3} - 2t_0 T_2(T_{e1}+lT_{e2}) + T_2^2(T_{e1}+lT_{e2})$$

$$+ T_2(T_{e1}+lT_{e2})^2)$$

$$= t_0^2 T_1 - t_0 T_1^2 + \frac{T_1^3}{3} + L\left(t_0^2 T_2 - t_0 T_2^2 + \frac{T_2^3}{3}\right) - 2t_0 T_2\left(LT_{e1} + \sum_{l=0}^{L-1} lT_{e2}\right)$$

$$+ T_2^2\left(LT_{e1} + \sum_{l=0}^{L-1} lT_{e2}\right) + T_2\left(LT_{e1}^2 + 2T_{e1}\sum_{l=0}^{L-1} lT_{e2} + \sum_{l=0}^{L-1} l^2 T_{e2}^2\right)$$

$$= t_0^2(T_1+LT_2) - t_0(T_1^2+LT_2^2) + \frac{T_1^3+LT_2^3}{3} - 2t_0 T_2\left(LT_{e1} + \frac{1}{2}(L-1)LT_{e2}\right)$$

$$+ T_2^2\left(LT_{e1} + \frac{1}{2}(L-1)LT_{e2}\right)$$

$$+ T_2\left(LT_{e1}^2 + T_{e1}(L-1)LT_e2 + \frac{1}{6}(L-1)L(2(L-1)+1)T_{e2}^2\right)$$

$$= t_0^2(T_1+LT_2) - t_0\left(T_1^2+LT_2^2 + 2T_2\left(LT_{e1}+\frac{1}{2}(L-1)LT_{e2}\right)\right) + \frac{T_1^3+LT_2^3}{3}$$

$$+ LT_2^2 T_{e1} + LT_2 T_{e1}^2 + T_2 T_{e2}(L-1)L\left(\frac{1}{2}T_2 + T_{e1} + \frac{1}{6}T_{e2}(2L-1)\right). \tag{58}$$

Again, this is minimized, which is done by taking the first-order derivative, which yields

$$\frac{d \int_{T_0} (t-t_0)^2 dt}{dt_0} = t_0 2(T_1 + LT_2) - \left(T_1^2 + LT_2^2 + 2T_2\left(LT_{e1} + \frac{1}{2}(L-1)LT_{e2}\right)\right).$$

(59)

From this, we get the zero of the first-order derivative, which is given by

$$t_0 = \frac{T_1^2 + LT_2^2 + 2T_2\left(LT_{e1} + \frac{1}{2}(L-1)LT_{e2}\right)}{2(T_1 + LT_2)}.$$

(60)

Using this in Eq. (58) yields

$$\int_{T_0} (t - t_0)^2 dt$$

$$= \left(\frac{T_1^2 + LT_2^2 + 2T_2\left(LT_{e1} + \frac{1}{2}(L-1)LT_{e2}\right)}{2(T_1 + LT_2)}\right)^2 (T_1 + LT_2)$$

$$- \left(\frac{T_1^2 + LT_2^2 + 2T_2\left(LT_{e1} + \frac{1}{2}(L-1)LT_{e2}\right)}{2(T_1 + LT_2)}\right)\left(T_1^2 + LT_2^2 + 2T_2\left(LT_{e1} + \frac{1}{2}(L-1)LT_{e2}\right)\right)$$

$$+ \frac{T_1^3 + LT_2^3}{3} + LT_2^2 T_{e1} + LT_2 T_{e1}^2 + T_2 T_{e2}(L-1)L\left(\frac{1}{2}T_2 + T_{e1} + \frac{1}{6}T_{e2}(2L-1)\right)$$

$$= -\frac{\left(T_1^2 + LT_2^2 + 2T_2\left(LT_{e1} + \frac{1}{2}(L-1)LT_{e2}\right)\right)^2}{4(T_1 + LT_2)}$$

$$+ \frac{T_1^3 + LT_2^3}{3} + LT_2^2 T_{e1} + LT_2 T_{e1}^2 + T_2 T_{e2}(L-1)L\left(\frac{1}{2}T_2 + T_{e1} + \frac{1}{6}T_{e2}(2L-1)\right). \quad (61)$$

**Maximum Likelihood Estimator for the Distance of the Forklift Truck**

The aim of ML estimation is to estimate a parameter vector $\phi = [m_X, \sigma_X^2, f_X, \varphi_X]$ with help of an observation vector x by maximizing the likelihood function $f_{\mathbf{X}|\phi}(\mathbf{X}, \phi)$. The ML estimate is given by

$$\hat{\Phi}_{ML}(\mathbf{x}, \phi) = \Theta_{ML}(\mathbf{X}, \phi) = argmax_\phi\{f_{\mathbf{X}|\phi}(\mathbf{X}, \phi)\}.$$

(62)

The logarithm is a monotonically increasing function. Therefore, the maximum of the likelihood function can also be determined from the logarithm of the likelihood function. This so-called the log-likelihood function is given by

$$\hat{\Phi}_{LL}(\mathbf{x}, \phi) = \Theta_{LL}(\mathbf{X}, \phi) = argmax_\phi\{\log(f_{\mathbf{X}|\phi}(\mathbf{X}, \phi))\}.$$

(63)

If the N elements $X_i$ of the observation vector x are independent, the logarithm of the PDF is given by

$$\log(f_{\mathbf{X}|\phi}(\mathbf{x}, \phi)) = \log\left(\prod_{i=1}^{N} f_{X_i|\phi}(x_i, \phi)\right) = \sum_{i=1}^{N} \log(f_{X_i|\phi}(x_i, \phi)).$$

(64)

For the ML estimator of the distance of the forklift truck, the observation vector is given by a vector of the sampled Doppler shifts of the forklift truck. It is denoted as x in the following. The likelihood function is the PDF of a randomly distributed variable. According to [1, Eq. (16.70b)], it is given by

$$f_{X_i|\phi} = \frac{1}{\sqrt{2\pi\sigma_X^2}} \exp\left(-\frac{(x_i - m_X)^2}{\sigma_X^2}\right). \tag{65}$$

Here, the observation vector is compared with all the possible curves of the Doppler shift depending on the distance of the passing forklift truck. The distance is here denoted by $y_0$. The best $y_0$ is the one that leads to the Doppler shift curve which matches best to the observed one. Therefore, $m_X$ is replaced by an the expression of the experienced Doppler shift curve depending on $y_0$. This expression is derived in the following.

First the coordinate system specified in Fig. 9 is considered. The x coordinate of the forklift truck is given by

$$x_{ft} = tv - x_0. \tag{66}$$

After performing some basic trigonometric operations, the distance between reader antenna and forklift truck is given by

$$d(t) = \frac{h}{\cos(\arctan(\frac{tv - x_0}{y_0}))}. \tag{67}$$

Similarly to for Eq. (27), WolframAlpha [9] suggests an alternative expression of this term, which is given by

$$d(t) = y_0 \sqrt{\frac{t^2 v^2}{y_0^2} + 1}. \tag{68}$$

This expression shows to be equivalent to the first one and is used in the following as it allows a simpler calculation of its first-order derivative. The speed of the forklift truck relative to the reader antenna is then given by

$$v_{rel}(t) = \frac{2v(tv - x_0)}{y_0 \sqrt{\frac{(tv - x_0)^2}{y_0^2} + 1}}. \tag{69}$$

Then, the forklift truck's Doppler shift is calculated by using this in Eq. (20), which yields

$$f_d(t) = \frac{2v_{rel}f_c}{c} = \frac{4f_c v(tv - x_0)}{cy_0 \sqrt{\frac{(tv - x_0)^2}{y_0^2} + 1}}. \tag{70}$$

Now, using this in 65 yields

$$f_{X_i|\phi} = \frac{1}{\sqrt{2\pi\sigma_X^2}} \exp\left(-\frac{\left(x_i - \frac{4f_c v(t_i v - x_0)}{cy_0 \sqrt{\frac{(t_i v - x_0)^2}{y_0^2} + 1}}\right)^2}{\sigma_X^2}\right). \tag{71}$$

Finally, the ML estimate is determined by using Eq. (71) in Eq. (63), which yields

$$\widehat{\Phi}_{LL}(\mathbf{x}, \phi) = argmax_\phi \left\{ -\ln\left(\sqrt{2\pi}\sigma_X\right) - \frac{1}{2\sigma_X^2}\sum_{i=1}^{N}\left(x_i - \frac{4f_c v(t_i v - x_0)}{cy_0\sqrt{\frac{(t_i v - x_0)^2}{y_0^2} + 1}}\right)^2 \right\}$$

$$= argmax_\phi \left\{ -\sum_{i=1}^{N}\left(x_i - \frac{4f_c v(t_i v - x_0)}{cy_0\sqrt{\frac{(t_i v - x_0)^2}{y_0^2} + 1}}\right)^2 \right\}. \qquad (72)$$

**Calculation of the Optimal BLF**

The calculation of the optimal BLF for the reading strategy Optimized BLF as a function of the conveyor belt's speed $v$ is divided into the following steps:

1. Derivation of the MCRB as a function of the BLF (and $\frac{P_S}{N_0}$ and some fixed/optimized reader variables)
2. Solving $4MCRB = \sigma^2$ for $BLF$

**Derivation of the Cramer Rao Lower Bound as a Function of the BLF**

The reading strategy Optimized BLF uses the two tag replies for the frequency estimation. Therefore the variance of the frequency estimation is calculated by Eq. 37. This equation depends on the $\frac{P_S}{N_0}$, the length of the first tag response $T_1$, the length of the second tag response $T_2$ and the time difference between start of the first tag response and second tag response, given by $T_{e1}$. The next step is to calculate these variables $T_1$, $T_2$ and $T_{e1}$, which depend on the EPCglobal-Standard and some reader settings that are chosen according to the EPCglobal-Standard as, for example, the $BLF$.

The duration of the first tag response is given by

$$T_1 = \frac{t_1}{BLF} \qquad (73)$$

with

$$t_1 = (L_{pr} + 17)M. \qquad (74)$$

Here, $t_1$ denotes the length of the Symbols of the RN16 which depends on the chosen encoding and the parameter *TRext*. $L_{pr}$ denotes the length of the preamble of the RN16-Tag-Response and also depends on the encoding of the tag's signal, which is given by

$$L_{pr} = \begin{cases} 6 & \text{for FM0} - \text{Encoding and TRext} = 0 \\ 18 & \text{for FM0} - \text{Encoding and TRext} = 1 \\ 10 & \text{for Miller} - \text{Encoding TRext} = 0 \\ 22 & \text{for Miller} - \text{Encoding TRext} = 1 \end{cases} \qquad (75)$$

The variable M denotes an encoding parameter that is defined as follows:

$$M = \begin{cases} 1 & \text{forFM0} - \text{Encoding} \\ 2 & \text{forMiller} - 2 - \text{Encoding} \\ 4 & \text{forMiller} - 4 - \text{Encoding} \\ 8 & \text{forMiller} - 8 - \text{Encoding} \end{cases} \qquad (76)$$

Similarly, $T_2$ is given by

$$T_2 = \frac{t_2}{BLF} \qquad (77)$$

with

$$t_1 = (L_{pr} + 113)M \qquad (78)$$

The length of the EPC code is 96 for the product code plus 16 cyclic redundancy check symbols plus one end-of-packet-symbol which adds up to 113 symbols.

$T_{e1}$ is given by

$$T_{e1} = T_1 + T_{R2} + T_{ACK} + T_{R1} \qquad (79)$$

In the following, variables named $T_{Ri}$ correspond to variables defined as $T_i$ in [8]. Then, $T_{R1}$ denotes the time between the end of the reader's Query, QueryAdjust or QueryRepeat command and the start of the following RN16 transmitted by the tag ($T_1$ in [8, Figure 6.16]). It is given by

$$T_{R1} = \frac{t_{R1}}{BLF} \qquad (80)$$

with

$$t_{R1} = \max\{RTcal \times BLF, 10\}. \qquad (81)$$

The variable *RTcal* denotes an adjustable parameter of the reader which will be discussed later. $T_{R2}$ is given by

$$T_{R2} = t_{R2}T_{pri} = \frac{t_{R2}}{BLF}. \qquad (82)$$

Here, $T_{R2}$ also denotes an adjustable parameter of the reader (can be chosen freely between $3.0 \le t_{R2} \le 20.0$) which will be discussed later.

Further, $T_{ACK}$ denotes the length of an Acknowledge-Command and is given by

$$T_{ACK} = T_{delimiter} + T_{Symbol0} + RTcal + TRcal + 18T_{SymbolArb}. \qquad (83)$$

$T_{ACK}$ depends on:

- $T_{delimiter}$: The length of the delimiter at the begin of each reader command, given by

$$T_{delimiter} = [12.5]\mu s(+ - 5\%). \qquad (84)$$

The delimiter's tolerance of + - 5% will be neglected in the following.

- $T_{Symbol0}$: The duration of the reader's symbol 0, given by

$$T_{Symbol0} = Tari. \qquad (85)$$

*Tari* also is an adjustable variable of the reader which will be discussed.

- *TRcal:* Given by

$$TRcal = \frac{DR}{BLF} \qquad (86)$$

- $T_{SymbolArb}$: The average duration of the data symbols. The data, the ACK command transmits is the RN16, the targeted tag previously transmitted to the reader. Therefore, the data is random. The reader's Symbol 0 and Symbol 1 have different length. Therefore, the length of these data symbols are random. This chapter aims to calculate the optimal BLF that ensures a successful estimation of the tag's Doppler shift. Thus, the lower bound of the shortest possible ACK-Command is considered (shortest pause between the tag replies leads to lowest accuracy of the estimation of its Doppler shift). The Reader's Symbol 0 is shorter than the Reader's Symbol 1, so in the following $T_{SymbolArb}$ is chosen as

$$T_{SymbolArb} = T_{Symbol0} = Tari. \qquad (87)$$

This corresponds to the correct length of an ACK-Command if the targeted has previously transmitted RN16 = 0000 0000 0000 0000 which is considered here as a lower bound for the length of the ACK command.
Using Eqs. (84), (85), (86), and (87) in Eq. (83) yields

$$T_{ACK} = T_{delimiter} + 19Tari + RTcal + \frac{DR}{BLF}. \qquad (88)$$

**Optimization of Adjustable Reader Variables**

The following variables can be adjusted by the reader:

- *TRext:* in the following chosen as one
- $t_{R2}$: According to the specifications of the EPCglobal Standard, $t_{R2}$ can be chosen between $3.0 \le t_{R2} \le 20.0$. As the overall goal is to achieve the highest possible reading rate it is chosen as small as possible in the following, which is $t_{R2} = 3$.
- *DR:* The chosen DR restricts the allowed range of the BLF as follows (cf. [8, Table 6.9]):

  - DR = 8 restricts the BLF to $40 \le BLF \le 465$
  - $DR = \frac{64}{3}$ restricts the BLF to $95 \le BLF \le 640$

The possible outcomes of the optimal BLF has to lie inside the allowed range of the BLF which is defined as $40 \le BLF \le 640$. Because of the adjustable DR, all the following calculations will be calculated twice, once for DR = 8 and once for $DR = \frac{64}{3}$. Then, a possible scenario is that one of both calculations leads to an optimal BLF that lies inside the allowed region (for example 50 *kHz* for DR = 8) and the other calculation leads to an optimal BLF that lies outside the allowed region (for example 55 *kHz* for $DR = \frac{64}{3}$). In this case, the DR has be set to the value with the optimal BLF inside the allowed region (DR=8 in the given example). Another possible scenario is that the calculations of both lead to an optimal BLF inside each DR's allowed region. Then, the achievable reading rate for both DRs and their corresponding BLFs is compared and the DR is chosen to the one which leads to the higher reading rate. This is not necessarily the DR with the higher corresponding optimal BLF as the DR influences the RTcal. The RTcal then influences other reader parameters. This has an influence on the achievable reading rate that might surpass the benefit of a higher BLF.

- *Tari* and *RTcal*: Tari and RTcal can also be chosen freely as long as the following three equations hold:

$$1.1 RTcal \leq TRcal \leq 3 RTcal \ with \ TRcal = \frac{DR}{BLF} \quad (89)$$

$$2.5 Tari \leq RTcal \leq 3 Tari \quad (90)$$

$$[6.25]\mu s \leq Tari \leq [25]\mu s \quad (91)$$

The main goal is to achieve the highest possible reading rate. Therefore, *Tari* and *RTcal* have also to be chosen as small as possible while the Eqs. (89), (90) and (91) are fulfilled. Due to the fact, that TRcal depends on the BLF, the shortest possible values of *Tari* and *RTcal* that still fulfill Eqs. (89), (90) and (91) also depends on the BLF. In the following two Subsections, these optimal values of *Tari* and *RTcal* depending on the BLF are calculated separately for DR = 8 and $DR = \frac{64}{3}$.

### Calculation of the Optimal RTcal and Tari for DR = 8

As mentioned before, DR=8 restricts the allowed region of the BLF to 40 *kHz* ≤ *BLF* ≤ 465 *kHz*. The optimal RTcal and Tari for DR=8 depend on the BLF and will in the following be calculated as functions of the BLF. Therefore, the first step is to calculate the optimal RTcal and Tari at the both borderline cases of *BLF* = 40 *kHz* and *BLF* = 465 *kHz*. As our main goal is still to achieve the highest possible reading rate, both variables are minimized in order to achieve the shortest possible duration of the communication during a readout (calculations have shown, that the achievable reading rate is higher for minimized RTcal and Tari than for maximized RTcal and Tari. An optimization is necessary because there is no value of RTcal and Tari that fulfills Eqs. (89), (90) and (91) for all BLFs between 40 *kHz* and 465 *kHz,* so RTcal and Tari are adjusted to the actual BLF anyway.)

### Smallest possible length of RTcal and Tari for BLF = [40]kHz

The purpose of this subsection is to find the smallest possible values for RTcal and Tari for $BGF_{l,8}$ = [40]*kHz* that still fulfill the Eqs. (89), (90) and (91). Considering Eq. (89), the smallest possible RTcal is given by

$$RTcal_{l,8} = \frac{1}{3} TRcal_{l,8} = \frac{1}{3} \frac{DR}{BLF_{l,8}}. \quad (92)$$

Considering Eq. (89) and Eq. (92), the smallest possible Tari is given by

$$Tari_{l,8} = \frac{1}{3} RTcal_{l,8} = \frac{1}{9} \frac{8}{[40]kHz} = [22.\overline{2}]\mu s, \quad (93)$$

which fulfills Eq. (91).

### Smallest possible length of RTcal and Tari for BLF = 465 kHz

For $BLF_{h,8}$ = 465*kHz*, RTcal and Tari are not restricted by Eq. (89), but by Eq. (91). Considering Eq. (89), the smallest possible Tari is given by

$$Tari_{h,8} = [6.25]\mu s. \quad (94)$$

Then, considering Eq. (89), the smallest possible RTcal is given by

$$RTcal_{h,8} = 2.5Tari_{h,8} = [15.625]\mu s, \qquad (95)$$

which fulfills Eq. (89) ( $TRcal_{h,8} = \frac{8}{465kHz} \approx 1.101RTcal_{h,8}$ ).

**Expressions of the optimal RTcal and Tari as a function of the BLF**

In order to get a good approximation of the optimal values for BLFs between the two boarders of $BLF = [40]kHz$ and $BLF = [465]kHz$, they are approximated by

$$Tari_{opt,8} = a_{Tari,8} + \frac{b_{Tari,8}}{BLF} \qquad (96)$$

and

$$RTcal_{opt,8} = c_{RTcal,8} + \frac{d_{RTcal,8}}{BLF} \qquad (97)$$

**Calculation of $a_{Tari,8}$ and $b_{Tari,8}$:**

As the both optimal Tari and RTcal for $BLF = [40]kHz$ and $BLF = [465]kHz$ are known, $a_{Tari,8}$ and $b_{Tari,8}$ can be calculated using

$$a_{Tari,8} + \frac{b_{Tari,8}}{BLF_{l,8}} = Tari_{l,8} \qquad (98)$$

and

$$a_{Tari,8} + \frac{b_{Tari,8}}{BLF_{h,8}} = Tari_{h,8}. \qquad (99)$$

Solving Eq. (98) for $a_{Tari,8}$ yields

$$a_{Tari,8} = Tari_{l,8} - \frac{b_{Tari,8}}{BLF_{l,8}}. \qquad (100)$$

Using Eq. (99) in Eq. (100) yields

$$Tari_{l,8} - \frac{b_{Tari,8}}{BLF_{l,8}} + \frac{b_{Tari,8}}{BLF_{h,8}} = Tari_{h,8}, \qquad (101)$$

which, solved for $b_{Tari,8}$, gives

$$b_{Tari,8} = \frac{Tari_{h,8} - Tari_{l,8}}{\frac{1}{BLF_{h,8}} - \frac{1}{BLF_{l,8}}}. \qquad (102)$$

Finally, using Eq. (102) in Eq. (100) yields

$$a_{Tari,8} = Tari_{l,8} - \frac{b_{Tari,8}}{BLF_{l,8}}. \qquad (103)$$

**Calculation of c$_{RTcal,8}$ and d$_{RTcal,8}$:**

This calculation is similar to that of **a**$_{Tari,8}$ and **b**$_{Tari1,8}$. This time, c$_{RTcal,8}$ and **d**$_{RTcal,8}$ can be calculated using

$$c_{RTcal,8} + \frac{d_{RTcal,8}}{BLF_{l,8}} = RTcal_{l,8} \qquad (104)$$

and

$$c_{RTcal,8} + \frac{d_{RTcal,8}}{BLF_{h,8}} = RTcal_{h,8}, \qquad (105)$$

which yields

$$d_{RTcal,8} = \frac{RTcal_{h,8} - RTcal_{l,8}}{\frac{1}{BLF_{h,8}} - \frac{1}{BLF_{l,8}}} \qquad (106)$$

and

$$c_{RTcal,8} = RTcal_{l,8} - \frac{d_{RTcal,8}}{BLF_{l,8}}. \qquad (107)$$

**Calculation of the Optimal RTcal and Tari for** $DR = \frac{64}{3}$

The calculations of this subsection are analog to those of above subsection, now using $DR = \frac{64}{3}$, $BLF_{h,\frac{64}{3}} = 640 kHz$ and $BLF_{l,\frac{64}{3}} = 95 kHz$

***Smallest possible length*** *of RTcal and Tari for BLF = [95]kHz*

Analogously to Eq. (92), $RTcal_{l,\frac{64}{3}}$ is given by

$$RTcal_{l,\frac{64}{3}} = \frac{1}{3} TRcal_{l,\frac{64}{3}} = \frac{1}{3} \frac{DR}{BLF_{l,\frac{64}{3}}}. \qquad (108)$$

$Tari_{l,\frac{64}{3}}$ is, analogously to Eq. (93), given by

$$Tari'_{l,\frac{64}{3}} = \frac{1}{3} RTcal_{l,\frac{64}{3}} = \frac{1}{9} \frac{8}{95 kHz} \approx [6.4] \mu s, \qquad (109)$$

which again fulfills Eq. (91).

***Smallest possible length of RTcal and Tari for BLF =*** [640]*kHz*

Similarly to Eq. (94), $Tari_{h,\frac{64}{3}}$ is given by

$$Tari_{h,\frac{64}{3}} = [6.25]\mu s. \qquad (110)$$

$RTcal_{h,\frac{64}{3}}$ is, analogously to Eq. (95), given by

$$RTcal_{h,\frac{64}{3}} = 2.5 Tari_{h,\frac{64}{3}} = [15.625]\mu s, \qquad (111)$$

$$TRcal_{h,\frac{64}{3}} = \frac{\frac{64}{3}}{640 kHz} = 2.1\bar{3} RTcal_{h,\frac{64}{3}}$$

which again fulfills Eq. (89) ( ).

**Simplification of the Expression of $T_{e1}$**

Using Eqs. (73), (82), (88), (80), (98) and (99) in Eq. (79) yields

$$
\begin{aligned}
T_{e1} &= T_1 + T_{R2} + T_{ACK} + T_{R1} \\
&= \frac{t_1}{BLF} + \frac{t_{R2}}{BLF} + T_{delimiter} + 19 Tari + RTcal + \frac{DR}{BLF} + \frac{t_{R1}}{BLF} \\
&= \frac{t_1}{BLF} + \frac{t_{R2}}{BLF} + T_{delimiter} + 19 \left( a_{Tari,DR} + \frac{b_{Tari,DR}}{BLF} \right) + c_{RTcal,DR} \\
&+ \frac{d_{RTcal,DR}}{BLF} + \frac{DR}{BLF} + \frac{t_{R1}}{BLF}.
\end{aligned}
\qquad (112)
$$

Then, the two the auxiliary variables *e* and *f* are used in Eq. (112) in order to simplify it to

$$
T_{e1} = \frac{\overbrace{t_1 + t_{R2} + 19 b_{Tari,DR} + d_{RTcal,DR} + DR + t_{R1}}^{e}}{BLF} + \underbrace{T_{delimiter} + 19 a_{Tari,DR} + c_{RTcal,DR}}_{f}
$$

$$= \frac{e}{BLF} + f. \qquad (113)$$

Later, the square of this expression will be used which is given by

$$T_{e1}^2 = \left( \frac{e}{BLF} + f \right)^2 = \frac{e^2}{BLF^2} + \frac{2ef}{BLF} + f^2. \qquad (114)$$

**Suitable Closed-Form Expression of the MCRB**

The reading strategy Optimized BLF uses two tag responses for the frequency estimation. Thus, Eq. (37) is used in order to calculate the MCRB. However, it is more useful for the following calculations to use Eq. (55) with Eq. (54). To achieve more suitable expressions for the following chapters, Eq. (55) with Eq. (54) are slightly modified here. Eq. (55) is modified by using Eq. (73) and Eq. (77), which yields

$$MCRB_2 = \frac{3(t_1 + t_2)}{2\pi^2 BLF C_{MRLB_2}} \frac{N_0}{P_S} \qquad (115)$$

For better clarity, Eq. (54) is abbreviated using the auxiliary variable $C_1$. Then it is given by

$$C_{MRLB_2} = T_1^4 + 4T_1^3 T_2 + T_2^4 - 6T_1^2 T_2^2 - 12T_1^2 T_2 T_{e1} + 4T_1 T_2^3 + 12T_1 T_2^2 T_{e1} +$$

$$12T_1 T_2 T_{e1}^2$$

$$= \underbrace{T_1^4 + 4T_1^3 T_2 - 6T_1^2 T_2^2 + 4T_1 T_2^3 + T_2^4}_{C_1} + 12T_1 T_2 (T_2 - T_1) T_{e1} + 12T_1 T_2 T_{e1}^2$$

$$= C_1 + 12T_1 T_2 (T_{e1}(T_2 - T_1) + T_{e1}^2). \tag{116}$$

Using Eq. (113) and Eq. (114) in Eq. (116) yields

$$C_{MRLB_2} = C_1 + 12T_1 T_2 \left( \left( \frac{e}{BLF} + f \right)(T_2 - T_1) + \frac{e^2}{BLF^2} + \frac{2ef}{BLF} + f^2 \right), \tag{117}$$

which, using

$$c_1 = C_1 BLF^4 = (T_1^4 + 4T_1^3 T_2 - 6T_1^2 T_2^2 + 4T_1 T_2^3 + T_2^4)BLF^4$$
$$= t_1^4 + 4t_1^3 t_2 - 6t_1^2 t_2^2 + 4t_1 t_2^3 + t_2^4 \tag{118}$$

yields

$$C_{MRLB_2} = \frac{c_1}{BLF^4} + 12T_1 T_2 \left( \left( \frac{e}{BLF} + f \right)(T_2 - T_1) + \frac{e^2}{BLF^2} + \frac{2ef}{BLF} + f^2 \right)$$

$$= \frac{c_1 + 12t_1 t_2 \left( (e + fBLF)(t_2 - t_1) + e^2 + 2efBLF + f^2 BLF^2 \right)}{BLF^4}. \tag{119}$$

$$MCRB_2 = \frac{3(t_1 + t_2)BLF^3}{2\pi^2 \left( c_1 + 12t_1 t_2 ((e + fBLF)(t_2 - t_1) + e^2 + 2efBLF + f^2 BLF^2) \right)} \frac{N_0}{P_S}$$

$$= \frac{3(t_1 + t_2)BLF^3}{2\pi^2 (12t_1 t_2 e(t_2 - t_1 + e) + c_1 + BLF 12t_1 t_2 (t_2 - t_1 + 2e) + BLF^2 12t_1 t_2 f^2)} \frac{N_0}{P_S} \tag{120}$$

**Solving *4MCRB = $\sigma^2$* for BLF**

In order to achieve a sufficiently reliable frequency estimation, the Modified Cramer Rao Bound is higher than or equal to the minimum tolerable variance of the estimation. The next step now is to find the BLF for which both equations are equal, which is given by

$$MCRB = \sigma^2, \tag{121}$$

where $\sigma^2$ is given by Eq. (5). Using Eq. (120) yields

$$\frac{3(t_1+t_2)BLF^3}{2\pi^2(12t_1t_2e(t_2-t_1+e)+c_1+BLF12t_1t_2(t_2-t_1+2e)+BLF^2 12t_1t_2f^2)}\frac{N_0}{P_S} = \sigma^2$$

$$\Leftrightarrow \frac{3(t_1+t_2)BLF^3 N_0}{2\pi^2\sigma^2 P_S} = BLF^2 12t_1t_2f^2 + BLF12t_1t_2f(2e+t_2-t_1)$$

$$+12t_1t_2e(t_2-t_1+e)+c_1$$

$$\Leftrightarrow 0 = -BLF^3\frac{3(t_1+t_2)N_0}{2\pi^2\sigma^2 P_S} + BLF^2 12t_1t_2f^2 + BLF12t_1t_2f(2e+t_2-t_1)$$

$$+12t_1t_2e(t_2-t_1+e)+c_1$$

$$\Leftrightarrow 0 = -BLF^3\frac{(t_1+t_2)N_0}{8t_1t_2\pi^2\sigma^2 P_S} + BLF^2 f^2 + BLFf(2e+t_2-t_1)+e(t_2-t_1+e)$$

$$+\frac{c_1}{12t_1t_2} \qquad (122)$$

The optimal BLF is the one for which Eq. (122) is fulfilled. As this is a cubic function, finding a closed form expression of the optimal BLF is possible. However, this is quite complicated and results in a very cumbersome expression. Thus, the Newton—Raphson method has been utilized in order to approximate the optimal BLF. The Newton—Raphson method therefore uses Eq. (122) and its first-order derivative with respect to the BLF, given by

$$f'(BLF) = -3BLF^2\frac{(t_1+t_2)N_0}{8t_1t_2\pi^2\sigma^2 P_S} + 2BLFf^2 + f(2e+t_2-t_1). \qquad (123)$$

Within above embodiments, a concept has been discussed in context of an apparatus. However, another embodiment provides a corresponding method, e.g., for determining motion parameters/velocity of one or more RFID tags of an object.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**References**

[1] I.N. Bronstein, K.A. Semendjajew, G. Musol, and H. Mühlig. Taschenbuch der Mathematik, 7. Auflage. 2008.

[2] A. Buffi, P. Nepa, and F. Lombardini. A Phase-Based Technique for Localization of UHF-RFID Tags Moving on a Conveyor Belt: Performance Analysis and Test-Case Measurements, volume 15, pages 387-396, Jan 2015.

[3] A. N. D'Andrea, U. Mengali, and R. Reggiannini. The modified Cramer-Rao bound and its application to synchronization problems, volume 42, pages 1391-1399, Feb 1994.

[4] Nikitin, P.V. and Spiess, G.N. and Leland, H.M. and Hingst, L.C. and Sherman, J.H. Utilization of motion and spatial identification in RFID systems, April 14 2015. US Patent 9,007,178.

[5] Theodore S Rappaport. Wireless Communications Principles and Practice, Second Edition. 2001.

[6] H.-M. Tröger, J. Robert, L. Patino-Studencki, and A. Heuberger. A Comparison of Opportunistic Signals for Wireless Syntonization using the Modified Cramér-Rao Lower Bound. 2017.

**List of Abbreviations**

ACK Acknowledge
AoA angle of arrival
BLF backscatter-link frequency
CW continuous wave
DR divide ratio
EPC electronic product code
FFT fast Fourier transform
MCRB modi_ed Cramer-Rao bound
ML maximum likelihood
PDF probability density function
QueryRep Query Repeat
RFID Radio Frequency identi_cation
RN16 16-bit random number
RSP received signal phase
RSSI received signal strength indication
SARFID synthetic aperture radio frequency identi_cation
SDR software de_ned radio
ToA time of arrival

TDoA time di_erence of arrival
UHF Ultra-High Frequency

**Claims**

1. RFID reader (10), comprising:

   a transmitter (12) configured to provide a frequency signal (12s) for one or more RFID tags (12a to 12d);
   a receiver (14) configured to receive a response signal (14s) resulting from a reflection of the frequency signal (12s) on at least one of the RFID tags (12a to 12d) or on an object carrying the at least one of the RFID tags (12a to 12d);
   a processor (16) configured to evaluate the response signal, wherein the processor (16) comprises a motion determiner (18) configured to detect a Doppler shift within the response signal (14s) and to determine a motion parameter and/or velocity of the at least one tag or the object based on a characteristic of the Doppler shift;
   **characterized in that** the transmitter (12) is configured to adapt a backscatter link frequency dependent on a reading out strategy and/or wherein the transmitter (12) is configured to select a modulation type out of the group comprising FM0, Miller-2, Miller-4 and/or Miller-8 dependent on a reading out strategy and/or wherein the transmitter (12) is configured to adapt a pause length between readouts dependent on a reading out strategy.

2. The RFID reader (10) according to claim 1, wherein the transmitter (12) is configured to provide the frequency signal (12s) in a manner so as to use different reading out modes, wherein the processor (16) is configured to control the transmitter (12) to adapt the reading out modes dependent on the determined motion parameter and/or velocity.

3. The RFID reader (10) according to claim 2, wherein the frequency signal (12s) is adapted with regard to their backscatter link frequency; and/or
   wherein processor (16) is configured to reduce the backscatter link frequency in order to improve the reliability of the determination of the motion parameter and/or velocity and to increase the backscatter link frequency in order to increase the number of tags to be readout.

4. The RFID reader (10) according to claim 2 or 3, wherein the different reading out modes differ with regard to modulation type; and/or

   wherein the transmitter (12) performs the providing of the frequency signal (12s) multiple times for the one of the RFID tags (12a to 12d) and the receiver (14) receives the response signal (14s) multiple times from the one of the RFID tags (12a to 12d) so as to increase a timeframe for reading out; and/or
   wherein the transmitter (12) is configured to provide the frequency signal (12s) multiple times for multiple RFID tags (12a to 12d) in a first series and wherein the receiver (14) is configured to receive the response signals from the for multiple RFID tags (12a to 12d) in the first series so as to read out the multiple RFID tags (12a to 12d); and wherein the transmitter (12) and the receiver (14) is configured to perform the reading out the multiple RFID tags (12a to 12d) in a second series with a pause of adaptable length in between so as to increase a timeframe for reading out.

5. The RFID reader (10) according to one of the previous claims, wherein the processor (16) is configured to assign a plurality of the tags to a group of tags having the same velocity or to assign a plurality of the tags to a group of tags having a predetermined velocity; or
   wherein the processor (16) is configured to assign a plurality of the tags to a group of tags having the same velocity or to assign a plurality of the tags to a group of tags having a predetermined velocity, wherein the RFID reader (10) comprises an interface for an external velocity sensor delivering the predetermined velocity.

6. The RFID reader (10) according to one of the previous claims, wherein the processor (16) is configured to determine a distance of the at least one RFID tag (12a to 12d) as motion parameter; or wherein the processor (16) is configured to determine a distance of the at least one RFID tag (12a to 12d) as motion parameter based on a determined slope of a Doppler shift change of the time; and/or

   wherein the processor (16) is configured to determine a point of time of a passing of the at least one RFID tag (12a to 12d) and/or a position of the at least one RFID tag (12a to 12d) as motion parameter; or wherein the processor (16) is configured to determine a point of time of a passing of the at least one RFID tag (12a to 12d) and/or a position of the at least one RFID tag (12a to 12d) as motion parameter based on a determined slope of a Doppler shift change of the time describing a distance to the at least one RFID tag (12a to 12d) and/or based on a point of time on which the Doppler shift is detected; and/or
wherein the processor (16) is configured to determine a direction of the at least one RFID tag (12a to 12d) as motion parameter; or wherein the processor (16) is configured to determine a direction of the at least one RFID tag (12a to 12d) as motion parameter based on the comparison of determined characteristics of the Doppler shift using at least two antennas of the RFID receiver (14).

7. The RFID reader (10) according to one of the previous claims, wherein the motion determiner (18) is configured to differentiate a response signal (14s) of a RFID tag (12a to 12d) from a response signal (14s) of an object due to a modulation of the response signal; and/or
wherein the motion determiner (18) is configured to differentiate a response signal (14s) of a RFID tag (12a to 12d) from a response signal (14s) of an object due to a modulation of the response signal (14s) and to suppress interferences by differentiating the response signal (14s) of the RFID tag (12a to 12d) from the response signal (14s) of the object.

8. The RFID reader (10) according to one of the previous claims, wherein the processor (16) is configured to suppress interferences caused by response signals not resulting from a reflection of the frequency signal (12s) on the one or more RFID tags (12a to 12d) to a predetermined point of time of the measurement.

9. The RFID reader (10) according to one of the previous claims, wherein the processor (16) is configured to calculate a estimation precision of the determination of the motion parameter and/or velocity for distinguishing between a static and a moving RFID tag (12a to 12d) based on an information about a determined Doppler shift, a tolerable error rate, a threshold for a velocity above which a RFID tag (12a to 12d) and/or object is classified as moving, an expected velocity of the RFID tags (12a to 12d) or of the object and a carrier frequency.

10. The RFID reader (10) according to claim 9, wherein the calculation of the estimation precision is performed based on

$$\sigma^2 = \frac{2\,v^2 f_c^2}{c^2(erfinv(2\,P_{err}-1))},$$

where erfinv(x) denotes the inverse error function, $\sigma^2$ is the variance of the estimation, c is the speed of light, $P_{err}$ is the minimal tolerable error probability of the estimation, v an expected velocity of the RFID tags (12a to 12d) or of the object and $f_c$ the carrier frequency.

11. The RFID reader (10) according to one of the previous claims, wherein the receiver (14) comprises a plurality of antennas and wherein the processor (16) is configured to determine a direction of the moving RFID tags (12a to 12d) or of the moving object by use of the response signal (14s) received via the plurality of antennas; and/or
wherein the receiver (14) comprises a passive antenna used for determining the Doppler shift.

12. The RFID reader (10) according to one of the previous claims, wherein the reader is configured to use a hibernation mode, within which the receiver (14) provides the frequency signal (12s) within a certain time interval, and a read-out mode;

wherein the processor (16) is configured to enable the read-out mode when it detects a motion parameter of the at least one RFID tag (12a to 12d) or the object based on the Doppler shift using the hibernation mode; and/or
wherein selected reading out strategy is dependent on the number of tags and/or readouts.

13. The RFID reader (10) according to one of the previous claims, wherein the transmitter (12) is configured to adapt a backscatter link frequency by reducing the back scattered link frequency in order to improve the reliability of the determination of the motion parameter and increasing the back scattered link frequency in order to increase the number of tags to be read out dependent on a reading out strategy; and/or wherein the transmitter (12) is configured to adapt a pause length between readouts dependent on a reading out strategy.

14. System (100) comprising the RFID reader (10) according to one of the previous claims and an RFID tag (12a to 12d); or a system (100) comprising the RFID reader (10) according to one of the claims 5 or 6 to 13 when dependent on claim 5 and a vehicle or convoy carrying the object, wherein the vehicle or the convoy comprises the external velocity sensor configured to provide the predetermined velocity.

15. A method for reading out RFID tags (12a to 12d), comprising:

providing a frequency signal (12s) for the RFID tag (12a to 12d);
receiving a response signal (14s) resulting from a reflection of the frequency signal (12s) on one of the RFID tags (12a to 12d) or on an object carrying the one of the RFID tags (12a to 12d);
evaluating the response signal;
**characterized in that** the method comprises:

adapting a backscatter link frequency dependent on a reading out strategy and/or selecting a modulation type out of the group comprising FM0, Miller-2, Miller-4 and/or Miller-8 dependent on a reading out strategy and/or adapting a pause length between readouts dependent on a reading out strategy; and
determining a motion parameter and/or a velocity of the one tag or the object based on characteristic of a Doppler shift within the response signal.

16. The method according to claim 15, wherein the method further comprises the step of adapting the frequency signal (12s) based on the detected motion parameter and/or velocity.

17. Motion detector, comprising:

a transmitter (12) configured to provide a frequency signal (12s) to one or more objects;
a receiver (14) configured to receive a response signal (14s) resulting from a reflection of the frequency signal (12s) on one or more objects;
a processor (16) configured to evaluate the response signal, wherein the processor (16) comprises a motion determiner (18) configured to detect a Doppler shift within the response signal (14s) and to determine a motion parameter and/or velocity of to one or more objects based on a characteristic of the Doppler shift;
**characterized in that** the transmitter (12) is configured to adapt a backscatterer link frequency dependent on a reading out strategy and/or wherein the transmitter (12) is configured to select a modulation type out of the group comprising FM0, Miller-2, Miller-4 and/or Miller-8 dependent on a reading out strategy and/or wherein the transmitter (12) is configured to adapt a pause length between readouts dependent on a reading out strategy.

18. A method for detecting an object, comprising:

providing a frequency signal (12s) to one or more objects;
receiving a response signal (14s) resulting from a reflection of the frequency signal (12s) on to one or more objects;
evaluating the response signal;
**characterized in that** the method comprises:

adapting a backscatter link frequency dependent on a reading out strategy and/or selecting a modulation type out of the group comprising FM0, Miller-2, Miller-4 and/or Miller-8 and/or adapting a pause length between readouts dependent on a reading out strategy; and
determining a motion parameter and/or a velocity of the one or more objects based on a characteristic of a Doppler shift within the response signal.

19. Computer program having a program code for performing, when running a computer, the method according to claim 15, 16 or 18.

**Patentansprüche**

1. RFID-Lesevorrichtung (10), die folgende Merkmale aufweist:

einen Sender (12), der dazu ausgebildet ist, ein Frequenzsignal (12s) für ein oder mehr RFID-Tags (12a bis 12d) bereitzustellen;
einen Empfänger (14), der dazu ausgebildet ist, ein Antwortsignal (14s) zu empfangen, das aus einer Reflexion des Frequenzsignals (12s) an zumindest einem der RFID-Tags (12a bis 12d) oder an einem Objekt resultiert, das das zumindest eine der RFID-Tags (12a bis 12d) trägt;

einen Prozessor (16), der dazu ausgebildet ist, das Antwortsignal auszuwerten, wobei der Prozessor (16) einen Bewegungsbestimmer (18) aufweist, der dazu ausgebildet ist, eine Doppler-Verschiebung innerhalb des Antwortsignals (14s) zu erfassen und einen Bewegungsparameter und/oder eine Geschwindigkeit des zumindest einen Tags oder des Objekts basierend auf einer Charakteristik der Doppler-Verschiebung zu bestimmen; **dadurch gekennzeichnet, dass** der Sender (12) dazu ausgebildet ist, eine Rückstreuverbindungsfrequenz abhängig von einer Auslesestrategie anzupassen, und/oder wobei der Sender (12) dazu ausgebildet ist, einen Modulationstyp aus der Gruppe, die FM0, Miller-2, Miller-4 und/oder Miller-8 aufweist, abhängig von einer Auslesestrategie auszuwählen, und/oder wobei der Sender (12) dazu ausgebildet ist, eine Pausenlänge zwischen Auslesevorgängen abhängig von einer Auslesestrategie anzupassen.

2. Die RFID-Lesevorrichtung (10) gemäß Anspruch 1, bei der der Sender (12) dazu ausgebildet ist, das Frequenzsignal (12s) so bereitzustellen, um unterschiedliche Auslesemodi zu verwenden, wobei der Prozessor (16) dazu ausgebildet ist, den Sender (12) zu steuern, um die Auslesemodi abhängig von dem bestimmten Bewegungsparameter und/oder der Geschwindigkeit anzupassen.

3. Die RFID-Lesevorrichtung (10) gemäß Anspruch 2, bei der das Frequenzsignal (12s) in Bezug auf seine Rückstreuverbindungsfrequenz angepasst ist; und/oder

wobei der Prozessor (16) dazu ausgebildet ist, die Rückstreuverbindungsfrequenz zu reduzieren, um die Zuverlässigkeit der Bestimmung des Bewegungsparameters und/oder der Geschwindigkeit zu verbessern und die Rückstreuverbindungsfrequenz zu erhöhen, um die Anzahl von Tags, die ausgelesen werden sollen, zu erhöhen.

4. Die RFID-Lesevorrichtung (10) gemäß Anspruch 2 oder 3, bei der sich die unterschiedlichen Auslesemodi in Bezug auf einen Modulationstyp unterscheiden; und/oder

wobei der Sender (12) das Bereitstellen des Frequenzsignals (12s) mehrere Male für das eine der RFID-Tags (12a bis 12d) durchführt und der Empfänger (14) das Antwortsignal (14s) mehrere Male von dem einen der RFID-Tags (12a bis 12d) empfängt, um so einen Zeitrahmen zum Auslesen zu erhöhen; und/oder wobei der Sender (12) dazu ausgebildet ist, das Frequenzsignal (12s) mehrere Male für mehrere RFID-Tags (12a bis 12d) in einer ersten Serie bereitzustellen, und wobei der Empfänger (14) dazu ausgebildet ist, die Antwortsignale von den mehreren RFID-Tags (12a bis 12d) in der ersten Serie zu empfangen, um so die mehreren RFID-Tags (12a bis 12d) auszulesen; und wobei der Sender (12) und der Empfänger (14) dazu ausgebildet sind, das Auslesen der mehreren RFID-Tags (12a bis 12d) in einer zweiten Serie mit einer Pause mit anpassbarer Länge zwischen sich durchzuführen, um so einen Zeitrahmen zum Auslesen zu erhöhen.

5. Die RFID-Lesevorrichtung (10) gemäß einem der vorherigen Ansprüche, bei der der Prozessor (16) dazu ausgebildet ist, eine Mehrzahl der Etiketten einer Gruppe von Tags mit der gleichen Geschwindigkeit zuzuweisen oder eine Mehrzahl der Tags einer Gruppe von Tags mit einer vorbestimmten Geschwindigkeit zuzuweisen; oder

wobei der Prozessor (16) dazu ausgebildet ist, eine Mehrzahl der Tags einer Gruppe von Tags mit der gleichen Geschwindigkeit zuzuweisen oder eine Mehrzahl der Tags einer Gruppe von Tags mit einer vorbestimmten Geschwindigkeit zuzuweisen, wobei die RFID-Lesevorrichtung (10) eine Schnittstelle für einen externen Geschwindigkeitssensor aufweist, der die vorbestimmte Geschwindigkeit liefert.

6. Die RFID-Lesevorrichtung (10) gemäß einem der vorherigen Ansprüche, bei der der Prozessor (16) dazu ausgebildet ist, eine Entfernung des zumindest einen RFID-Tags (12a bis 12d) als Bewegungsparameter zu bestimmen; oder wobei der Prozessor (16) dazu ausgebildet ist, eine Entfernung des zumindest einen RFID-Tags (12a bis 12d) als Bewegungsparameter basierend auf einer bestimmten Steigung einer Doppler-Verschiebungsänderung der Zeit zu bestimmen; und/oder

wobei der Prozessor (16) dazu ausgebildet ist, einen Zeitpunkt eines Passierens des zumindest einen RFID-Tags (12a bis 12d) und/oder eine Position des zumindest einen RFID-Tags (12a bis 12d) als Bewegungsparameter zu bestimmen; oder wobei der Prozessor (16) dazu ausgebildet ist, einen Zeitpunkt eines Passierens des zumindest einen RFID-Tags (12a bis 12d) und/oder eine Position des zumindest einen RFID-Tags (12a bis 12d) als Bewegungsparameter basierend auf einer bestimmten Steigung einer Doppler-Verschiebungsänderung der Zeit zu bestimmen, die eine Entfernung zu dem zumindest einen RFID-Tag (12a bis 12d) beschreibt, und/oder basierend auf einem Zeitpunkt, zu dem die Doppler-Verschiebung erfasst wird; und/oder wobei der Prozessor (16) dazu ausgebildet ist, eine Richtung des zumindest einen RFID-Tags (12a bis 12d) als Bewegungsparameter zu bestimmen; oder wobei der Prozessor (16) dazu ausgebildet ist, eine Richtung des zumindest einen RFID-Tags (12a bis 12d) als Bewegungsparameter basierend auf dem Vergleich bestimmter Charakteristika der Doppler-Verschiebung unter Verwendung zumindest zweier Antennen des RFID-Empfängers (14) zu bestimmen.

7. Die RFID-Lesevorrichtung (10) gemäß einem der vorherigen Ansprüche, bei der der Bewegungsbestimmer (18) dazu ausgebildet ist, ein Antwortsignal (14s) eines RFID-Tags (12a bis 12d) von einem Antwortsignal (14s) eines Objekts aufgrund einer Modulation des Antwortsignals zu unterscheiden; und/oder
wobei der Bewegungsbestimmer (18) dazu ausgebildet ist, ein Antwortsignal (14s) eines RFID-Tags (12a bis 12d) von einem Antwortsignal (14s) eines Objekts aufgrund einer Modulation des Antwortsignals (14s) zu unterscheiden und Interferenzen zu unterdrücken durch Unterscheidung des Antwortsignals (14s) des RFID-Tags (12a bis 12d) von dem Antwortsignal (14s) des Objekts.

8. Die RFID-Lesevorrichtung (10) gemäß einem der vorherigen Ansprüche, bei der der Prozessor (16) dazu ausgebildet ist, Interferenzen, die bewirkt werden durch Antwortsignale, die nicht aus einer Reflexion des Frequenzsignals (12s) an dem einen oder den mehr RFID-Tags (12a bis 12d) resultieren, zu einem vorbestimmten Zeitpunkt der Messung, zu unterdrücken.

9. Die RFID-Lesevorrichtung (10) gemäß einem der vorherigen Ansprüche, bei der der Prozessor (16) dazu ausgebildet ist, eine Schätzgenauigkeit der Bestimmung des Bewegungsparameters und/oder der Geschwindigkeit zum Unterscheiden zwischen einem statischen und einem sich bewegenden RFID-Tag (12a bis 12d) basierend auf einer Information über eine bestimmte Doppler-Verschiebung, eine tolerierbare Fehlerrate, eine Schwelle für eine Geschwindigkeit, oberhalb der ein RFID-Tag (12a bis 12d) und/oder Objekt als sich bewegend klassifiziert wird, eine erwartete Geschwindigkeit der RFID-Tags (12a bis 12d) oder des Objekts und eine Trägerfrequenz zu berechnen.

10. Die RFID-Lesevorrichtung (10) gemäß Anspruch 9, bei der die Berechnung der Schätzgenauigkeit durchgeführt wird basierend auf:

$$\sigma^2 = \frac{2\,v^2 f_c^2}{c^2(erfinv(2\,P_{err}-1))},$$

wobei erfinv(x) eine inverse Fehlerfunktion bezeichnet, $\sigma^2$ die Varianz der Schätzung ist, c die Lichtgeschwindigkeit ist, $P_{err}$ die minimale tolerierbare Fehlerwahrscheinlichkeit der Schätzung ist, v eine erwartete Geschwindigkeit der RFID-Tags (12a bis 12d) oder des Objekts ist und $f_c$ die Trägerfrequenz ist.

11. Die RFID-Lesevorrichtung (10) gemäß einem der vorherigen Ansprüche, bei der der Empfänger (14) eine Mehrzahl von Antennen aufweist, und wobei der Prozessor (16) dazu ausgebildet ist, eine Richtung der sich bewegenden RFID-Tags (12a bis 12d) oder des sich bewegenden Objekts zu bestimmen durch Verwendung des Antwortsignals (14s), das über die Mehrzahl von Antennen empfangen wird; und/oder wobei der Empfänger (14) eine passive Antenne aufweist, die zur Bestimmung der Doppler-Verschiebung verwendet wird.

12. Die RFID-Lesevorrichtung (10) gemäß einem der vorherigen Ansprüche, wobei die Lesevorrichtung dazu ausgebildet ist, einen Ruhemodus zu verwenden, innerhalb dessen der Empfänger (14) das Frequenzsignal (12s) innerhalb eines bestimmten Zeitintervalls bereitstellt, sowie einen Auslesemodus;

wobei der Prozessor (16) dazu ausgebildet ist, den Auslesemodus zu aktivieren, wenn er einen Bewegungsparameter des zumindest einen RFID-Tags (12a bis 12d) oder des Objekts erfasst, basierend auf der Doppler-Verschiebung unter Verwendung des Ruhemodus; und/oder wobei eine ausgewählte Auslesestrategie von der Anzahl von Tags und/oder Auslesevorgängen abhängt.

13. Die RFID-Lesevorrichtung (10) gemäß einem der vorherigen Ansprüche, bei der der Sender (12) dazu ausgebildet ist, eine Rückstreuverbindungsfrequenz anzupassen durch Reduzieren der rückgestreuten Verbindungsfrequenz, um die Zuverlässigkeit der Bestimmung des Bewegungsparameters zu verbessern, sowie Erhöhen der rückgestreuten Verbindungsfrequenz, um die Anzahl von Tags, die ausgelesen werden sollen, zu erhöhen, abhängig von einer Auslesestrategie; und/oder wobei der Sender (12) dazu ausgebildet ist, eine Pausenlänge zwischen Auslesevorgängen abhängig von einer Auslesestrategie anzupassen.

14. System (100), das die RFID-Lesevorrichtung (10) gemäß einem der vorherigen Ansprüche und ein RFID-Tag (12a bis 12d) aufweist; oder

ein System (100), das die RFID-Lesevorrichtung (10) gemäß einem der Ansprüche 5 oder 6 bis 13 bei Rückbezug von Anspruch 5 und ein Fahrzeug oder einen Konvoi, der das Objekt trägt, aufweist, wobei das Fahrzeug oder der Konvoi den externen Geschwindigkeitssensor aufweist, der dazu ausgebildet ist, die vorbestimmte Geschwindigkeit bereitzustellen.

**15.** Ein Verfahren zum Auslesen von RFID-Tags (12a bis 12d), das folgende Schritte aufweist:

Bereitstellen eines Frequenzsignals (12s) für das RFID-Tag (12a bis 12d);
Empfangen eines Antwortsignals (14s), das aus einer Reflexion des Frequenzsignals (12s) an einem der RFID-Tags (12a bis 12d) oder an einem Objekt resultiert, das das eine der RFID-Tags (12a bis 12d) trägt;
Auswerten des Antwortsignals;
**dadurch gekennzeichnet, dass** das Verfahren folgende Schritte aufweist:

Anpassen einer Rückstreuverbindungsfrequenz abhängig von einer Auslesestrategie und/oder Auswählen eines Modulationstyps aus der Gruppe, die FM0, Miller-2, Miller-4 und/oder Miller-8 aufweist, abhängig von einer Auslesestrategie und/oder Anpassen einer Pausenlänge zwischen Auslesevorgängen abhängig von einer Auslesestrategie; und
Bestimmen eines Bewegungsparameters und/oder einer Geschwindigkeit des einen Tags oder des Objekts basierend auf einer Charakteristik einer Doppler-Verschiebung innerhalb des Antwortsignals.

**16.** Das Verfahren gemäß Anspruch 15, wobei das Verfahren ferner den Schritt eines Anpassens des Frequenzsignals (12s) basierend auf dem erfassten Bewegungsparameter und/oder der Geschwindigkeit aufweist.

**17.** Bewegungsdetektor, der folgende Merkmale aufweist:

einen Sender (12), der dazu ausgebildet ist, ein Frequenzsignal (12s) an ein oder mehr Objekte bereitzustellen;
einen Empfänger (14), der dazu ausgebildet ist, ein Antwortsignal (14s) zu empfangen, das aus einer Reflexion des Frequenzsignals (12s) an einem oder mehr Objekten resultiert;
einen Prozessor (16), der dazu ausgebildet ist, das Antwortsignal auszuwerten, wobei der Prozessor (16) einen Bewegungsbestimmer (18) aufweist, der dazu ausgebildet ist, eine Doppler-Verschiebung innerhalb des Antwortsignals (14s) zu erfassen und einen Bewegungsparameter und/oder eine Geschwindigkeit von einem oder mehr Objekten basierend auf einer Charakteristik der Doppler-Verschiebung zu bestimmen;
**dadurch gekennzeichnet, dass** der Sender (12) dazu ausgebildet ist, eine Rückstreuerverbindungsfrequenz abhängig von einer Auslesestrategie anzupassen, und/oder wobei der Sender (12) dazu ausgebildet ist, einen Modulationstyp aus der Gruppe, die FM0, Miller-2, Miller-4 und/oder Miller-8 aufweist, abhängig von einer Auslesestrategie auszuwählen, und/oder wobei der Sender (12) dazu ausgebildet ist, eine Pausenlänge zwischen Auslesevorgängen abhängig von einer Auslesestrategie anzupassen.

**18.** Ein Verfahren zum Erfassen eines Objekts, das folgende Schritte aufweist:

Bereitstellen eines Frequenzsignals (12s) an ein oder mehr Objekte;
Empfangen eines Antwortsignals (14s), das aus einer Reflexion des Frequenzsignals (12s) an einem oder mehr Objekten resultiert;
Auswerten des Antwortsignals;
**dadurch gekennzeichnet, dass** das Verfahren folgende Schritte aufweist:

Anpassen einer Rückstreuverbindungsfrequenz abhängig von einer Auslesestrategie und/oder Auswählen eines Modulationstyps aus der Gruppe, die FM0, Miller-2, Miller-4 und/oder Miller-8 aufweist, und/oder Anpassen einer Pausenlänge zwischen Auslesevorgängen abhängig von einer Auslesestrategie; und
Bestimmen eines Bewegungsparameters und/oder einer Geschwindigkeit des einen oder der mehr Objekte basierend auf einer Charakteristik einer Doppler-Verschiebung innerhalb des Antwortsignals.

**19.** Computerprogramm mit einem Programmcode zum Durchführen des Verfahrens gemäß Anspruch 15, 16 oder 18, wenn dasselbe auf einem Computer läuft.

**Revendications**

1. Lecteur RFID (10), comprenant:

   un émetteur (12) configuré pour fournir un signal de fréquence (12s) pour une ou plusieurs étiquettes RFID (12a à 12d);
   un récepteur (14) configuré pour recevoir un signal de réponse (14s) résultant d'une réflexion du signal de fréquence (12s) sur au moins une des étiquettes RFID (12a à 12d) ou sur un objet portant l'au moins une des étiquettes RFID (12a à 12d);
   un processeur (16) configuré pour évaluer le signal de réponse, où le processeur (16) comprend un déterminateur de mouvement (18) configuré pour détecter un décalage de Doppler dans le signal de réponse (14s) et pour déterminer un paramètre de mouvement et/ou la vitesse de l'au moins une étiquette ou de l'objet sur base d'une caractéristique du décalage de Doppler;
   **caractérisé par le fait que** l'émetteur (12) est configuré pour adapter une fréquence de liaison de rétrodiffusion en fonction d'une stratégie de lecture et/ou dans lequel l'émetteur (12) est configuré pour sélectionner un type de modulation parmi le groupe comprenant FM0, Miller-2, Miller-4 et/ou Miller-8 en fonction d'une stratégie de lecture et/ou dans lequel l'émetteur (12) est configuré pour adapter une longueur de pause entre les lectures en fonction d'une stratégie de lecture.

2. Lecteur RFID (10) selon la revendication 1, dans lequel l'émetteur (12) est configuré pour fournir le signal de fréquence (12s) de manière à utiliser différents modes de lecture, dans lequel le processeur (16) est configuré pour commander l'émetteur (12) pour adapter les modes de lecture en fonction du paramètre de mouvement déterminé et/ou de la vitesse.

3. Lecteur RFID (10) selon la revendication 2, dans lequel le signal de fréquence (12s) est adapté en ce qui concerne sa fréquence de liaison de rétrodiffusion; et/ou
   dans lequel le processeur (16) est configuré pour réduire la fréquence de liaison de rétrodiffusion pour améliorer la fiabilité de la détermination du paramètre de mouvement et/ou de la vitesse et pour augmenter la fréquence de liaison de rétrodiffusion pour augmenter le nombre d'étiquettes à lire.

4. Lecteur RFID (10) selon la revendication 2 ou 3, dans lequel les différents modes de lecture diffèrent en ce qui concerne le type de modulation; et/ou

   dans lequel l'émetteur (12) effectue la fourniture du signal de fréquence (12s) de multiples fois pour l'une des étiquettes RFID (12a à 12d) et le récepteur (14) reçoit le signal de réponse (14s) de multiples fois de l'une des étiquettes des étiquettes RFID (12a à 12d) de manière à augmenter une période pour la lecture; et/ou
   dans lequel l'émetteur (12) est configuré pour fournir le signal de fréquence (12s) de multiples fois pour de multiples étiquettes RFID (12a à 12d) dans une première série et dans lequel le récepteur (14) est configuré pour recevoir les signaux de réponse des multiples étiquettes RFID (12a à 12d) dans la première série de manière à lire les multiples étiquettes RFID (12a à 12d); et dans lequel l'émetteur (12) et le récepteur (14) sont configurés pour effectuer la lecture des multiples étiquettes RFID (12a à 12d) dans une deuxième série avec une pause d'une longueur adaptable entre elles de manière à augmenter une période pour la lecture.

5. Lecteur RFID (10) selon l'une des revendications précédentes, dans lequel le processeur (16) est configuré pour attribuer une pluralité des étiquettes à un groupe d'étiquettes présentant la même vitesse ou pour attribuer une pluralité des étiquettes à un groupe d'étiquettes présentant une vitesse prédéterminée; ou
   dans lequel le processeur (16) est configuré pour attribuer une pluralité des étiquettes à un groupe d'étiquettes présentant la même vitesse ou pour attribuer une pluralité des étiquettes à un groupe d'étiquettes présentant une vitesse prédéterminée, dans lequel le lecteur RFID (10) comprend une interface pour un capteur de vitesse externe délivrant la vitesse prédéterminée.

6. Lecteur RFID (10) selon l'une des revendications précédentes, dans lequel le processeur (16) est configuré pour déterminer une distance de l'au moins une étiquette RFID (12a à 12d) comme paramètre de mouvement; ou dans lequel le processeur (16) est configuré pour déterminer une distance de l'au moins une étiquette RFID (12a à 12d) comme paramètre de mouvement sur base d'une pente déterminée d'un changement de décalage de Doppler du temps; et/ou

   dans lequel le processeur (16) est configuré pour déterminer un moment de passage de l'au moins une étiquette RFID (12a à 12d) et/ou une position de l'au moins une étiquette RFID (12a à 12d) comme paramètre de mouvement; ou dans lequel le processeur (16) est configuré pour déterminer un moment d'un passage de l'au moins une étiquette RFID (12a à 12d) et/ou une position de l'au moins une étiquette RFID (12a à 12d) comme paramètre de mouvement sur base d'une pente déterminée d'un changement de décalage de Doppler du temps décrivant une distance par rapport à l'au moins une étiquette RFID (12a à 12d) et/ou sur base d'un moment auquel est détecté le décalage de Doppler; et/ou

dans lequel le processeur (16) est configuré pour déterminer une direction de l'au moins une étiquette RFID (12a à 12d) comme paramètre de mouvement; ou dans lequel le processeur (16) est configuré pour déterminer une direction de l'au moins une étiquette RFID (12a à 12d) comme paramètre de mouvement sur base de la comparaison des caractéristiques déterminées du décalage de Doppler à l'aide d'au moins deux antennes du récepteur RFID (14).

7. Lecteur RFID (10) selon l'une des revendications précédentes, dans lequel le déterminateur de mouvement (18) est configuré pour différencier un signal de réponse (14s) d'une étiquette RFID (12a à 12d) d'un signal de réponse (14s) d'un objet dû à une modulation du signal de réponse; et/ou

dans lequel le déterminateur de mouvement (18) est configuré pour différencier un signal de réponse (14s) d'une étiquette RFID (12a à 12d) d'un signal de réponse (14s) d'un objet dû à une modulation du signal de réponse (14s) et pour supprimer les interférences en différenciant le signal de réponse (14s) de l'étiquette RFID (12a à 12d) du signal de réponse (14s) de l'objet.

8. Lecteur RFID (10) selon l'une des revendications précédentes, dans lequel le processeur (16) est configuré pour supprimer les interférences causées par les signaux de réponse ne résultant pas d'une réflexion du signal de fréquence (12s) sur les une ou plusieurs étiquettes RFID (12a à 12d) à un moment prédéterminé de la mesure.

9. Lecteur RFID (10) selon l'une des revendications précédentes, dans lequel le processeur (16) est configuré pour calculer une précision d'estimation de la détermination du paramètre de mouvement et/ou de la vitesse pour faire une distinction entre une étiquette RFID statique et se déplaçant (12a à 12d) sur base d'une information sur un décalage de Doppler déterminé, d'un taux d'erreur tolérable, d'un seuil pour une vitesse au-dessus duquel une étiquette RFID (12a à 12d) et/ou un objet est classifié comme se déplaçant, d'une vitesse attendue des étiquettes RFID (12a à 12d) ou de l'objet et d'une fréquence porteuse.

10. Lecteur RFID (10) selon la revendication 9, dans lequel le calcul de la précision d'estimation est effectué sur base de

$$\sigma^2 = \frac{2v^2 f_c^2}{c^2 \big(erfinv(2P_{err} - 1)\big)},$$

où erfinv(x) désigne la fonction d'erreur inverse, $\sigma^2$ est la variance de l'estimation, c est la vitesse de la lumière, $P_{err}$ est la probabilité d'erreur tolérable minimale de l'estimation, v est une vitesse attendue des étiquettes RFID (12a à 12d) ou de l'objet et $f_c$ est la fréquence porteuse.

11. Lecteur RFID (10) selon l'une des revendications précédentes, dans lequel le récepteur (14) comprend une pluralité d'antennes et dans lequel le processeur (16) est configuré pour déterminer une direction des étiquettes RFID se déplaçant (12a à 12d) ou de l'objet se déplaçant à l'aide du signal de réponse (14s) reçu à travers la pluralité d'antennes; et/ou

dans lequel le récepteur (14) comprend une antenne passive utilisée pour déterminer le décalage de Doppler.

12. Lecteur RFID (10) selon l'une des revendications précédentes, dans lequel le lecteur est configuré pour utiliser un mode d'hibernation dans lequel le récepteur (14) fournit le signal de fréquence (12s) dans un certain intervalle de temps, et un mode de lecture;

dans lequel le processeur (16) est configuré pour activer le mode de lecture lorsqu'il détecte un paramètre de mouvement de l'au moins une étiquette RFID (12a à 12d) ou de l'objet sur base du décalage de Doppler à l'aide du mode d'hibernation; et/ou

dans lequel la stratégie de lecture sélectionnée est fonction du nombre d'étiquettes et/ou de lectures.

13. Lecteur RFID (10) selon l'une des revendications précédentes, dans lequel l'émetteur (12) est configuré pour adapter une fréquence de liaison de rétrodiffusion en réduisant la fréquence de liaison de rétrodiffusion pour améliorer la fiabilité de la détermination du paramètre de mouvement et en augmentant la fréquence de liaison de rétrodiffusion pour augmenter le nombre d'étiquettes à lire en fonction d'une stratégie de lecture; et/ou dans lequel l'émetteur (12) est configuré pour adapter une longueur de pause entre les lectures en fonction d'une stratégie de lecture.

14. Système (100) comprenant le lecteur RFID (10) selon l'une des revendications précédentes et une étiquette RFID (12a à 12d); ou
un système (100) comprenant le lecteur RFID (10) selon l'une des revendications 5 ou 6 à 13 lorsqu'elles dépendent de la revendication 5 et un véhicule ou convoi transportant l'objet, dans lequel le véhicule ou le convoi comprend le capteur de vitesse externe configuré pour fournir la vitesse prédéterminée.

15. Procédé de lecture d'étiquettes RFID (12a à 12d), comprenant le fait de:

   fournir un signal de fréquence (12s) pour l'étiquette RFID (12a à 12d);
   recevoir un signal de réponse (14s) résultant d'une réflexion du signal de fréquence (12s) sur une des étiquettes RFID (12a à 12d) ou sur un objet portant l'une des étiquettes RFID (12a à 12d);
   évaluer le signal de réponse;
   **caractérisé en ce que** le procédé comprend le fait de:

      adapter une fréquence de liaison de rétrodiffusion en fonction d'une stratégie de lecture et/ou sélectionner un type de modulation dans le groupe comprenant FM0, Miller-2, Miller-4 et/ou Miller-8 en fonction d'une stratégie de lecture et/ou adapter une longueur de pause entre les lectures en fonction d'une stratégie de lecture; et
      déterminer un paramètre de mouvement et/ou une vitesse de l'une étiquette ou de l'objet sur base d'une caractéristique d'un décalage de Doppler dans le signal de réponse.

16. Procédé selon la revendication 15, dans lequel le procédé comprend par ailleurs l'étape consistant à adapter le signal de fréquence (12s) sur base du paramètre de mouvement détecté et/ou de la vitesse.

17. Détecteur de mouvement, comprenant:

   un émetteur (12) configuré pour fournir un signal de fréquence (12s) à un ou plusieurs objets;
   un récepteur (14) configuré pour recevoir un signal de réponse (14s) résultant d'une réflexion du signal de fréquence (12s) sur un ou plusieurs objets;
   un processeur (16) configuré pour évaluer le signal de réponse, dans lequel le processeur (16) comprend un déterminateur de mouvement (18) configuré pour détecter un décalage de Doppler dans le signal de réponse (14s) et pour déterminer un paramètre de mouvement et/ou une vitesse d'un ou plusieurs objets sur base d'une caractéristique du décalage de Doppler;
   **caractérisé par le fait que** l'émetteur (12) est configuré pour adapter une fréquence de liaison de rétrodiffusion en fonction d'une stratégie de lecture et/ou dans lequel l'émetteur (12) est configuré pour sélectionner un type de modulation parmi le groupe comprenant FM0, Miller-2, Miller-4 et/ou Miller-8 en fonction d'une stratégie de lecture et/ou dans lequel l'émetteur (12) est configuré pour adapter une longueur de pause entre les lectures en fonction d'une stratégie de lecture.

18. Procédé de détection d'un objet, comprenant le fait de:

   fournir un signal de fréquence (12s) à un ou plusieurs objets;
   recevoir un signal de réponse (14s) résultant d'une réflexion du signal de fréquence (12s) sur les un ou plusieurs objets;
   évaluer le signal de réponse;
   **caractérisé en ce que** le procédé comprend le fait de:

      adapter une fréquence de liaison de rétrodiffusion en fonction d'une stratégie de lecture et/ou sélectionner un type de modulation parmi le groupe comprenant FM0, Miller-2, Miller-4 et/ou Miller-8 et/ou adapter une longueur de pause entre les lectures en fonction d'un stratégie de lecture; et
      déterminer un paramètre de mouvement et/ou une vitesse des un ou plusieurs objets sur base d'une caractéristique d'un décalage de Doppler dans le signal de réponse.

**19.** Programme d'ordinateur présentant un code de programme pour réaliser, lorsqu'il est exécuté sur un ordinateur, le procédé selon la revendication 15, 16 ou 18.

Fig. 1a

EP 3 841 514 B1

Fig. 1b

<u>180</u>

```
┌─────────────────────────────────────────┐
│              Speed sensor                │───── 182
└─────────────────────────────────────────┘
                    │ V
                    ▼
┌─────────────────────────────────────────┐
│  Determination of required estimation    │
│               precision                  │───── 184
│      $V, P_{err}, f_c \Rightarrow \sigma^2$ │
└─────────────────────────────────────────┘
                    │ $\sigma^2$
                    ▼
┌─────────────────────────────────────────┐
│            Reading algorithm             │
│  $\sigma^2, \dfrac{P_S}{N_0} \Rightarrow$ I/Q data of tag replies + EPC code │───── 186
└─────────────────────────────────────────┘
                    │ I/Q data of tag replies
                    ▼
┌─────────────────────────────────────────┐
│   Optimal frequency estimation algorithm │
│  I/Q data of tag replies $\Rightarrow V_{tag}$ │───── 188
└─────────────────────────────────────────┘
                    │ $V_{tag}$
                    ▼
┌─────────────────────────────────────────┐
│                Decision                  │
│             $V_{tag}, V$                 │───── 190
└─────────────────────────────────────────┘
```

## Fig. 1c

Fig. 2

EP 3 841 514 B1

Fig. 3

Fig. 4

| full inventory round | | read-out tag 1 | read-out tag 2 | • • • | read-out tag 1 | read-out tag 2 | • • • |

$\Delta t$

$\Delta t$

Fig. 5

Fig. 6

EP 3 841 514 B1

Fig. 7

EP 3 841 514 B1

Fig. 8

EP 3 841 514 B1

Fig. 9

Fig. 10

antenna 2

antenna 1

tag

Fig. 11

Fig. 12

EP 3 841 514 B1

EP 3 841 514 B1

Fig. 13

Fig. 14

Fig. 15

EP 3 841 514 B1

Fig. 16

EP 3 841 514 B1

Fig. 17a

Fig. 17b

Fig. 17c

Fig. 17d

1) Geometry

Fig. 18a

2) Doppler shift curves

Fig. 18b

3) Sum of all Doppler shift curves

Fig. 18c

4) Directions

Fig. 18d

EP 3 841 514 B1

73

1) Geometry

Fig. 19a

2) Doppler shift curves

Fig. 19b

3) Sum of all Doppler shift curves

Fig. 19c

4) Directions

Fig. 19d

**Fig. 20a**

**Fig. 20b**

**Fig. 20c**

**Fig. 20d**

$$d \qquad \text{reader antenna} \qquad \overline{v}_{tag}$$

tag

conveyor belt

Fig. 21

Fig. 22

Fig. 23

Fig. 24

Fig. 25

reader antenna

0.5m

10m

26b

Fig. 26

Fig. 27

Fig. 28

EP 3 841 514 B1

Fig. 29

Fig. 30

EP 3 841 514 B1

Fig. 31

Fig. 32

Fig. 33

Fig. 34

Fig. 35

EP 3 841 514 B1

Fig. 36

Fig. 37

38g    38b

reader antenna

Fig. 38

Fig. 39

EP 3 841 514 B1

$$T_1 \qquad\qquad T_2$$

| tag reply 1 | tag reply 2 |

$$T_{e1}$$

## Fig. 40

$$T_1$$

$$T_2$$

$$T_3$$

| tag reply 1 | | tag reply 2 | | tag reply 3 |

$$T_{e1}$$

$$T_{e2}$$

Fig. 41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008030357 A
- US 2009303004 A1
- EP 0853245 A1
- US 2009303005 A

- US 9007178 B, Nikitin, P.V. and Spiess, G.N. and Leland, H.M. and Hingst, L.C. and Sherman, J.H.

### Non-patent literature cited in the description

- **I.N. BRONSTEIN ; K.A. SEMENDJAJEW ; G. MUSOL ; H. MÜHLIG.** Taschenbuch der Mathematik. 2008
- **A. BUFFI ; P. NEPA ; F. LOMBARDINI.** *A Phase-Based Technique for Localization of UHF-RFID Tags Moving on a Conveyor Belt: Performance Analysis and Test-Case Measurements,* January 2015, vol. 15, 387-396

- **A. N. D'ANDREA ; U. MENGALI ; R. REGGIANNINI.** *The modified Cramer-Rao bound and its application to synchronization problems,* February 1994, vol. 42, 1391-1399
- **THEODORE S RAPPAPORT.** Wireless Communications Principles and Practice. 2001
- **H.-M. TRÖGER ; J. ROBERT ; L. PATINO-STUDENCKI ; A. HEUBERGER.** *A Comparison of Opportunistic Signals for Wireless Syntonization using the Modified Cramér-Rao Lower Bound,* 2017